# EUROPEAN PATENT APPLICATION

(11) **EP 4 149 136 A1**
(43) Date of publication of application: **15.03.2023**
(21) Application number: 20938334.8
(22) Date of filing: 29.05.2020
(51) Int. Cl.: H04W 12/04, H04W 12/06

(54) **METHOD FOR ACQUIRING KEY AND RELATED APPARATUS**

(71) Applicant: Huawei Technologies Co., Ltd., Longgang District, Shenzhen, Guangdong 518129 (CN)
(72) Inventor: WANG, Yong, Shenzhen, Guangdong 518129 (CN); CHEN, Jing, Shenzhen, Guangdong 518129 (CN)
(74) Representative: Pfenning, Meinig & Partner mbB
(86) International application number: PCT/CN2020/093534
(87) International publication number: WO 2021/237746

(57) **Abstract**

Embodiments of this application provide a security authentication method and a related apparatus, applied to the field of short-range communication, and in particular, to cockpit domain communication. The method includes: A first node receives a first association request message from a second node, where the first association request message includes a first fresh parameter; and the first node obtains a first pre-shared key PSK, where the first PSK corresponds to an identity of the second node, the first PSK is a PSK generated based on a second fresh parameter from the second node and a third fresh parameter from the first node, and the first PSK is used to verify the identity of the second node. According to the embodiments of this application, communication security can be improved.

## Description

### TECHNICAL FIELD

The present invention relates to the field of communications technologies, and in particular, to the field of short-range communications technologies, such as cockpit domain communication. Specifically, the present invention relates to a key obtaining method and a related apparatus.

### BACKGROUND

With the rapid development of informatization, mobile terminals, regardless of mobile phones, tablets, or other portable intelligent terminals, are important personal intelligent tools that are indispensable. While enjoying the convenience brought by informatization, people also face threats of security vulnerabilities and privacy leakage. An intelligent vehicle is used as an example. As vehicle communication is widely applied, wireless communication also brings a series of security risks to the vehicle. For example, in an existing distance communications technology, a hacker may intrude an in-vehicle information system to obtain vehicle information or even remotely operate the vehicle. This poses a very big threat to user privacy and vehicle security. Millions of vehicles worldwide are affected.

Therefore, to ensure communication security, before two nodes communicate with each other, a pairing mode is usually used for association. When two existing nodes are associated, pairing is usually performed by entering a password, or an open mode is directly used. For example, when a Bluetooth headset is paired, connection can be implemented by directly tapping a name of the other party. For another example, open Wi-Fi in a public place usually does not require a password. Even if a password needs to be entered, because the Wi-Fi password is usually prone to leak, communication security is usually difficult to be ensured. Consequently, a data leakage is easily caused, and a threat is posed to user privacy and security. For a communications system, especially an in-vehicle communications system, this case is prone to cause an untrusted connection to a vehicle. As a result, the vehicle communicates with an untrusted attacker. This endangers personal safety of a driver and a passenger.

Therefore, how to improve security of node communication is a technical problem being studied by a person skilled in the art.

### SUMMARY

Embodiments of this application disclose a key obtaining method and a related apparatus, to improve communication security.

According to a first aspect, an embodiment of this application discloses a key obtaining method. The method includes:
a first node receives a first association request message from a second node, where the first association request message includes a first fresh parameter; and
the first node obtains a first pre-shared key PSK, where the first PSK corresponds to an identity of the second node, the first PSK is a PSK generated based on a second fresh parameter from the second node and a third fresh parameter from the first node, and the first PSK is used to verify the identity of the second node.

In the foregoing method, a PSK is a secret value shared by the first node and the second node. The first node generates the first PSK by using the second fresh parameter from the second node and the third fresh parameter from the first node, and uses the first PSK to correspond to the identity of the second node, to verify the identity of the second node (for example, the second node generates identity authentication information based on a PSK, and the first node may verify the identity authentication information of the second node by using the first PSK; for another example, the second node performs encryption or integrity protection on message content by using a PSK (or a key derived based on the PSK), and the first node may obtain the message content from the second node by using the first PSK). In this way, if an attacker wants to counterfeit the identity of the second node to associate with the first node, because the second fresh parameter and the third fresh parameter that are used to generate the first PSK may be obtained before the first association request message, for example, may be obtained when the first node is associated with the second node for the first time, and previously obtained data is usually difficult to crack, the attacker cannot forge a PSK, and therefore identity authentication performed by the first node on the attacker cannot succeed. This prevents the first node from being connected to an untrusted node, and improves communication security of the first node.

In a possible implementation of the first aspect, the method further includes:
the first node sends a first authentication request message to the second node, where the first authentication request message includes first identity authentication information and a fourth fresh parameter, and the first identity authentication information is generated based on the first PSK and the first fresh parameter.

In the foregoing method, because a PSK is a secret value shared by the first node and the second node, the first PSK in the first node usually has a same value as a second PSK in the second node. The first node generates the first identity authentication information based on the first PSK and the first fresh parameter, so that the second node can verify an identity of the first node based on the second PSK. If verification based on the second PSK stored in the second node cannot succeed, it indicates that the identity of the first node is untrusted. Therefore, association between the second node and an untrusted node can be avoided, and communication security of the second node can be improved.

In another possible implementation of the first aspect, the method further includes:
the first node receives a first authentication response message from the second node, where the first authentication response message includes second identity authentication information; and
the first node sends a first association response message to the second node if verification performed by the first node on the second identity authentication information based on the first PSK and the fourth fresh parameter succeeds.

In the foregoing method, before the first node communicates with the second node, the first node and the second node first determine identities of both parties by using identity authentication information. Communication is allowed only after identity authentication succeeds. This avoids access of an untrusted node, and improves node communication security.

In another possible implementation of the first aspect, that the first node obtains a first pre-shared key PSK includes:
obtaining the first PSK based on a correspondence between the first PSK and the identity of the second node.

In the foregoing method, the correspondence between the first PSK and the identity of the second node exists in the first node. This may indicate that the second node has been associated with the first node before or the first PSK corresponding to the identity of the second node is preconfigured in the first node. Therefore, the first node may obtain the first PSK based on the correspondence.

In another possible implementation of the first aspect, a first correspondence set exists in the first node, and that the first node obtains a first pre-shared key PSK includes:
obtaining the first PSK based on a correspondence between the first PSK and the identity of the second node by using the first correspondence set.

It can be learned that the first node may store the correspondence between the first PSK and the identity of the second node in a form of a correspondence set.

In another possible implementation of the first aspect, that the first node obtains a first pre-shared key PSK includes:
the first node generates the first PSK based on the first fresh parameter and the fourth fresh parameter, where the first fresh parameter is the second fresh parameter, and the fourth fresh parameter is the third fresh parameter.

In the foregoing method, the first PSK is generated based on the first fresh parameter in the first association request message and the fourth fresh parameter from the first node. Usually, when the first node is associated with the second node for the first time or when the first node deletes a correspondence, a PSK corresponding to the identity of the second node does not exist in the first node. Therefore, the first node may generate the new first PSK based on the first fresh parameter and the fourth fresh parameter, to verify the identity of the second node.

In another possible implementation of the first aspect, before the first node generates the first PSK based on the first fresh parameter and the fourth fresh parameter, the method further includes:
the first node obtains first acknowledgement indication information, where the first acknowledgement indication information indicates that association with the second node is allowed.

It can be learned that when the new first PSK is generated, an acknowledgement of a user is required. In this way, when an attacker uses an identity of the attacker to connect to the first node, because a PSK corresponding to the identity of the attacker does not exist in the first node, the user may verify an identity of a new node. The first PSK is generated only after the first acknowledgement indication information is obtained. Therefore, association between the first node and an untrusted node is avoided, and communication security of the first node is ensured.

In another possible implementation of the first aspect, that the first node generates the first PSK based on the first fresh parameter and the fourth fresh parameter includes:
the first node generates the first PSK based on the first fresh parameter, the fourth fresh parameter, and a first password, where the first password is a password for accessing the first node.

In an optional design, the access password is a password that needs to be entered when another node requests to access the first node. For example, a password of Wi-Fi needs to be entered when the Wi-Fi is to be connected. It can be learned that, when the first password is the password for accessing the first node, the second node is connected to the first node by using the entered first password. Therefore, the first password is used to participate in generating the first PSK, so that an attacker who does not obtain the first password cannot crack the first PSK. In this way, the first node can be prevented from being associated with the attacker who does not obtain the first password.

In another possible implementation of the first aspect, the first association request message further includes a first key agreement algorithm parameter, and that the first node generates the first PSK based on the first fresh parameter and the fourth fresh parameter includes:
the first node generates the first PSK based on the first fresh parameter, the fourth fresh parameter, a first password, and the first key agreement algorithm parameter.

The first key agreement algorithm parameter is an algorithm parameter generated in a key agreement process, and key agreement is a process in which communication parties exchange some parameters to obtain a secret value through agreement. An algorithm used for key agreement is referred to as a key agreement algorithm, and may also be referred to as a key exchange algorithm. For example, the Diffie-Hellman DH algorithm is used as an example. Two nodes use a same prime number p whose value is relatively large and a same random number g (to be specific, the prime number p and the random number g are public keys between the first node and the second node), and respectively generate a random number a and a random number b (to be specific, the random number a is a private key of the second node, and the random number b is a private key of the first node). The prime number p, the random number g, the random number a, and the random number b may all be considered as parameters of the key agreement algorithm. The second node sends, to the first node, a value A generated through g^{a} mod (mod) P (that is, A = g^{a} mod p, where A is the first key agreement algorithm parameter), and then the first node performs a b^{th} power operation on the received value A to generate a secret value K. The first node sends, to the second node, a value B generated through g^{b} mod P (that is, B = g^{b} mod p, where B is a second key agreement algorithm parameter), and the second node performs an a^{th} power operation on the received value B to generate a secret value K. Because K = A^{b} mod p = (g^{a} mod p)^{b} mod p = g^{ab} mod p = (g^{b} mod p)^{a} mod p = B^{a} mod p, the secret values K generated by the first node and the second node are the same. In a key agreement algorithm process, an attacker cannot deduce a generated secret value by using only algorithm parameters transmitted by the first node and the second node. For example, in the DH algorithm, because values of the prime number p, the random number g, the random number a, and the random number b that are selected in an actual algorithm are very large, it is difficult to derive the secret value K based on the prime number p, the random number g, the value A, and the value B that are transmitted over a network. Therefore, the secret value obtained by using the DH algorithm is secure.

In this embodiment of this application, the second node uses the first association request message to carry the first key agreement algorithm parameter, and the first key agreement algorithm parameter is determined based on a first key agreement algorithm. The first node may determine the first PSK based on the first key agreement algorithm, the first key agreement algorithm parameter, the first fresh parameter, the fourth fresh parameter, and the first password. In this way, even if the attacker subsequently counterfeits identity information of the second node and obtains the first fresh parameter and the fourth fresh parameter that are used to generate the first PSK, the attacker cannot crack the first PSK. Therefore, the attacker cannot communicate with the first node. This improves communication security of the first node.

In another possible implementation of the first aspect, the first association request message further includes a first key agreement algorithm parameter, and that the first node generates the first PSK based on the first fresh parameter and the fourth fresh parameter includes:
generating the first PSK based on the first fresh parameter, the fourth fresh parameter, a first password, and an intermediate key, where the first password is an access password, and the intermediate key is generated based on the first fresh parameter, the fourth fresh parameter, and the first key agreement algorithm parameter.

In another possible implementation of the first aspect, the first association request message further includes a first key agreement algorithm parameter, the first key agreement algorithm parameter is determined based on a first key agreement algorithm, and that the first node generates the first PSK based on the first fresh parameter and the fourth fresh parameter includes:
the first node determines a third key agreement algorithm parameter;
the first node determines a first intermediate key based on the first key agreement algorithm, the first key agreement algorithm parameter, and the third key agreement algorithm parameter; and
the first node generates the first PSK based on the first fresh parameter, the fourth fresh parameter, a first password, and the first intermediate key.

It can be learned that after receiving the first key agreement algorithm parameter from the second node, the first node determines the third key agreement algorithm parameter (that is, a private key of the first node). The first node determines the first intermediate key based on the first key agreement algorithm, the first key agreement algorithm parameter, and the third key agreement algorithm parameter, and then generates the first PSK based on the first fresh parameter, the fourth fresh parameter, the first password, and the first intermediate key.

In another possible implementation of the first aspect, the first association request message further includes a first key agreement algorithm parameter, the first key agreement algorithm parameter is determined based on a first key agreement algorithm, and the generating the first PSK based on the first fresh parameter and the fourth fresh parameter includes:
obtaining a third key agreement algorithm parameter;
determining a first intermediate key based on the first key agreement algorithm, the first key agreement algorithm parameter, and the third key agreement algorithm parameter;
determining a second intermediate key based on the first fresh parameter, the fourth fresh parameter, and the first intermediate key; and
generating the first PSK based on the first fresh parameter, the fourth fresh parameter, a first password, and the second intermediate key.

In another possible implementation of the first aspect, the method further includes:
the first node stores a correspondence between the identity of the second node and the first PSK.

It can be learned that after generating the first PSK, the first node stores the correspondence between the identity of the second node and the first PSK. When receiving an association request from the second node again subsequently, the first node may obtain the first PSK based on the correspondence without regenerating the first PSK.

In another possible implementation of the first aspect, the method further includes:
the first node deletes the correspondence between the identity of the second node and the first PSK if the first password is updated.

In another possible implementation of the first aspect, the first authentication request message further includes update indication information, and the update indication information is used to indicate a PSK update.

It can be learned that after generating the first PSK based on the first fresh parameter and the fourth fresh parameter, the first node may remind the second node to update a PSK, to prevent the second node from using a previous old PSK to verify identity authentication information, so as to avoid a verification failure and avoid affecting user experience.

In another possible implementation of the first aspect, the method further includes:
the first node generates a third PSK based on the first fresh parameter and the fourth fresh parameter if verification performed by the first node on the second identity authentication information based on the first PSK and the fourth fresh parameter fails; and
the first node sends a second authentication request message to the second node, where the second authentication request message includes third identity authentication information, and the third identity authentication information is generated based on the third PSK and the first fresh parameter.

It can be learned that, when the first node obtains the first PSK based on the correspondence, if verification performed by the first node on the second identity authentication information fails, a possible reason may be that the second node uses a newly generated PSK to generate the second identity authentication information. Therefore, the first node also generates a new PSK (namely, the third PSK) based on the first fresh parameter and the fourth fresh parameter, and re-initiates authentication based on the new PSK. This can improve system stability.

In another possible implementation of the first aspect, that the first node generates a third PSK based on the first fresh parameter and the fourth fresh parameter if verification performed by the first node on the second identity authentication information based on the first PSK and the fourth fresh parameter fails includes:
the first node obtains second acknowledgement indication information if the verification performed by the first node on the second identity authentication information based on the first PSK and the fourth fresh parameter fails, where the second acknowledgement indication information indicates that generation of the third PSK is allowed; and
the first node generates the third PSK based on the first fresh parameter and the fourth fresh parameter.

In another possible implementation of the first aspect, the method further includes:
the first node receives a second authentication response message from the second node, where the second authentication response message includes fourth identity authentication information; and
the first node sends a second association response message to the second node if verification performed by the first node on the fourth identity authentication information based on the third PSK and the fourth fresh parameter succeeds.

It can be learned that after re-initiating authentication based on the new PSK (namely, the third PSK), the first node receives the fourth identity authentication information from the second node. If the verification performed on the fourth identity authentication information based on the third PSK and the fourth fresh parameter succeeds, it indicates that the identity of the second node is trusted. Therefore, communication with the second node can be allowed.

According to a second aspect, an embodiment of this application discloses a key obtaining method. The method includes:
a second node sends a first association request message to a first node, where the first association request message includes a first fresh parameter;
the second node receives a first authentication request message from the first node, where the first authentication request message includes a fourth fresh parameter; and
the second node obtains a second PSK, where the second PSK corresponds to an identity of the first node, the second PSK is a PSK generated based on a second fresh parameter from the second node and a third fresh parameter from the first node, and the second PSK is used to verify the identity of the first node.

In the foregoing method, a PSK is a secret value shared by the second node and the first node. The second node generates the second PSK by using the second fresh parameter from the second node and the third fresh parameter from the first node, and uses the second PSK to correspond to the identity of the first node, to verify the identity of the first node (for example, the first node generates identity authentication information based on a PSK, and the second node may verify the identity authentication information of the first node by using the second PSK; for another example, the first node performs encryption or integrity protection on message content by using a PSK (or a key derived based on the PSK), and the second node may obtain the message content from the second node by using the first PSK). In this way, if an attacker wants to counterfeit the identity of the first node to associate with the second node, because the second fresh parameter and the third fresh parameter that are used to generate the second PSK may be obtained before the first association request message, for example, may be obtained when the second node is associated with the first node for the first time, and previously obtained data is usually difficult to crack, the attacker cannot forge a PSK, and therefore identity authentication performed by the second node on the attacker cannot succeed. This prevents the second node from being associated with an untrusted node, and improves communication security of the second node.

In a possible implementation of the second aspect, the method further includes:
the second node sends a first authentication response message to the first node if verification performed by the second node on the first identity authentication information based on the second PSK and the first fresh parameter succeeds, where the first authentication response message includes second identity authentication information, and the second identity authentication information is generated based on the second PSK and the fourth fresh parameter; and
the second node receives a first association response message from the first node.

In the foregoing method, because a PSK is a secret value shared by the second node and the first node, the second PSK in the second node usually has a same value as a first PSK in the first node. The first identity authentication information is generated by the first node based on the first PSK and the first fresh parameter. Therefore, the second node may verify the identity authentication information of the first node based on the second PSK and the first fresh parameter. If verification based on the second PSK stored in the second node cannot succeed, it indicates that the identity of the first node is untrusted. Therefore, association between the second node and an untrusted node can be avoided, and communication security of the second node can be improved. Correspondingly, the second node generates the second identity authentication information based on the second PSK and the fourth fresh parameter, and the second identity authentication information is used by the first node to verify an identity of the second node. Communication with a peer node is allowed only after identity authentication of both parties succeeds. This improves node communication security.

In another possible implementation of the second aspect, that the second node obtains a second pre-shared key PSK includes:
obtaining the second PSK based on a correspondence between the second PSK and the identity of the first node.

In the foregoing method, the correspondence between the second PSK and the identity of the first node exists in the second node. This may indicate that the second node has been associated with the first node before or the second PSK corresponding to the identity of the first node is preconfigured in the second node. Therefore, the second node may obtain the second PSK based on the correspondence.

In another possible implementation of the second aspect, a second correspondence set exists in the second node, and that the second node obtains a second pre-shared key PSK includes:
obtaining the second PSK based on a correspondence between the second PSK and the identity of the first node by using the second correspondence set.

It can be learned that the second node may store the correspondence between the second PSK and the identity of the first node in a form of a correspondence set.

In another possible implementation of the second aspect, that the second node obtains a second PSK includes:
the second node generates the second PSK based on the first fresh parameter and the fourth fresh parameter, where the first fresh parameter is the second fresh parameter, and the fourth fresh parameter is the third fresh parameter.

In the foregoing method, the second PSK is generated based on the first fresh parameter in the first association request message and the fourth fresh parameter in the first authentication request message. Usually, when the second node is associated with the first node for the first time or when the second node deletes a correspondence, the second PSK corresponding to the identity of the first node does not exist in the second node. Therefore, the second node may generate the new second PSK based on the first fresh parameter and the fourth fresh parameter, to verify the identity of the first node.

In another possible implementation of the second aspect, before the second node generates the second PSK based on the first fresh parameter and the fourth fresh parameter, the method further includes:
the second node obtains third acknowledgement indication information, where the third acknowledgement indication information indicates that generation of the second PSK is allowed.

It can be learned that when the new second PSK is generated, an acknowledgement of a user is required. In this way, when an attacker uses an identity of the attacker to connect to the second node, because a PSK corresponding to the identity of the attacker does not exist in the second node, the user may verify an identity of a new node. The second PSK is generated only after the third acknowledgement indication information is obtained. Therefore, association between the second node and an untrusted node is avoided, and communication security of the second node is ensured.

In another possible implementation of the second aspect, that the second node generates the second PSK based on the first fresh parameter and the fourth fresh parameter includes:
the second node generates the second PSK based on the first fresh parameter, the fourth fresh parameter, and a first password, where the first password is a password for accessing the first node.

In an optional design, the access password is a password that needs to be entered when another node requests to access the first node. For example, a password of Wi-Fi needs to be entered when the Wi-Fi is to be connected. It can be learned that, when the first password is the password for accessing the first node, the second node is connected to the first node by using the entered first password. Therefore, the first password is used to participate in generating the second PSK, so that an attacker who does not obtain the first password cannot crack the second PSK. In this way, the second node can be prevented from being associated with the attacker who does not obtain the first password.

In another possible implementation of the second aspect, the first authentication request message further includes a second key agreement algorithm parameter, and that the second node generates the second PSK based on the first fresh parameter and the fourth fresh parameter includes:
the second node generates the second PSK based on the first fresh parameter, the fourth fresh parameter, a first password, and the second key agreement algorithm parameter.

The second key agreement algorithm parameter is an algorithm parameter generated in a key agreement process, and key agreement is a process in which communication parties exchange some parameters to obtain a secret value through agreement. An algorithm used for key agreement is referred to as a key agreement algorithm, and may also be referred to as a key exchange algorithm. For example, the Diffie-Hellman DH algorithm is used as an example. Two nodes use a same prime number p whose value is relatively large and a same random number g (to be specific, the prime number p and the random number g are public keys between the first node and the second node), and respectively generate a random number a and a random number b (to be specific, the random number a is a private key of the second node, and the random number b is a private key of the first node). The second node sends, to the first node, a value A generated through g^{a} mod (mod) P (that is, A = g^{a} mod p, where A is a first key agreement algorithm parameter), and then the first node performs a b^{th} power operation on the received value A to generate a secret value K. The first node sends, to the second node, a value B generated through g^{b} mod P (that is, B = g^{b} mod p, where B is the second key agreement algorithm parameter), and the second node performs an a^{th} power operation on the received value B to generate a secret value K. Because K = A^{b} mod p = (g^{a} mod p)^{b} mod p = g^{ab} mod p = (g^{b} mod p)^{a} mod p = B^{a} mod p, the secret values K generated by the first node and the second node are the same. In a key agreement process, an attacker cannot deduce a generated secret value by using only algorithm parameters transmitted by the first node and the second node. For example, in the DH algorithm, because values of the prime number p, the random number g, the random number a, and the random number b that are selected in an actual algorithm are very large, it is difficult to derive the secret value K based on the prime number p, the random number g, the value A, and the value B that are transmitted over a network. Therefore, the secret value obtained by using the DH algorithm is secure.

In this embodiment of this application, the first node uses the first authentication request message to carry the second key agreement algorithm parameter, and the first key agreement algorithm parameter is determined based on a first key agreement algorithm. The second node may determine the second PSK based on the first key agreement algorithm, the second key agreement algorithm parameter, the first fresh parameter, the fourth fresh parameter, and the first password. In this way, even if the attacker subsequently counterfeits identity information of the first node and obtains the first fresh parameter and the fourth fresh parameter that are used to generate the second PSK, the attacker cannot crack the PSK. Therefore, the attacker cannot communicate with the second node. This improves communication security of the second node.

In another possible implementation of the second aspect, the first authentication request message further includes a second key agreement algorithm parameter, and that the second node generates the second PSK based on the first fresh parameter and the fourth fresh parameter includes:
generating the second PSK based on the first fresh parameter, the fourth fresh parameter, a first password, and an intermediate key, where the first password is an access password, and the intermediate key is generated based on the first fresh parameter, the fourth fresh parameter, and the second key agreement algorithm parameter.

In another possible implementation of the second aspect, the first association request message further includes a first key agreement algorithm parameter, the first key agreement algorithm parameter is determined based on a first key agreement algorithm and a fourth key agreement algorithm parameter, the first authentication request message further includes a second key agreement algorithm parameter, the second key agreement algorithm parameter is determined by the first node based on the first key agreement algorithm and a third key agreement algorithm parameter, and that the second node generates the second PSK based on the first fresh parameter and the fourth fresh parameter includes:
the second node determines a first intermediate key based on the second key agreement algorithm parameter and the fourth key agreement algorithm parameter; and
the second node generates the second PSK based on the first fresh parameter, the fourth fresh parameter, a first password, and the first intermediate key.

It can be learned that the first key agreement algorithm parameter in the first association request message is generated based on a private key (that is, the fourth key agreement algorithm parameter) of the second node. After the second node receives the second key agreement algorithm parameter from the first node, the second node determines the first intermediate key based on the second key agreement algorithm parameter and the private key (that is, the fourth key agreement algorithm parameter) of the second node. The first intermediate key is a secret value obtained through key agreement between the first node and the second node. Then, the second node generates the second PSK based on the first fresh parameter, the fourth fresh parameter, the first password, and the first intermediate key.

In another possible implementation of the second aspect, the first authentication request message further includes a second key agreement algorithm parameter, the second key agreement algorithm parameter is determined based on a first key agreement algorithm, and the generating the second PSK based on the first fresh parameter and the fourth fresh parameter includes:
obtaining a fourth key agreement algorithm parameter;
determining a first intermediate key based on the first key agreement algorithm, the second key agreement algorithm parameter, and the fourth key agreement algorithm parameter;
determining a second intermediate key based on the first fresh parameter, the fourth fresh parameter, and the first intermediate key; and
generating the second PSK based on the first fresh parameter, the fourth fresh parameter, a first password, and the second intermediate key.

In another possible implementation of the second aspect, the method further includes:
the second node stores a correspondence between the identity of the first node and the second PSK.

It can be learned that after generating the second PSK, the second node stores the correspondence between the identity of the first node and the second PSK. When being associated with the first node again subsequently, the second node may obtain the second PSK based on the correspondence without regenerating the second PSK.

In another possible implementation of the second aspect, the method further includes:
the second node deletes the correspondence between the identity of the first node and the second PSK if the first password is updated.

In another possible implementation of the second aspect, the first authentication request message further includes update indication information, and the update indication information is used to indicate a PSK update.

It can be learned that after the second PSK is generated based on the first fresh parameter and the fourth fresh parameter, the first node reminds, by using the update indication information, the second node to update the second PSK, to prevent the second node from using a previous old PSK to verify identity authentication information, so as to avoid a verification failure and avoid affecting user experience.

In another possible implementation of the second aspect, the method further includes:
the second node generates a fourth PSK based on the first fresh parameter and the fourth fresh parameter if verification performed by the second node on the first identity authentication information based on the second PSK and the first fresh parameter fails; and
the second node sends a third authentication response message to the first node, where the third authentication response message includes third identity authentication information, and the third identity authentication information is generated based on the fourth PSK and the fourth fresh parameter.

It can be learned that, when the second node obtains the second PSK based on the correspondence, if verification performed by the second node on the first identity authentication information fails, a possible reason may be that the first node uses a newly generated PSK to generate the first identity authentication information. Therefore, the second node also generates a new PSK (namely, the fourth PSK) based on the first fresh parameter and the fourth fresh parameter, and re-initiates authentication based on the new PSK. This improves system stability.

In another possible implementation of the second aspect, the method further includes:
the second node receives a third association response message from the first node.

In another possible implementation of the second aspect, that the second node generates a fourth PSK based on the first fresh parameter and the fourth fresh parameter if verification performed by the second node on the first identity authentication information based on the second PSK fails includes:
the second node obtains fourth acknowledgement indication information if the verification performed by the second node on the first identity authentication information based on the second PSK fails, where the fourth acknowledgement indication information indicates that generation of the fourth PSK is allowed; and
the first node generates the fourth PSK based on the first fresh parameter and the fourth fresh parameter.

In another possible implementation of the second aspect, the method further includes:
the second node deletes the second PSK if verification performed by the second node on the second identity authentication information based on the second PSK and the first fresh parameter fails; and
the second node sends a second association request message to the first node, where the second association request message includes a fifth fresh parameter.

According to a third aspect, an embodiment of this application discloses an apparatus, including:
a receiving unit, configured to receive a first association request message from a second node, where the first association request message includes a first fresh parameter; and
a processing unit, configured to obtain a first pre-shared key PSK, where the first PSK corresponds to an identity of the second node, the first PSK is a PSK generated based on a second fresh parameter from the second node and a third fresh parameter from the apparatus, and the first PSK is used to verify the identity of the second node.

It can be learned that a PSK is a secret value shared by the apparatus and the second node. The apparatus generates the first PSK by using the second fresh parameter from the second node and the third fresh parameter from the apparatus, and uses the first PSK to correspond to the identity of the second node, to verify the identity of the second node (for example, the second node generates identity authentication information based on a PSK, and the first node may verify the identity authentication information of the second node by using the first PSK; for another example, the second node performs encryption or integrity protection on message content by using a PSK (or a key derived based on the PSK), and the first node may obtain the message content from the second node by using the first PSK). In this way, if an attacker wants to counterfeit the identity of the second node to associate with the apparatus, because the second fresh parameter and the third fresh parameter that are used to generate the first PSK may be obtained before the first association request message, for example, may be obtained when the apparatus is associated with the second node for the first time, and previously obtained data is usually difficult to crack, the attacker cannot forge a PSK, and therefore identity authentication performed by the apparatus on the attacker cannot succeed. This prevents the apparatus from being connected to an untrusted node, and improves communication security of the apparatus.

In a possible implementation of the third aspect, the apparatus further includes:
a sending unit, configured to send a first authentication request message to the second node, where the first authentication request message includes first identity authentication information and a fourth fresh parameter, and the first identity authentication information is generated based on the first PSK and the first fresh parameter.

It can be learned that, because a PSK is a secret value shared by the apparatus and the second node, the first PSK in the apparatus usually has a same value as a second PSK in the second node. The apparatus generates the first identity authentication information based on the first PSK and the first fresh parameter, so that the second node can verify an identity of the apparatus based on the second PSK. If verification based on the second PSK stored in the second node cannot succeed, it indicates that the identity of the apparatus is untrusted. Therefore, association between the second node and an untrusted node can be avoided, and communication security of the second node can be improved.

In another possible implementation of the third aspect, the receiving unit is further configured to receive a first authentication response message from the second node, where the first authentication response message includes second identity authentication information; and
the sending unit is further configured to send a first association response message to the second node if verification performed by the apparatus on the second identity authentication information based on the first PSK and the fourth fresh parameter (NONCEa) succeeds.

It can be learned that before the apparatus communicates with the second node, the apparatus and the second node first determine identities of both parties by using identity authentication information. Communication is allowed only after identity authentication succeeds. This avoids access of an untrusted node, and improves node communication security.

In another possible implementation of the third aspect, the processing unit is specifically configured to obtain the first PSK based on a correspondence between the first PSK and the identity of the second node.

It can be learned that, the correspondence between the first PSK and the identity of the second node exists in the apparatus. This may indicate that the second node has been associated with the apparatus before or the first PSK corresponding to the identity of the second node is preconfigured in the apparatus. Therefore, the apparatus may obtain the first PSK based on the correspondence.

In another possible implementation of the third aspect, the processing unit is specifically configured to:
obtain the first PSK based on a correspondence between the first PSK and the identity of the second node by using a first correspondence set.

It can be learned that the apparatus may store the correspondence between the first PSK and the identity of the second node in a form of a correspondence set.

In another possible implementation of the third aspect, the processing unit is specifically configured to generate the first PSK based on the first fresh parameter and the fourth fresh parameter, where the first fresh parameter is the second fresh parameter, and the fourth fresh parameter is the third fresh parameter.

It can be learned that, the first PSK is generated based on the first fresh parameter in the first association request message and the fourth fresh parameter from the apparatus. Usually, when the apparatus is associated with the second node for the first time or when the apparatus deletes a correspondence, a PSK corresponding to the identity of the second node does not exist in the apparatus. Therefore, the apparatus may generate the new first PSK based on the first fresh parameter and the fourth fresh parameter, to verify the identity of the second node.

In another possible implementation of the third aspect, the processing unit is further configured to obtain first acknowledgement indication information, where the first acknowledgement indication information indicates that association between the second node and the apparatus is allowed.

It can be learned that when the new first PSK is generated, an acknowledgement of a user is required. In this way, when an attacker uses an identity of the attacker to connect to the apparatus, because a PSK corresponding to the identity of the attacker does not exist in the apparatus, the user may verify an identity of a new node. The first PSK is generated only after the first acknowledgement indication information is obtained. Therefore, association between the apparatus and an untrusted node is avoided, and communication security of the apparatus is ensured.

In another possible implementation of the third aspect, the processing unit is specifically configured to generate the first PSK based on the first fresh parameter, the fourth fresh parameter, and a first password, where the first password is a password for accessing the apparatus.

The access password is a password that needs to be entered when another node requests to access the apparatus. For example, a password of Wi-Fi needs to be entered when the Wi-Fi is to be connected. It can be learned that, when the first password is the password for accessing the apparatus, the second node is connected to the apparatus by using the entered first password. Therefore, the first password is used to participate in generating the first PSK, so that an attacker who does not obtain the first password cannot crack the first PSK. In this way, the apparatus can be prevented from being associated with the attacker who does not obtain the first password.

In another possible implementation of the third aspect, the first association request message further includes a first key agreement algorithm parameter; and the processing unit is specifically configured to generate the first PSK based on the first fresh parameter, the fourth fresh parameter, a first password, and the first key agreement algorithm parameter.

It can be learned that, the second node uses the first association request message to carry the first key agreement algorithm parameter, and the first key agreement algorithm parameter is determined based on a first key agreement algorithm. The apparatus may determine the first PSK based on the first key agreement algorithm, the first key agreement algorithm parameter, the first fresh parameter, the fourth fresh parameter, and the first password. In this way, even if the attacker subsequently counterfeits identity information of the second node and obtains the first fresh parameter and the fourth fresh parameter that are used to generate the first PSK, the attacker cannot crack the first PSK. Therefore, the attacker cannot communicate with the apparatus. This improves communication security of the apparatus.

In another possible implementation of the third aspect, the first association request message further includes a first key agreement algorithm parameter; and the processing unit is specifically configured to:
generate the first PSK based on the first fresh parameter, the fourth fresh parameter, a first password, and an intermediate key, where the first password is an access password, and the intermediate key is generated based on the first fresh parameter, the fourth fresh parameter, and the first key agreement algorithm parameter.

In another possible implementation of the third aspect, the first association request message further includes a first key agreement algorithm parameter, the first key agreement algorithm parameter is determined based on a first key agreement algorithm, and the processing unit is specifically configured to:
obtain a third key agreement algorithm parameter;
determine a first intermediate key based on the first key agreement algorithm, the first key agreement algorithm parameter, and the third key agreement algorithm parameter; and
generate the first PSK based on the first fresh parameter, the fourth fresh parameter, a first password, and the first intermediate key.

It can be learned that after receiving the first key agreement algorithm parameter from the second node, the apparatus determines the third key agreement algorithm parameter (that is, a private key of the apparatus). The apparatus determines the first intermediate key based on the first key agreement algorithm, the first key agreement algorithm parameter, and the second key agreement algorithm parameter, and then generates the first PSK based on the first fresh parameter, the fourth fresh parameter, the first password, and the first intermediate key.

In another possible implementation of the third aspect, the first association request message further includes a first key agreement algorithm parameter, the first key agreement algorithm parameter is determined based on a first key agreement algorithm, and the processing unit is specifically configured to:
obtain a third key agreement algorithm parameter;
determine a first intermediate key based on the first key agreement algorithm, the first key agreement algorithm parameter, and the third key agreement algorithm parameter;
determine a second intermediate key based on the first fresh parameter, the fourth fresh parameter, and the first intermediate key; and
generate the first PSK based on the first fresh parameter, the fourth fresh parameter, a first password, and the second intermediate key.

In another possible implementation of the third aspect, the processing unit is further configured to store a correspondence between the identity of the second node and the first PSK.

It can be learned that after generating the first PSK, the apparatus stores the correspondence between the identity of the second node and the first PSK. When receiving an association request from the second node again subsequently, the apparatus may obtain the first PSK based on the correspondence without regenerating the first PSK.

In another possible implementation of the third aspect, the processing unit is further configured to delete the correspondence between the identity of the second node and the first PSK if the first password is updated.

In another possible implementation of the third aspect, the first authentication request message further includes update indication information, and the update indication information is used to indicate a PSK update.

It can be learned that after generating the first PSK based on the first fresh parameter and the fourth fresh parameter, the apparatus may remind the second node to update a PSK, to prevent the second node from using a previous old PSK to verify identity authentication information, so as to avoid a verification failure and avoid affecting user experience.

In another possible implementation of the third aspect, the processing unit is further configured to generate a third PSK based on the first fresh parameter and the fourth fresh parameter if verification performed by the apparatus on the second identity authentication information based on the first PSK and the fourth fresh parameter fails; and
the sending unit is further configured to send a second authentication request message to the second node, where the second authentication request message includes third identity authentication information, and the third identity authentication information is generated based on the third PSK and the first fresh parameter.

It can be learned that, when the apparatus obtains the first PSK based on the correspondence, if verification performed by the apparatus on the second identity authentication information fails, a possible reason may be that the second node uses a newly generated PSK to generate the second identity authentication information. Therefore, the apparatus also generates a new PSK (namely, the third PSK) based on the first fresh parameter and the fourth fresh parameter, and re-initiates authentication based on the new PSK. This can improve system stability.

In another possible implementation of the third aspect, the processing unit is further configured to obtain second acknowledgement indication information if the verification performed on the second identity authentication information based on the first PSK and the fourth fresh parameter fails, where the second acknowledgement indication information indicates that generation of the third PSK is allowed; and
the processing unit is further configured to generate the third PSK based on the first fresh parameter and the fourth fresh parameter.

In another possible implementation of the third aspect, the receiving unit is further configured to receive a second authentication response message from the second node, where the second authentication response message includes fourth identity authentication information; and
the sending unit is further configured to send a second association response message to the second node if verification performed on the fourth identity authentication information based on the third PSK and the fourth fresh parameter succeeds.

It can be learned that after re-initiating authentication based on the new PSK, the apparatus receives the fourth identity authentication information sent by the second node. If the verification performed on the fourth identity authentication information succeeds, it indicates that the identity of the second node is trusted. Therefore, communication with the second node can be allowed.

According to a fourth aspect, an embodiment of this application discloses an apparatus. The apparatus includes:
a sending unit, configured to send a first association request message to a first node, where the first association request message includes a first fresh parameter;
a receiving unit, configured to receive a first authentication request message from the first node, where the first authentication request message includes a fourth fresh parameter; and
an obtaining unit, configured to obtain a second PSK, where the second PSK corresponds to an identity of the first node, the second PSK is a PSK generated based on a second fresh parameter from the apparatus and a third fresh parameter from the first node, and the second PSK is used to verify the identity of the first node.

It can be learned that a PSK is a secret value shared by the apparatus and the first node. The apparatus generates the second PSK by using the second fresh parameter and the third fresh parameter from the apparatus, and uses the second PSK to correspond to the identity of the first node, to verify the identity of the first node (for example, the first node generates identity authentication information based on a PSK, and the second node may verify the identity authentication information of the first node by using the second PSK; for another example, the first node performs encryption or integrity protection on message content by using a PSK (or a key derived based on the PSK), and the second node may obtain the message content from the second node by using the first PSK). In this way, if an attacker wants to counterfeit the identity of the first node to associate with the apparatus, because the second fresh parameter and the third fresh parameter that are used to generate the second PSK may be obtained before the first association request message, for example, may be obtained when the apparatus is associated with the first node for the first time, and previously obtained data is usually difficult to crack, the attacker cannot forge a PSK, and therefore identity authentication performed by the apparatus on the attacker cannot succeed. This prevents the apparatus from being associated with an untrusted node, and improves communication security of the apparatus.

In a possible implementation of the fourth aspect, the sending unit is further configured to send a first authentication response message to the first node if verification performed on the first identity authentication information based on the second PSK and the first fresh parameter succeeds, where the first authentication response message includes second identity authentication information, and the second identity authentication information is generated based on the second PSK and the fourth fresh parameter; and
the receiving unit is further configured to receive a first association response message from the first node.

It can be learned that, because a PSK is a secret value shared by the apparatus and the first node, the second PSK in the apparatus usually has a same value as a first PSK in the first node. The first identity authentication information is generated by the first node based on the first PSK and the first fresh parameter. Therefore, the apparatus may verify the identity authentication information of the first node based on the second PSK and the first fresh parameter. If verification based on the second PSK stored in the apparatus cannot succeed, it indicates that the identity of the first node is untrusted. Therefore, association between the apparatus and an untrusted node can be avoided, and communication security of the apparatus can be improved. Correspondingly, the apparatus generates the second identity authentication information based on the second PSK and the fourth fresh parameter, and the second identity authentication information is used by the first node to verify an identity of the apparatus. Communication with a peer node is allowed only after identity authentication of both parties succeeds. This improves node communication security.

In another possible implementation of the fourth aspect, the processing unit is specifically configured to obtain the second PSK based on a correspondence between the first PSK and the identity of the first node.

It can be learned that, the correspondence between the second PSK and the identity of the first node exists in the apparatus. This may indicate that the apparatus has been associated with the first node before or the second PSK corresponding to the identity of the first node is preconfigured in the second node. Therefore, the apparatus may obtain the second PSK based on the correspondence.

In another possible implementation of the fourth aspect, the processing unit is specifically configured to:
obtain the second PSK based on a correspondence between the second PSK and the identity of the first node by using a second correspondence set.

It can be learned that the apparatus may store the correspondence between the second PSK and the identity of the first node in a form of a correspondence set.

In another possible implementation of the fourth aspect, the processing unit is specifically configured to generate the second PSK based on the first fresh parameter and the fourth fresh parameter, where the first fresh parameter is the second fresh parameter, and the fourth fresh parameter is the third fresh parameter.

It can be learned that, the second PSK is generated based on the first fresh parameter in the first association request message and the fourth fresh parameter in the first authentication request message. Usually, when the apparatus is associated with the first node for the first time or when the apparatus deletes a correspondence, the second PSK corresponding to the identity of the first node does not exist in the apparatus. Therefore, the apparatus may generate the new second PSK based on the first fresh parameter and the fourth fresh parameter, to verify the identity of the first node.

In another possible implementation of the fourth aspect, the processing unit is further configured to obtain third acknowledgement indication information, where the third acknowledgement indication information indicates that generation of the second PSK is allowed.

It can be learned that when the new second PSK is generated, an acknowledgement of a user is required. In this way, when an attacker uses an identity of the attacker to connect to the apparatus, because a PSK corresponding to the identity of the attacker does not exist in the apparatus, the user may verify an identity of a new node. The second PSK is generated only after the third acknowledgement indication information is obtained. Therefore, association between the apparatus and an untrusted node is avoided, and communication security of the apparatus is ensured.

In another possible implementation of the fourth aspect, the processing unit is specifically configured to generate the second PSK based on the first fresh parameter, the fourth fresh parameter, and a first password, where the first password is a password for accessing the first node.

In an optional design, the access password is a password that needs to be entered when another node requests to access the first node. For example, a password of Wi-Fi needs to be entered when the Wi-Fi is to be connected. It can be learned that, when the first password is the password for accessing the first node, the apparatus is connected to the first node by using the entered first password. Therefore, the first password is used to participate in generating the second PSK, so that an attacker who does not obtain the first password cannot crack the second PSK. In this way, the apparatus can be prevented from being associated with the attacker who does not obtain the first password.

In another possible implementation of the fourth aspect, the processing unit is specifically configured to generate the second PSK based on the first fresh parameter, the fourth fresh parameter, a first password, and a second key agreement algorithm parameter.

It can be learned that, the first node uses the first authentication request message to carry the second key agreement algorithm parameter, and the second key agreement algorithm parameter is determined based on a first key agreement algorithm. The apparatus may determine the second PSK based on the first key agreement algorithm, the second key agreement algorithm parameter, the first fresh parameter, the fourth fresh parameter, and the first password. In this way, even if the attacker subsequently counterfeits identity information of the first node and obtains the first fresh parameter and the fourth fresh parameter that are used to generate the second PSK, the attacker cannot crack the PSK. Therefore, the attacker cannot communicate with the apparatus. This improves communication security of the apparatus.

In another possible implementation of the fourth aspect, the first authentication request message further includes a second key agreement algorithm parameter; and the processing unit is specifically configured to:
generate the second PSK based on the first fresh parameter, the fourth fresh parameter, a first password, and an intermediate key, where the first password is an access password, and the intermediate key is generated based on the first fresh parameter, the fourth fresh parameter, and the second key agreement algorithm parameter.

In another possible implementation of the fourth aspect, the first association request message further includes a first key agreement algorithm parameter, the first key agreement algorithm parameter is determined based on a first key agreement algorithm and a fourth key agreement algorithm parameter, the first authentication request message further includes a second key agreement algorithm parameter, the second key agreement algorithm parameter is determined by the first node based on the first key agreement algorithm and a third key agreement algorithm parameter, and the processing unit is specifically configured to:
determine a first intermediate key based on the second key agreement algorithm parameter and the fourth key agreement algorithm parameter; and
generate the second PSK based on the first fresh parameter, the fourth fresh parameter, a first password, and the first intermediate key.

It can be learned that the second key agreement algorithm parameter in the first association request message is generated based on a private key (that is, the fourth key agreement algorithm parameter) of the apparatus. After the apparatus receives the second key agreement algorithm parameter from the first node, the second node determines the first intermediate key based on the second key agreement algorithm parameter and the private key (that is, the fourth key agreement algorithm parameter) of the apparatus. The first intermediate key is a secret value obtained through key agreement between the first node and the apparatus. Then, the apparatus generates the second PSK based on the first fresh parameter, the fourth fresh parameter, the first password, and the first intermediate key.

In another possible implementation of the fourth aspect, the first authentication request message further includes a second key agreement algorithm parameter, the second key agreement algorithm parameter is determined based on a first key agreement algorithm, and the processing unit is specifically configured to:
obtain a fourth key agreement algorithm parameter;
determine a first intermediate key based on the first key agreement algorithm, the second key agreement algorithm parameter, and the fourth key agreement algorithm parameter;
determine a second intermediate key based on the first fresh parameter, the fourth fresh parameter, and the first intermediate key; and
generate the second PSK based on the first fresh parameter, the fourth fresh parameter, a first password, and the second intermediate key.

In another possible implementation of the fourth aspect, the processing unit is further configured to store a correspondence between the identity of the first node and the second PSK.

It can be learned that after generating the second PSK, the apparatus stores the correspondence between the identity of the first node and the second PSK. When being associated with the first node again subsequently, the apparatus may obtain the second PSK based on the correspondence without regenerating the PSK.

In another possible implementation of the fourth aspect, the processing unit is further configured to delete the correspondence between the identity of the first node and the second PSK if the first password is updated.

In another possible implementation of the fourth aspect, the first authentication request message further includes update indication information, and the update indication information is used to indicate a PSK update.

It can be learned that after the second PSK is generated based on the first fresh parameter and the fourth fresh parameter, the first node may remind, by using the update indication information, the apparatus to update the second PSK, to prevent the apparatus from using a previous old PSK to verify identity authentication information, so as to avoid a verification failure and avoid affecting user experience.

In another possible implementation of the fourth aspect, the processing unit is further configured to generate a fourth PSK based on the first fresh parameter and the fourth fresh parameter if verification performed on the first identity authentication information based on the second PSK and the first fresh parameter fails; and
the sending unit is further configured to send a third authentication response message to the first node, where the third authentication response message includes third identity authentication information, and the third identity authentication information is generated based on the fourth PSK and the fourth fresh parameter.

It can be learned that, when the apparatus obtains the second PSK based on the correspondence, if verification performed by the apparatus on the first identity authentication information fails, a possible reason may be that the first node uses a newly generated PSK to generate the first identity authentication information. Therefore, the apparatus also generates a new PSK (namely, the fourth PSK) based on the first fresh parameter and the fourth fresh parameter, and re-initiates authentication based on the new PSK. This can improve system stability.

In another possible implementation of the fourth aspect, the receiving unit is further configured to receive a third association response message from the first node.

In another possible implementation of the fourth aspect, the processing unit is further configured to obtain fourth acknowledgement indication information if the verification performed on the first identity authentication information based on the second PSK fails, where the fourth acknowledgement indication information indicates that generation of the fourth PSK is allowed; and
the processing unit is further configured to generate the fourth PSK based on the first fresh parameter and the fourth fresh parameter.

In another possible implementation of the fourth aspect, the processing unit is further configured to delete the second PSK if verification performed on the second identity authentication information based on the second PSK and the first fresh parameter fails; and
the sending unit is further configured to send a second association request message to the first node, where the second association request message includes a fifth fresh parameter.

According to a fifth aspect, an embodiment of this application discloses an apparatus. The apparatus includes at least one processor and a communications interface. The processor invokes a computer program stored in at least one memory, to implement the method described in any one of the first aspect or the possible implementations of the first aspect.

In a possible implementation of the fifth aspect, the processor is specifically configured to:
receive a first association request message from a second node through the communications interface, where the first association request message includes a first fresh parameter; and
obtain a first pre-shared key PSK, where the first PSK corresponds to an identity of the second node, the first PSK is a PSK generated based on a second fresh parameter from the second node and a third fresh parameter from the apparatus, and the first PSK is used to verify the identity of the second node.

It can be learned that a PSK is a secret value shared by the apparatus and the second node. The apparatus generates the first PSK by using the second fresh parameter from the second node and the third fresh parameter from the apparatus, and uses the first PSK to correspond to the identity of the second node, to verify the identity of the second node (for example, the second node generates identity authentication information based on a PSK, and the first node may verify the identity authentication information of the second node by using the first PSK; for another example, the second node performs encryption or integrity protection on message content by using a PSK (or a key derived based on the PSK), and the first node may obtain the message content from the second node by using the first PSK). In this way, if an attacker wants to counterfeit the identity of the second node to associate with the apparatus, because the second fresh parameter and the third fresh parameter that are used to generate the first PSK may be obtained before the first association request message, for example, may be obtained when the apparatus is associated with the second node for the first time, and previously obtained data is usually difficult to crack, the attacker cannot forge a PSK, and therefore identity authentication performed by the apparatus on the attacker cannot succeed. This prevents the apparatus from being connected to an untrusted node, and improves communication security of the apparatus.

In another possible implementation of the fifth aspect, the processor is further configured to:
send a first authentication request message to the second node, where the first authentication request message includes first identity authentication information and a fourth fresh parameter, and the first identity authentication information is generated based on the first PSK and the first fresh parameter.

It can be learned that, because a PSK is a secret value shared by the apparatus and the second node, the first PSK in the apparatus usually has a same value as a second PSK in the second node. The apparatus generates the first identity authentication information based on the first PSK and the first fresh parameter, so that the second node can verify an identity of the apparatus based on the second PSK. If verification based on the second PSK stored in the second node cannot succeed, it indicates that the identity of the apparatus is untrusted. Therefore, association between the second node and an untrusted node can be avoided, and communication security of the second node can be improved.

In another possible implementation of the fifth aspect, the processor is further configured to:
receive a first authentication response message from the second node through the communications interface, where the first authentication response message includes second identity authentication information; and
send a first association response message to the second node through the communications interface if verification performed on the second identity authentication information based on the first PSK and the fourth fresh parameter succeeds.

It can be learned that before the apparatus communicates with the second node, the apparatus and the second node first determine identities of both parties by using identity authentication information. Communication is allowed only after identity authentication succeeds. This avoids access of an untrusted node, and improves node communication security.

In another possible implementation of the fifth aspect, the processor is specifically configured to:
obtain the first PSK based on a correspondence between the first PSK and the identity of the second node.

It can be learned that, the correspondence between the first PSK and the identity of the second node exists in the apparatus. This may indicate that the second node has been associated with the apparatus before or the first PSK corresponding to the identity of the second node is preconfigured in the apparatus. Therefore, the apparatus may obtain the first PSK based on the correspondence.

In another possible implementation of the fifth aspect, a first correspondence set exists in the memory, and the processor is specifically configured to:
obtain the first PSK based on a correspondence between the first PSK and the identity of the second node by using the first correspondence set.

It can be learned that the apparatus may store the correspondence between the first PSK and the identity of the second node in a form of a correspondence set.

In another possible implementation of the fifth aspect, the processor is specifically configured to:
generate the first PSK based on the first fresh parameter and the fourth fresh parameter, where the first fresh parameter is the second fresh parameter, and the fourth fresh parameter is the third fresh parameter.

It can be learned that, the first PSK is generated based on the first fresh parameter in the first association request message and the fourth fresh parameter from the apparatus. Usually, when the apparatus is associated with the second node for the first time or when the apparatus deletes a correspondence, a PSK corresponding to the identity of the second node does not exist in the apparatus. Therefore, the apparatus may generate the new first PSK based on the first fresh parameter and the fourth fresh parameter, to verify the identity of the second node.

In another possible implementation of the fifth aspect, the apparatus further includes an input module, and the processor is further configured to:
obtain first acknowledgement indication information through the input module, where the first acknowledgement indication information indicates that association between the second node and the apparatus is allowed.

It can be learned that when the new first PSK is generated, an acknowledgement of a user is required. In this way, when an attacker uses an identity of the attacker to connect to the apparatus, because a PSK corresponding to the identity of the attacker does not exist in the apparatus, the user may verify an identity of a new node. The first PSK is generated only after the first acknowledgement indication information is obtained. Therefore, association between the apparatus and an untrusted node is avoided, and communication security of the apparatus is ensured.

In another possible implementation of the fifth aspect, the processor is specifically configured to:
generate the first PSK based on the first fresh parameter, the fourth fresh parameter, and a first password, where the first password is a password for accessing the apparatus.

The access password is a password that needs to be entered when another node requests to access the apparatus. For example, a password of Wi-Fi needs to be entered when the Wi-Fi is to be connected. It can be learned that, when the first password is the password for accessing the apparatus, the second node is connected to the apparatus by using the entered first password. Therefore, the first password is used to participate in generating the first PSK, so that an attacker who does not obtain the first password cannot crack the first PSK. In this way, the apparatus can be prevented from being associated with the attacker who does not obtain the first password.

In another possible implementation of the fifth aspect, the first association request message further includes a first key agreement algorithm parameter; and the processor is specifically configured to:
generate the first PSK based on the first fresh parameter, the fourth fresh parameter, a first password, and the first key agreement algorithm parameter.

It can be learned that, the second node uses the first association request message to carry the first key agreement algorithm parameter, and the first key agreement algorithm parameter is determined based on a first key agreement algorithm. The apparatus may determine the first PSK based on the first key agreement algorithm, the first key agreement algorithm parameter, the first fresh parameter, the fourth fresh parameter, and the first password. In this way, even if the attacker subsequently counterfeits identity information of the second node and obtains the first fresh parameter and the fourth fresh parameter that are used to generate the first PSK, the attacker cannot crack the first PSK. Therefore, the attacker cannot communicate with the apparatus. This improves communication security of the apparatus.

In another possible implementation of the fifth aspect, the first association request message further includes a first key agreement algorithm parameter; and the processor is specifically configured to:
generate the first PSK based on the first fresh parameter, the fourth fresh parameter, a first password, and an intermediate key, where the first password is an access password, and the intermediate key is generated based on the first fresh parameter, the fourth fresh parameter, and the first key agreement algorithm parameter.

In another possible implementation of the fifth aspect, the first association request message further includes a first key agreement algorithm parameter, the first key agreement algorithm parameter is determined based on a first key agreement algorithm, and the processor is specifically configured to:
determine a third key agreement algorithm parameter;
determine a first intermediate key based on the first key agreement algorithm, the first key agreement algorithm, and the third key agreement algorithm; and
generate the first PSK based on the first fresh parameter, the fourth fresh parameter, a first password, and the first intermediate key.

It can be learned that after receiving the first key agreement algorithm parameter from the second node, the apparatus determines the third key agreement algorithm parameter (that is, a private key of the apparatus). The apparatus determines the first intermediate key based on the first key agreement algorithm, the first key agreement algorithm parameter, and the second key agreement algorithm parameter, and then generates the first PSK based on the first fresh parameter, the fourth fresh parameter, the first password, and the first intermediate key.

In another possible implementation of the fifth aspect, the first association request message further includes a first key agreement algorithm parameter, the first key agreement algorithm parameter is determined based on a first key agreement algorithm, and the processor is specifically configured to:
obtain a third key agreement algorithm parameter;
determine a first intermediate key based on the first key agreement algorithm, the first key agreement algorithm parameter, and the third key agreement algorithm parameter;
determine a second intermediate key based on the first fresh parameter, the fourth fresh parameter, and the first intermediate key; and
generate the first PSK based on the first fresh parameter, the fourth fresh parameter, a first password, and the second intermediate key.

In another possible implementation of the fifth aspect, the processor is further configured to:
store a correspondence between the identity of the second node and the first PSK.

It can be learned that after generating the first PSK, the apparatus stores the correspondence between the identity of the second node and the first PSK. When receiving an association request from the second node again subsequently, the apparatus may obtain the first PSK based on the correspondence without regenerating the first PSK.

In another possible implementation of the fifth aspect, the processor is further configured to:
delete the correspondence between the identity of the second node and the first PSK if the first password is updated.

In another possible implementation of the fifth aspect, the first authentication request message further includes update indication information, and the update indication information is used to indicate a PSK update.

It can be learned that after generating the first PSK based on the first fresh parameter and the fourth fresh parameter, the apparatus may remind the second node to update a PSK, to prevent the second node from using a previous old PSK to verify identity authentication information, so as to avoid a verification failure and avoid affecting user experience.

In another possible implementation of the fifth aspect, the processor is further configured to:
generate a third PSK based on the first fresh parameter and the fourth fresh parameter if verification performed on the second identity authentication information based on the first PSK and the fourth fresh parameter fails; and
send a second authentication request message to the second node through the communications interface, where the second authentication request message includes third identity authentication information, and the third identity authentication information is generated based on the third PSK and the first fresh parameter.

It can be learned that, when the apparatus obtains the first PSK based on the correspondence, if verification performed by the apparatus on the second identity authentication information fails, a possible reason may be that the second node uses a newly generated PSK to generate the second identity authentication information. Therefore, the apparatus also generates a new PSK (namely, the third PSK) based on the first fresh parameter and the fourth fresh parameter, and re-initiates authentication based on the new PSK. This can improve system stability.

In another possible implementation of the fifth aspect, the processor is specifically configured to:
obtain second acknowledgement indication information through the communications interface if the verification performed on the second identity authentication information based on the first PSK and the fourth fresh parameter fails, where the second acknowledgement indication information indicates that generation of the third PSK is allowed; and
generate the third PSK based on the first fresh parameter and the fourth fresh parameter.

In another possible implementation of the fifth aspect, the processor is further configured to:
receive a second authentication response message from the second node through the communications interface, where the second authentication response message includes fourth identity authentication information; and
send a second association response message to the second node through the communications interface if verification performed on the fourth identity authentication information based on the third PSK and the fourth fresh parameter succeeds.

It can be learned that after re-initiating authentication based on the new PSK, the apparatus receives the fourth identity authentication information sent by the second node. If the verification performed on the fourth identity authentication information succeeds, it indicates that the identity of the second node is trusted. Therefore, communication with the second node can be allowed.

According to a sixth aspect, an embodiment of this application discloses an apparatus. The apparatus includes at least one processor and a communications interface. The processor invokes a computer program stored in at least one memory, to implement the method described in any one of the second aspect or the possible implementations of the second aspect.

In a possible implementation of the sixth aspect, the processor is specifically configured to:
send a first association request message to a first node through the communications interface, where the first association request message includes a first fresh parameter;
receive a first authentication request message from the first node through the communications interface, where the first authentication request message includes a fourth fresh parameter; and
obtain a second PSK, where the second PSK corresponds to an identity of the first node, the second PSK is a PSK generated based on a second fresh parameter from the apparatus and a third fresh parameter from the first node, and the second PSK is used to verify the identity of the first node.

It can be learned that a PSK is a secret value shared by the apparatus and the first node. The apparatus generates the second PSK by using the second fresh parameter and the third fresh parameter from the apparatus, and uses the second PSK to correspond to the identity of the first node, to verify the identity of the first node (for example, the first node generates identity authentication information based on a PSK, and the second node may verify the identity authentication information of the first node by using the second PSK; for another example, the first node performs encryption or integrity protection on message content by using a PSK (or a key derived based on the PSK), and the second node may obtain the message content from the second node by using the first PSK). In this way, if an attacker wants to counterfeit the identity of the first node to associate with the apparatus, because the second fresh parameter and the third fresh parameter that are used to generate the second PSK may be obtained before the first association request message, for example, may be obtained when the apparatus is associated with the first node for the first time, and previously obtained data is usually difficult to crack, the attacker cannot forge a PSK, and therefore identity authentication performed by the apparatus on the attacker cannot succeed. This prevents the apparatus from being associated with an untrusted node, and improves communication security of the apparatus.

In a possible implementation of the sixth aspect, the processor is further configured to:
send a first authentication response message to the first node through the communications interface if verification performed on the first identity authentication information based on the second PSK and the first fresh parameter succeeds, where the first authentication response message includes second identity authentication information, and the second identity authentication information is generated based on the second PSK and the fourth fresh parameter; and
receive a first association response message from the first node through the communications interface.

It can be learned that, because a PSK is a secret value shared by the apparatus and the first node, the second PSK in the apparatus usually has a same value as a first PSK in the first node. The first identity authentication information is generated by the first node based on the first PSK and the first fresh parameter. Therefore, the apparatus may verify the identity authentication information of the first node based on the second PSK and the first fresh parameter. If verification based on the second PSK stored in the apparatus cannot succeed, it indicates that the identity of the first node is untrusted. Therefore, association between the apparatus and an untrusted node can be avoided, and communication security of the apparatus can be improved. Correspondingly, the apparatus generates the second identity authentication information based on the second PSK and the fourth fresh parameter, and the second identity authentication information is used by the first node to verify an identity of the apparatus. Communication with a peer node is allowed only after identity authentication of both parties succeeds. This improves node communication security.

In another possible implementation of the sixth aspect, the processor is specifically configured to:
obtain the second PSK based on a correspondence between the second PSK and the identity of the first node.

It can be learned that, the correspondence between the second PSK and the identity of the first node exists in the apparatus. This may indicate that the apparatus has been associated with the first node before or the second PSK corresponding to the identity of the first node is preconfigured in the second node. Therefore, the apparatus may obtain the second PSK based on the correspondence.

In another possible implementation of the sixth aspect, a second correspondence set is stored in the memory, and the processor is specifically configured to:
obtain the second PSK based on a correspondence between the second PSK and the identity of the first node by using the second correspondence set.

It can be learned that the apparatus may store the correspondence between the second PSK and the identity of the first node in a form of a correspondence set.

In another possible implementation of the sixth aspect, the processor is specifically configured to:
generate the second PSK based on the first fresh parameter and the fourth fresh parameter, where the first fresh parameter is the second fresh parameter, and the fourth fresh parameter is the third fresh parameter.

It can be learned that, the second PSK is generated based on the first fresh parameter in the first association request message and the fourth fresh parameter in the first authentication request message. Usually, when the apparatus is associated with the first node for the first time or when the apparatus deletes a correspondence, the second PSK corresponding to the identity of the first node does not exist in the apparatus. Therefore, the apparatus may generate the new second PSK based on the first fresh parameter and the fourth fresh parameter, to verify the identity of the first node.

In another possible implementation of the sixth aspect, the apparatus further includes an input module, and the processor is further configured to:
obtain third acknowledgement indication information through the input module, where the third acknowledgement indication information indicates that generation of the second PSK is allowed.

It can be learned that when the new second PSK is generated, an acknowledgement of a user is required. In this way, when an attacker uses an identity of the attacker to connect to the apparatus, because a PSK corresponding to the identity of the attacker does not exist in the apparatus, the user may verify an identity of a new node. The second PSK is generated only after the third acknowledgement indication information is obtained. Therefore, association between the apparatus and an untrusted node is avoided, and communication security of the apparatus is ensured.

In another possible implementation of the sixth aspect, the processor is specifically configured to:
generate the second PSK based on the first fresh parameter, the fourth fresh parameter, and a first password, where the first password is a password for accessing the apparatus.

In an optional design, the access password is a password that needs to be entered when another node requests to access the first node. For example, a password of Wi-Fi needs to be entered when the Wi-Fi is to be connected. It can be learned that, when the first password is the password for accessing the first node, the apparatus is connected to the first node by using the entered first password. Therefore, the first password is used to participate in generating the second PSK, so that an attacker who does not obtain the first password cannot crack the second PSK. In this way, the apparatus can be prevented from being associated with the attacker who does not obtain the first password.

In another possible implementation of the sixth aspect, the first authentication request message further includes a second key agreement algorithm parameter; and the processor is specifically configured to:
generate the second PSK based on the first fresh parameter, the fourth fresh parameter, a first password, and the second key agreement algorithm parameter.

It can be learned that, the first node uses the first authentication request message to carry the second key agreement algorithm parameter, and the first key agreement algorithm parameter is determined based on a first key agreement algorithm. The apparatus may determine the second PSK based on the first key agreement algorithm, the second key agreement algorithm parameter, the first fresh parameter, the fourth fresh parameter, and the first password. In this way, even if the attacker subsequently counterfeits identity information of the first node and obtains the first fresh parameter and the fourth fresh parameter that are used to generate the second PSK, the attacker cannot crack the PSK. Therefore, the attacker cannot communicate with the apparatus. This improves communication security of the apparatus.

In another possible implementation of the sixth aspect, the first authentication request message further includes a second key agreement algorithm parameter; and the processor is specifically configured to:
generate the second PSK based on the first fresh parameter, the fourth fresh parameter, a first password, and an intermediate key, where the first password is an access password, and the intermediate key is generated based on the first fresh parameter, the fourth fresh parameter, and the second key agreement algorithm parameter.

In another possible implementation of the sixth aspect, the first association request message further includes a first key agreement algorithm parameter, the first key agreement algorithm parameter is determined based on a first key agreement algorithm and a fourth key agreement algorithm parameter, the first authentication request message further includes a second key agreement algorithm parameter, the second key agreement algorithm parameter is determined by the first node based on the first key agreement algorithm and a third key agreement algorithm parameter, and the processor is specifically configured to:
determine a first intermediate key based on the second key agreement algorithm parameter and the fourth key agreement algorithm parameter; and
generate the second PSK based on the first fresh parameter, the fourth fresh parameter, a first password, and the first intermediate key.

It can be learned that the first key agreement algorithm parameter in the first association request message is generated based on a private key (that is, the fourth key agreement algorithm parameter) of the second node. After the apparatus receives the second key agreement algorithm parameter from the first node, the apparatus determines the first intermediate key based on the second key agreement algorithm parameter and the private key (that is, the fourth key agreement algorithm parameter) of the apparatus. The first intermediate key is a secret value obtained through key agreement between the first node and the apparatus. Then, the apparatus generates the second PSK based on the first fresh parameter, the fourth fresh parameter, the first password, and the first intermediate key.

In another possible implementation of the sixth aspect, the first authentication request message further includes a second key agreement algorithm parameter, the second key agreement algorithm parameter is determined based on a first key agreement algorithm, and the processor is specifically configured to:
obtain a fourth key agreement algorithm parameter;
determine a first intermediate key based on the first key agreement algorithm, the second key agreement algorithm parameter, and the fourth key agreement algorithm parameter;
determine a second intermediate key based on the first fresh parameter, the fourth fresh parameter, and the first intermediate key; and
generate the second PSK based on the first fresh parameter, the fourth fresh parameter, a first password, and the second intermediate key.

In another possible implementation of the sixth aspect, the processor is further configured to:
store a correspondence between the identity of the first node and the second PSK.

It can be learned that after generating the second PSK, the apparatus stores the correspondence between the identity of the first node and the second PSK. When being associated with the first node again subsequently, the apparatus may obtain the second PSK based on the correspondence without regenerating the PSK.

In another possible implementation of the sixth aspect, the processor is further configured to:
delete the correspondence between the identity of the first node and the second PSK if the first password is updated.

In another possible implementation of the sixth aspect, the first authentication request message further includes update indication information, and the update indication information is used to indicate a PSK update.

It can be learned that after the second PSK is generated based on the first fresh parameter and the fourth fresh parameter, the first node may remind, by using the update indication information, the apparatus to update the second PSK, to prevent the apparatus from using a previous old PSK to verify identity authentication information, so as to avoid a verification failure and avoid affecting user experience.

In another possible implementation of the sixth aspect, the processor is further configured to:
generate a fourth PSK based on the first fresh parameter and the fourth fresh parameter if verification performed on the first identity authentication information based on the second PSK and the first fresh parameter fails; and
send a third authentication response message to the first node through the communications interface, where the third authentication response message includes third identity authentication information, and the third identity authentication information is generated based on the fourth PSK and the fourth fresh parameter.

It can be learned that, when the apparatus obtains the second PSK based on the correspondence, if verification performed by the apparatus on the first identity authentication information fails, a possible reason may be that the first node uses a newly generated PSK to generate the first identity authentication information. Therefore, the apparatus also generates a new PSK (namely, the fourth PSK) based on the first fresh parameter and the fourth fresh parameter, and re-initiates authentication based on the new PSK. This can improve system stability.

In another possible implementation of the sixth aspect, the processor is further configured to:
receive a third association response message from the first node through the communications interface.

In another possible implementation of the sixth aspect, the apparatus further includes an input module, and the processor is further configured to:
obtain fourth acknowledgement indication information through the input module if the verification performed on the first identity authentication information based on the second PSK fails, where the fourth acknowledgement indication information indicates that generation of the fourth PSK is allowed; and
generate the fourth PSK based on the first fresh parameter and the fourth fresh parameter.

In another possible implementation of the sixth aspect, the processor is further configured to:
delete the second PSK if verification performed on the second identity authentication information based on the first PSK and the first fresh parameter fails; and
send a second association request message to the first node through the communications interface, where the second association request message includes a fifth fresh parameter.

According to a seventh aspect, an embodiment of this application provides a key obtaining system. The key obtaining system includes a first node and a second node. The first node is the apparatus described in any one of the third aspect or the possible implementations of the third aspect or any one of the fifth aspect or the possible implementations of the fifth aspect. The second node is the apparatus described in any one of the fourth aspect or the possible implementations of the fourth aspect or any one of the sixth aspect or the possible implementations of the sixth aspect.

In a possible implementation of the seventh aspect, the first node stores a first PSK corresponding to an identity of the second node, and the first PSK is preconfigured in the first node.

If the second node is changed to a third node, the first node may request, by using the method in any one of the second aspect or the possible implementations of the second aspect, to associate with the third node.

For example, when a CDC of a vehicle is the first node, and a microphone of the vehicle is the second node, if an old microphone of the vehicle is changed to a new microphone, because a PSK between the old microphone and the CDC is preconfigured, and the new microphone cannot receive an operation instruction of a user, a first association request message may be sent to the new microphone through the CDC, to obtain a new PSK.

In another possible implementation of the seventh aspect, the first node stores a correspondence between an identity of the second node and a first PSK, and the first PSK is preconfigured in the first node. If the first node is changed to a fourth node, the fourth node may obtain the correspondence in the first node, so as to obtain a second PSK corresponding to the identity of the second node.

For example, when a CDC of a vehicle is the first node, if the CDC of the vehicle is changed, the correspondence that is between the identity of the second node and the first PSK and that is stored in the old CDC may be configured on a new CDC. A configuration manner may be: copying the correspondence from the old CDC to the new CDC by using a computer storage medium, or receiving, by the new CDC, the correspondence from the old CDC.

According to an eighth aspect, an embodiment of this application discloses a computer-readable storage medium. The computer-readable storage medium stores a computer program, and when the computer program runs on one or more processors, the method described in any one of the first aspect, the possible implementations of the first aspect, the second aspect, or the possible implementations of the second aspect is performed.

According to a ninth aspect, an embodiment of this application discloses a chip system. The chip system includes at least one processor, a memory, and an interface circuit. The interface circuit is configured to provide information input/output for the at least one processor, and the memory stores a computer program. When the computer program runs on one or more processors, the method described in any one of the first aspect, the possible implementations of the first aspect, the second aspect, or the possible implementations of the second aspect is performed.

According to a tenth aspect, an embodiment of this application discloses a vehicle. The vehicle includes a first node (for example, a vehicle cockpit domain controller CDC). The first node is the apparatus described in any one of the third aspect or the possible implementations of the third aspect or any one of the fifth aspect or the possible implementations of the fifth aspect. Further, the vehicle includes a second node (for example, at least one of modules such as a camera, a screen, a microphone, a speaker, radar, an electronic key, and a passive entry passive start system controller). The second node is the apparatus described in any one of the fourth aspect or the possible implementations of the fourth aspect or any one of the sixth aspect or the possible implementations of the sixth aspect.

### BRIEF DESCRIPTION OF DRAWINGS

The following describes accompanying drawings used in embodiments of this application.
FIG. 1 is a schematic principle diagram of a DH algorithm according to an embodiment of this application;
FIG. 2 is a schematic diagram of a password derivation algorithm according to an embodiment of this application;
FIG. 3 is a schematic architectural diagram of a communications system according to an embodiment of this application;
FIG. 4 is a schematic diagram of an application scenario of a key obtaining method according to an embodiment of this application;
FIG. 5 is a schematic flowchart of a key obtaining method according to an embodiment of this application;
FIG. 6 is a schematic diagram of a first PSK obtaining method according to an embodiment of this application;
FIG. 7 is a schematic diagram of another first PSK obtaining method according to an embodiment of this application;
FIG. 8 is a schematic flowchart of another key obtaining method according to an embodiment of this application;
FIG. 9 is a schematic flowchart of another key obtaining method according to an embodiment of this application;
FIG. 10 is a schematic flowchart of another key obtaining method according to an embodiment of this application;
FIG. 11 is a schematic flowchart of another key obtaining method according to an embodiment of this application;
FIG. 12 is a schematic flowchart of another key obtaining method according to an embodiment of this application;
FIG. 13A and FIG. 13B are a schematic flowchart of another key obtaining method according to an embodiment of this application;
FIG. 14 is a schematic structural diagram of an apparatus according to an embodiment of this application;
FIG. 15 is a schematic structural diagram of another apparatus according to an embodiment of this application;
FIG. 16 is a schematic structural diagram of another apparatus according to an embodiment of this application;
FIG. 17 is a schematic structural diagram of another apparatus according to an embodiment of this application;
FIG. 18 is a schematic architectural diagram of a key obtaining system according to an embodiment of this application; and
FIG. 19 is a schematic architectural diagram of another key obtaining system according to an embodiment of this application.

### DESCRIPTION OF EMBODIMENTS

The following describes the embodiments of this application with reference to the accompanying drawings in the embodiments of this application. It should be noted that in this application, the word such as "example" or "for example" is used to represent giving an example, an illustration, or a description. Any embodiment or design solution described by using "example" or "for example" in this application shall not be construed as being more preferred or more advantageous than another embodiment or design solution. Exactly, use of the word such as "example" or "for example" is intended to present a related concept in a specific manner.

The following first briefly describes related technologies and technical terms in this application for ease of understanding.

### 1. Node (node)

A node is an electronic device with a data receiving and sending capability. For example, the node may be a vehicle cockpit domain (Cockpit Domain) device, or a module (one or more of modules such as a cockpit domain controller (cockpit domain controller, CDC), a camera, a screen, a microphone, a speaker, an electronic key, and a passive entry passive start system controller) in the vehicle cockpit domain device. In a specific implementation process, the node may be a data transit device, such as a router, a repeater, a bridge, or a switch; or may be a terminal device, such as various types of user equipment (user equipment, UE), a mobile phone (mobile phone), a tablet computer (pad), a desktop computer, a headset, or a speaker; or may include a machine intelligent device, such as a self-driving (self-driving) device, a transportation safety (transportation safety) device, a virtual reality (virtual reality, VR) terminal device, an augmented reality (augmented reality, AR) terminal device, a machine type communication (machine type communication, MTC) device, an industrial control (industrial control) device, a telemedicine (remote medical) device, a smart grid (smart grid) device, or a smart city (smart city) device; or may include a wearable device (such as a smartwatch, a smart band, or a pedometer) or the like. In some technical scenarios, a name of a device having a similar data receiving and sending capability may not be "node". However, for ease of description, electronic devices having data receiving and sending capabilities are collectively referred to as nodes in the embodiments of this application.

### 2. Key agreement

Key agreement is a process in which communication parties exchange some parameters to obtain a key through agreement. A cryptographic algorithm used for key agreement is referred to as a key agreement algorithm, and may also be referred to as a key exchange algorithm. Common key agreement algorithms include the Diffie-Hellman (Diffie-Hellman, DH) algorithm, the elliptic-curve cryptography (elliptic curve cryptosystems, ECC)-based Diffie-Hellman (ECDH) algorithm, the Oakley (Oakley) algorithm, Chinese cryptographic algorithms (such as SM1, SM2, SM3, and SM4), and the like.

The DH algorithm is used as an example. Two nodes use a same prime number p whose value is relatively large and a random number g, and respectively generate a random number a and a random number b. A second node sends, to a first node, a value generated through g^{a} mod P, and the first node sends, to the second node, a value generated through g^{b} mod P. Then, the second node performs an a^{th} power operation on a received result, and the first node performs an a^{th} power operation on a received result. Finally, a password is formed, and key exchange is completed. Herein, mod represents a modulo operation.

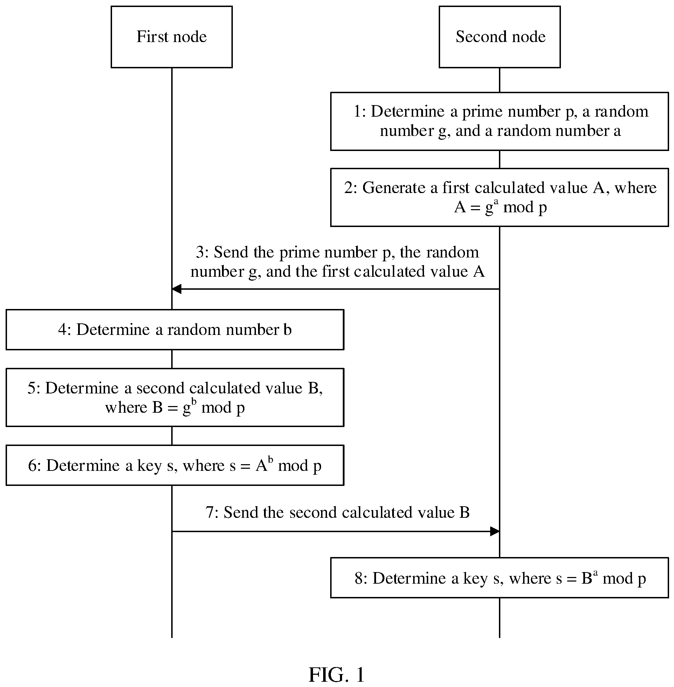

FIG. 1 is a schematic principle diagram of the DH algorithm according to an embodiment of this application. Steps of key exchange in the DH algorithm are as follows:
Step 1: The second node determines the prime number p, the random number g, and the random number a.
Step 2: The second node generates a first calculated value A, where A = g^{a} mod p.
Step 3: The second node sends the prime number p, the random number g, and the first calculated value A to the first node.
Step 4: The first node determines the random number b.
Step 5: The first node obtains a second calculated value B through calculation, where B = g^{b} mod p.
Step 6: The first node determines a key s, where s = A^{b} mod p.
Step 7: The first node sends the second calculated value B to the second node.
Step 8: The second node determines a key s, where s = B^{a} mod p.

Because s = A^{b} mod p = (g^{a} mod p)^{b} mod p = g^{ab} mod p = (g^{b} mod p)^{a} mod p = B^{a} mod p, keys s obtained by the first node and the second node through calculation are the same. Because the key s is not transmitted over a network, and values of the prime number p, the random number g, the random number a, and the random number b that are selected in an actual algorithm are very large, it is difficult to derive the key s based on the prime number p, the random number g, the first calculated value A, and the second calculated value B that are transmitted over the network. Therefore, the key obtained by using the DH algorithm is secure.

### 3. Key derivation

Key derivation is to derive one or more keys from one secret value, and an algorithm used to derive a key is referred to as a key derivation function (key derivation function, KDF), and is also referred to as a key derivation algorithm. For example, a new key DK derived from a secret value Key may be represented as follows: DK = KDF(Key, fresh). Herein, fresh is a fresh parameter (fresh parameter), and is used to derive a new key.

Common key derivation algorithms include a password-based key derivation function (password-based key derivation function, PBKDF), a scrypt (scrypt) algorithm, and the like. PBKDF algorithms further include a first-generation PBKDF1 and a second-generation PBKDF2. Optionally, for some KDF algorithms, in a key derivation process, a hash algorithm is used to perform hash change on an entered secret value. Therefore, in a KDF function, an algorithm identifier may be further received as an input, to indicate a specific hash algorithm to be used.

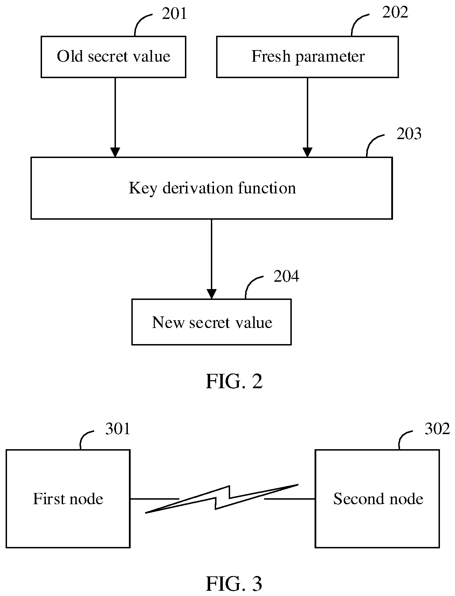

The PBKDF2 is used as an example. A new secret value DK derived from an old secret value Key in the PBKDF2 algorithm may be represented as follows: DK = PBKDF2(PRF, Key, salt, c, dk_len), where the parameter PRF is an identifier indicating a specific hash algorithm to be used, salt is randomly generated salt and may be considered as a fresh parameter, c is a quantity of iteration times and may be a default value, and dk_len is a length of the generated new secret value DK, may also be referred to as a block size, and may be a default value. FIG. 2 is a schematic diagram of a key derivation algorithm according to an embodiment of this application. A new secret value 204 may be obtained based on an old secret value 201 and a fresh parameter 202 by using a key derivation function 203.

### 4. Fresh parameter

A fresh parameter is a parameter used to generate a key, may also be referred to as a fresh degree or a freshness parameter, and may include at least one of a nonce (number once, NONCE), a count (counter), a sequence number (number), and the like. The NONCE is a random number that is used only once (or non-repeatedly). Fresh parameters generated at different moments are usually different. In other words, a specific value of the fresh parameter changes each time the fresh parameter is generated. Therefore, a fresh parameter used to generate a key this time is different from a fresh parameter used to generate a key last time. This can improve security of the generated key.

For example, the fresh parameter may be a random number obtained by a node by using a random number generator (random number generator).

For another example, the fresh parameter includes a packet data convergence protocol count (packet data convergence protocol count, PDCP COUNT), and the PDCP COUNT may further include an uplink PDCP COUNT and a downlink PDCP COUNT. The uplink PDCP COUNT is increased by 1 each time a second node sends an uplink PDCP data packet, and the downlink PDCP COUNT is increased by 1 each time a first node sends a downlink PDCP data packet. Because the PDCP COUNT changes all the time, a key generated each time by using the PDCP COUNT is different from a key generated last time by using the PDCP COUNT.

The following describes a system architecture and a service scenario in the embodiments of this application. It should be noted that the system architecture and the service scenario described in this application are intended to describe the technical solutions in this application more clearly, but constitute no limitation on the technical solutions provided in this application. A person of ordinary skill in the art can learn that the technical solutions provided in this application are also applicable to a similar technical problem as the system architecture evolves and a new service scenario emerges.

FIG. 3 is a schematic architectural diagram of a communications system according to an embodiment of this application. The communications system includes a first node 301 and a second node 302. The second node 302 may request to access the first node 301. After the access succeeds, the first node 301 may communicate with the second node 302 via a data link. Optionally, the data link used for communication between the first node 301 and the second node 302 may include various types of connection media, for example, a wireless link, which may be specifically Wi-Fi, Bluetooth, Zigbee (zigbee), another wireless link (such as a universal wireless short-range transmission technology), or the like. For another example, the data link is a wired link, such as a fiber link.

Optionally, the first node 301 may be a communication initiator, and may be referred to as a primary node or an access point (access point, AP). Correspondingly, the second node 302 is a communication receiver, and may be referred to as a secondary node.

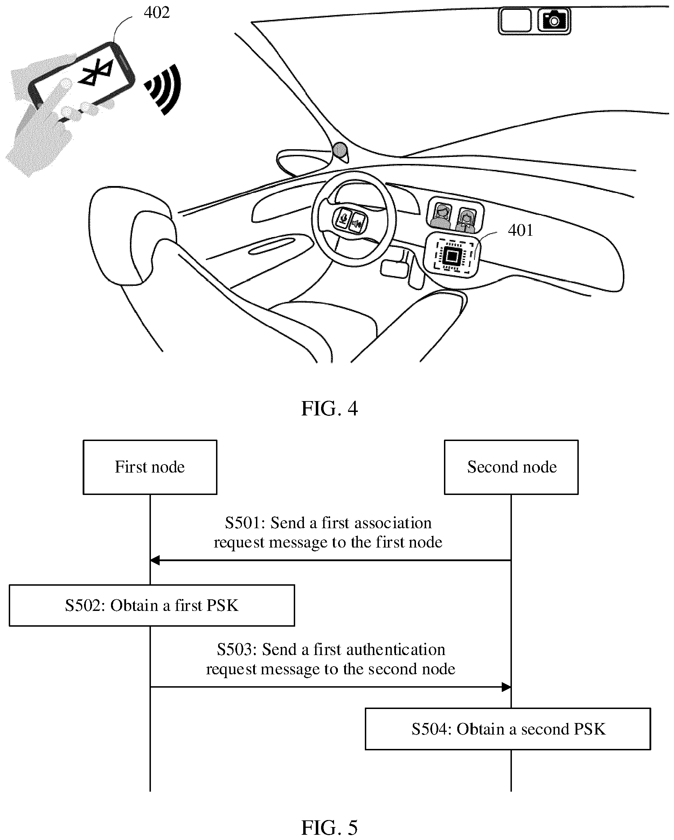

The first node 301 and the second node 302 may be devices of a same type, or may be devices of different types. For example, FIG. 4 is a schematic diagram of an application scenario of a key obtaining method according to an embodiment of this application. A cockpit domain controller (cockpit domain controller, CDC) 401 is a control center in a smart cockpit device, and may be considered as the first node 301. A smartphone 402 is a device with a data receiving and sending capability, and may be considered as the second node 302. The CDC 401 may be accessed through Bluetooth. The smartphone 402 supports a Bluetooth function, and therefore requests to access the CDC 401. In an existing Bluetooth technology, a pairing mode or a just work (just work) mode is usually used for connection. In the just work mode, a Bluetooth connection can be established by directly tapping a peer end identifier. Therefore, after the CDC 401 enables Bluetooth, a Bluetooth name of the CDC 401 may be directly tapped on the smartphone 402 to access the CDC 401. In this case, if an attacker counterfeits an identity of the smartphone 402 to connect to the CDC 401, it is difficult for the CDC 401 to identify the attacker. As a result, the CDC 401 communicates with the attacker. This poses a threat to privacy and security of the CDC 401. Similarly, in some other scenarios, it is also usually difficult for a node to avoid a connection to an unknown attacker. Therefore, communication security is affected. To resolve this problem, the embodiments of this application provide the following methods.

FIG. 5 is a schematic flowchart of a key obtaining method according to an embodiment of this application. The key obtaining method may be implemented based on the architecture shown in FIG. 3. The method includes at least the following steps.

Step S501: A second node sends a first association request message to a first node.

Specifically, the first association request message includes a fresh parameter (fresh parameter). For ease of description, in the embodiments of this application, the fresh parameter in the first association request message is referred to as a first fresh parameter. The fresh parameter may include at least one of a nonce (number once, NONCE), a count (counter), a sequence number (number), and the like, and fresh parameters at different moments are usually different.

The second node may send the first association request message to the first node through a wireless link (for example, one of Wi-Fi, Bluetooth, Zigbee, or another short-range wireless link) or a wired link (for example, an optical fiber). Correspondingly, the first node receives the first association request message from the second node.

Optionally, the first node may broadcast a message, and the second node may receive the message broadcast by the first node, and then send the first association request message to the first node. Specifically, the message broadcast by the first node may carry at least one of an identity of the first node, description information of the first node, indication information used to indicate another node to perform access, and the like. After receiving the broadcast message, the second node sends the first association request message to the first node to request to associate with the first node.

Step S502: The first node obtains a first pre-shared key PSK.

Specifically, a PSK is a secret value shared by the first node and the second node. The PSK may be generated based on a fresh parameter from the second node and a fresh parameter from the first node, or may be preconfigured in the first node and the second node. For ease of description, in the embodiments of this application, a PSK that is between the first node and the second node and that is stored in the first node is referred to as the first PSK, a fresh parameter that is from the second node and that is used to generate the first PSK is referred to as a second fresh parameter, and a fresh parameter that is from the first node and that is used to generate the first PSK is referred to as a third fresh parameter. Optionally, the second fresh parameter may be the first fresh parameter in the first association request message, or may be a fresh parameter that is from the second node before the first association request message.

The first PSK is a PSK corresponding to an identity of the second node. The identity of the second node is also referred to as a device identifier of the second node, and the identity of the second node may be an ID, a media access control (media access control, MAC) address, a domain name, a domain address, or another user-defined identifier of the second node. The ID of the second node may be a fixed ID, or may be a temporary ID. For example, before the first node receives the first association request message, the temporary ID has been allocated. Therefore, the second node may be connected to the first node by using the temporary ID that has been allocated.

Before obtaining the first PSK, the first node may first obtain the identity of the second node. There are at least the following two solutions in which the first node obtains the identity of the second node.

Solution 1: The first association request message includes the identity of the second node. Specifically, the second node may use the first association request message to carry the identity of the second node. The first node receives the first association request message from the second node, so as to obtain the identity of the second node.

Solution 2: The identity of the second node is obtained by using another message. Specifically, the second node may notify the first node of the identity of the second node by using the another message. For example, when the first node uses a first password as an access password, before sending the first association request message, the second node first accesses the first node by using the first password that is entered. The second node may send the first password and the identity of the second node to the first node. Correspondingly, the first node obtains the identity of the second node. The access password is a password that needs to be entered when another node requests to access the first node. For example, a password of Wi-Fi needs to be entered when the Wi-Fi is to be connected.

That the first node obtains the first PSK includes at least the following three cases.

Case 1: The first node obtains the first PSK based on a correspondence between the first PSK and the second node. The correspondence may be preconfigured in the first node, or may be stored after the first PSK is generated. It should be noted herein that when the correspondence is preconfigured, the first PSK preconfigured in the first node is the same as a PSK preconfigured in the second node; or when the correspondence is stored after the PSK is generated, the first node and the second node use a same PSK generation method and a same parameter.

A form in which the first node stores the correspondence may be one or more of a correspondence set, a data table, a database, and the like. This is not limited in this application. For example, Table 1 is a possible set of correspondences between the first PSK and the identity of the second node according to an embodiment of this application. The correspondence set includes identities of a plurality of nodes, corresponding PSKs, and PSK types. For example, for a node whose identity is "ID1", a temporary ID of the node is "ID1.1", a PSK corresponding to the node is "PSK1", and a type of the PSK is "preconfigured". For another example, for a node whose identity is "ID2", a temporary ID of the node is "ID2.1", a PSK corresponding to the node is "PSK2", and a type of the PSK is "generated". To be specific, the PSK2 is generated based on the second fresh parameter from the second node and the third fresh parameter from the first node. For ease of description, a correspondence set stored in the first node is referred to as a first correspondence set in this embodiment of this application.

**Table 1: Correspondence between the first PSK and the identity of the second node**

| Identity | PSK | Type |
|---|---|---|
| ID1 (temporary ID1.1) | PSK1 | Preconfigured |
| ID2 (temporary ID2.1) | PSK2 | Generated |
| ID3 (temporary ID3.1) | PSK3 | Generated |

It may be understood that, the correspondence between the first PSK and the identity of the second node exists in the first node. This may indicate that the second node has been associated with the first node before or the PSK corresponding to the identity of the second node is preconfigured in the first node. Therefore, the first node may obtain the first PSK based on the correspondence.

Case 2: The first node generates the first PSK based on the first fresh parameter and a fourth fresh parameter from the first node, where the fourth fresh parameter is a fresh parameter determined by the first node. Optionally, when the first node and the second node request association for the first time or when the first node deletes a correspondence, the first PSK corresponding to the identity of the second node does not exist in the first node. Therefore, the first node may generate the new first PSK based on the first fresh parameter and the fourth fresh parameter, to verify the identity of the second node. Further, the first node may determine the first PSK based on the first fresh parameter and the fourth fresh parameter in the following implementations.

Implementation 1: The first node generates the first PSK based on the first fresh parameter and the fourth fresh parameter by using a KDF. For example, the first fresh parameter is NONCEe and the fourth fresh parameter is NONCEa. The generated first PSK satisfies: first PSK = KDF(NONCEe, NONCEa). It should be noted that in the embodiments of this application, a parameter sequence in the formula is merely an example for description, and there may be another sequence in actual processing. The parameter sequence is not limited in this application.

Implementation 2: The first node uses a first password as an access password (password). Therefore, the first node may generate the first PSK based on the first fresh parameter, the fourth fresh parameter, and the first password. For example, the first node generates the first PSK based on the first fresh parameter NONCEe, the fourth fresh parameter NONCEa, and the first password password1 by using a KDF, that is, first PSK = KDF(NONCEe, NONCEa, password1).

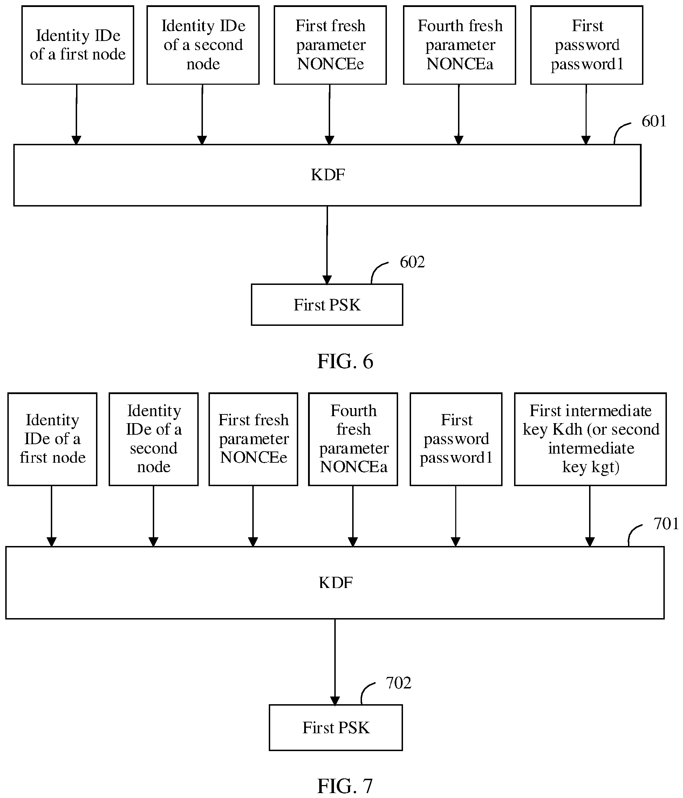

Implementation 3: The first node uses a first password as an access password (password). Therefore, the first node may generate the first PSK based on the identity of the first node, the identity of the second node, the first fresh parameter, the fourth fresh parameter, and the first password. For example, FIG. 6 is a schematic diagram of a possible first PSK generation method according to an embodiment of this application. The first node generates the first PSK 602 based on the identity IDa of the first node, the identity IDe of the second node, the first fresh parameter NONCEe, the fourth fresh parameter NONCEa, and the first password password1 by using a KDF 601, that is, first PSK 602 = KDF 601(IDa, IDe, NONCEe, NONCEa, password1).

Case 3: The first association request message further includes a first key agreement algorithm parameter, and the first node generates the first PSK based on the first fresh parameter, the fourth fresh parameter, and the first key agreement algorithm parameter. The first key agreement algorithm parameter is a parameter of a key agreement algorithm. Optionally, the first node may broadcast information about one or more key agreement algorithms supported by the first node. After determining the one or more key agreement algorithms, the second node uses the first association request message to carry the first key agreement algorithm parameter based on a first key agreement algorithm (optionally, identifier information of the first key agreement algorithm may be further carried). The first node generates the first PSK based on the first key agreement algorithm, the first fresh parameter, the fourth fresh parameter, and the first key agreement algorithm parameter. Further, the first node may generate the first PSK based on the first fresh parameter, the fourth fresh parameter, and the first key agreement algorithm parameter in the following implementations.

Implementation 4: The first node generates the first PSK based on the first fresh parameter, the fourth fresh parameter, and the first key agreement algorithm parameter by using a KDF. For example, when the first fresh parameter is NONCEe, the fourth fresh parameter is NONCEa, and the first key agreement algorithm parameter is KEe, the generated first PSK is as follows: PSK = KDF(NONCEe, NONCEa, KEe).

The first key agreement algorithm parameter KEe is an algorithm parameter generated by the second node based on the used key agreement algorithm in a key agreement process. For example, the used key agreement algorithm is the DH algorithm. The first node and the second node use a same prime number p whose value is relatively large and a same random number g. The second node sends, to the first node, a value A generated through g^{a} mod P (that is, A = g^{a} mod p, where the value A may be considered as the first key agreement algorithm parameter KEe, and a is a private key of the second node), and the first node may determine a secret value based on the value A and the DH algorithm. Specifically, the first node may determine a random number b (that is, a private key of the first node, where for ease of description, the private key of the first node is referred to as a third key agreement algorithm parameter in the embodiments of this application). In the DH algorithm, the first node may obtain the secret value of key agreement by performing a b^{th} power operation on the received value A. In other words, the secret value obtained through agreement is A^{b} mod p. The secret value may be used to participate in generating the first PSK. Therefore, based on the DH algorithm, the first node generates the first PSK based on the first fresh parameter NONCEe, the fourth fresh parameter NONCEa, a first password password1, and the first key agreement algorithm parameter A by using the KDF, that is, first PSK = KDF(NONCEe, NONCEa, password1, A^{b} mod p).

Further, the first node sends, to the second node, a value B generated through g^{b} mod P (that is, B = g^{b} mod p, where the value B may be considered as a second key agreement algorithm parameter KEa). The second node may obtain a secret value of key agreement by performing an a^{th} power operation on the received value B. In other words, the secret value obtained through agreement is A^{b} mod p. Herein, a is the private key of the second node. For ease of description, the private key of the second node is referred to as a fourth key agreement algorithm parameter. Because A^{b} mod p = (g^{a} mod p)^{b} mod p = g^{ab} mod p = (g^{b} mod p)^{a} mod p = B^{a} mod p, the secret values obtained by the first node and the second node through key agreement are the same. In a key agreement process, an attacker cannot deduce a secret value by using only algorithm parameters transmitted by the first node and the second node. For example, in the DH algorithm, because values of the prime number p, the random number g, the random number a, and the random number b that are selected in an actual algorithm are very large, it is difficult to derive the secret value based on the prime number p, the random number g, the first key agreement algorithm parameter A, and the second key agreement algorithm parameter B that are transmitted over a network. Therefore, the secret value obtained by using the DH algorithm is secure.

Implementation 5: The first node uses a first password as an access password (password). Therefore, the first node may generate the first PSK based on the first fresh parameter, the fourth fresh parameter, and the first password. For example, the first node generates the first PSK based on the first fresh parameter NONCEe, the fourth fresh parameter NONCEa, the first password password1, and the first key agreement algorithm parameter KEe by using a KDF, that is, first PSK = KDF(NONCEe, NONCEa, password1, KEe).

Implementation 6: The first node may generate the first PSK based on the identity of the first node, the identity of the second node, the first fresh parameter, the fourth fresh parameter, a first password, and the first key agreement algorithm parameter. For example, the first node generates the first PSK based on the identity IDa of the first node, the identity IDe of the second node, the first fresh parameter NONCEe, the fourth fresh parameter NONCEa, the first password password1, and the first key agreement algorithm parameter KEe by using a KDF, that is, first PSK = KDF(IDa, IDe, NONCEe, NONCEa, password1, KEe).

Implementation 7: The first node may generate the first PSK based on the first fresh parameter, the fourth fresh parameter, a first password, and an intermediate key. The intermediate key is generated based on the first fresh parameter, the fourth fresh parameter, and the first key agreement algorithm parameter. For example, the first node first generates the intermediate key Kmid based on the first fresh parameter NONCEe, the fourth fresh parameter NONCEa, and the first key agreement algorithm parameter KEe, that is, Kmid = F(NONCEe, NONCEa, KEe), where F is a cryptographic algorithm for generating the intermediate key. Then, the first node generates the first PSK based on the first fresh parameter NONCEe, the fourth fresh parameter NONCEa, the first password password1, and the intermediate key Kmid, that is, first PSK = KDF(NONCEe, NONCEa, password1, Kmid). Certainly, in actual processing, the foregoing process may be alternatively completed by using one step, and the intermediate key Kmid is only an intermediate result. In other words, a manner for generating the first PSK satisfies: first PSK = KDF(NONCEe, NONCEa, password1, F(NONCEe, NONCEa, KEe)).

Implementation 8: The first node generates the first PSK based on the identity of the first node, the identity of the second node, the first fresh parameter, the fourth fresh parameter, a first password, and a first intermediate key (or a second intermediate key). Specifically, the first node first determines a third key agreement algorithm parameter (that is, a private key of the first node), and then determines the first intermediate key based on the first key agreement algorithm, the first key agreement algorithm parameter, and the third key agreement algorithm parameter.

For example, the foregoing DH algorithm is used as an example. The first intermediate key Kdh generated by the first node based on the first key agreement algorithm parameter A and the third key agreement algorithm parameter b satisfies: Kdh = A^{b} mod p. Further, the second intermediate key may be further determined based on the first fresh parameter NONCEe, the fourth fresh parameter NONCEa, and the first intermediate key Kdh. In other words, the second intermediate key Kgt satisfies: Kgt = KDF(NONCEe, NONCEa, Kdh). The first node generates the first PSK based on the identity of the first node, the identity of the second node, the first fresh parameter, the fourth fresh parameter, the first password, and the first intermediate key (or the second intermediate key). For example, the first node generates the first PSK based on the identity IDa of the first node, the identity IDe of the second node, the first fresh parameter NONCEe, the fourth fresh parameter NONCEa, the first password password1, and the first intermediate key Kdh (or the second intermediate key kgt) by using a KDF, that is, PSK = KDF(IDa, IDe, NONCEe, NONCEa, password1, Kdh (or kgt)). FIG. 7 is a schematic diagram of another possible first PSK generation method according to an embodiment of this application. The first node generates the first PSK 702 based on the identity IDa of the first node, the identity IDe of the second node 90, the first fresh parameter NONCEe, the fourth fresh parameter NONCEa, the first password password1, and the first intermediate key Kdh (or the second intermediate key kgt) by using a KDF 701.

It should be noted that, to describe the solution more clearly herein, how to obtain the first PSK is explained in a manner of a plurality of steps. In actual processing, the foregoing process may be alternatively completed by using one step, and the first intermediate key Kdh or the second intermediate key Kgt is only an intermediate result. In other words, a manner for determining the first PSK satisfies: first PSK = KDF(IDa, IDe, NONCEe, NONCEa, password1, KDF(NONCEe, NONCEa, Kdh)), or a manner for determining the first PSK satisfies: first PSK = KDF(IDa, IDe, NONCEe, NONCEa, password1, KDF(NONCEe, NONCEa, A^{b} mod p)). Further, optionally, the first node may deduce (or derive) another intermediate key based on the first intermediate key Kdh or the second intermediate key Kgt, and then participate in generating the first PSK based on the derived another intermediate key.

Optionally, before generating the first PSK, the first node obtains first acknowledgement indication information, where the first acknowledgement indication information indicates that association between the first node and the second node is allowed. Then, the first node may generate the first PSK. Specifically, the first acknowledgement indication information is indication information obtained based on an acknowledgement operation entered by a user, and the acknowledgement operation may be an acknowledgement for output prompt information. For example, the first node may output first prompt information to remind the user that a new node is to access. After receiving an acknowledgement operation of the user and obtaining the first acknowledgement indication information, the first node generates the first PSK in the manner described in Case 2 or Case 3. In this way, when an attacker uses an identity of the attacker to connect to the first node, because a PSK corresponding to the identity of the attacker does not exist in the first node, the first node may remind the user that a new node requests association, and the user verifies an identity of the new node. Therefore, association between the first node and an untrusted node can be avoided, and communication security of the first node can be ensured.

Optionally, the first association request message may further include indication information indicating whether a PSK exists, to indicate whether a second PSK corresponding to the identity of the first node exists in the second node. For example, the first association request message includes a first field, and when the first field is "0", it indicates that the second PSK corresponding to the identity of the first node does not exist in the second node, so that the first node may generate the first PSK by using the method described in Case 2 or Case 3, instead of obtaining the first PSK by using a pre-stored correspondence. This avoids a failure in subsequently verifying identity authentication information of a peer party.

It can be learned from the foregoing that the first PSK corresponds to the identity of the second node, and therefore may be used to verify the identity of the second node. Specifically, a PSK is a secret value shared by the first node and the second node. In other words, the first PSK in the first node and the second PSK in the second node usually have a same value. Therefore, the second node may generate identity authentication information based on the second PSK, encrypt message content by using the second PSK (or a key derived based on the second PSK), or the like, so that the first node verifies the identity of the second node. For example, the second node generates identity authentication information based on the second PSK, and the first node may verify the identity authentication information of the second node by using the first PSK. For another example, the second node performs encryption or integrity protection on message content by using the second PSK (or a key derived based on the second PSK), and the first node may obtain the message content from the second node by using the first PSK (or a key derived based on the first PSK), so as to verify the identity of the second node.

Optionally, after generating the first PSK, the first node may store a correspondence between the first PSK and the identity of the second node. When receiving an association request message from the second node next time, the first node may determine the first PSK based on the correspondence without regenerating the first PSK. Further, optionally, when a password for accessing the first node is the first password or the first PSK is generated with participation of the first password, if the first password is updated, the first node may delete the correspondence between the first PSK and the identity of the second node.

In the method shown in FIG. 5, a PSK is a secret value shared by the first node and the second node. The first PSK in the first node corresponds to the identity of the second node, and therefore can be used to verify the identity of the second node. This prevents an untrusted node from accessing the first node, and improves communication security.

Optionally, this embodiment of this application may further include step S503, or may further include step S503 and step S504. Step S503 and step S504 are specifically as follows:
Step S503: The first node sends a first authentication request message to the second node.

Specifically, the first authentication request message includes the foregoing fourth fresh parameter. Optionally, the first authentication request message may further include a message authentication code (message authentication code, MAC). The MAC is a message authentication code generated based on a symmetric key and an integrity protection algorithm, and is used to protect integrity of the first authentication request message.

The first node sends the first authentication request message to the second node, and correspondingly, the second node receives the first authentication request message from the first node.

Optionally, the first authentication request message may further include update indication information. Specifically, when the first node generates the first PSK in the manner in Case 2 or Case 3, the first node may send the update indication information to the second node, to indicate a PSK update. Further, after generating a new PSK, the first node may remind, by using the update indication information, the second node to update the second PSK, to prevent the second node from using the previous old PSK to verify identity authentication information, so as to avoid a failure in verifying the identity authentication information by the second node and avoid affecting user experience. Further, optionally, the update indication information may be a character or a character string in the first authentication request message. For example, the first authentication request message includes an "update" field. "1" is used in the field to indicate that the second node may generate the second PSK in a manner in Method 2 or Method 3. "0" is used in the field to indicate "meaningless".

Step S504: The second node obtains the second PSK.

Specifically, a PSK is a secret value shared by the first node and the second node. The PSK may be generated based on a fresh parameter from the second node and a fresh parameter from the first node, or may be preconfigured in the first node and the second node. For ease of description, in the embodiments of this application, a pre-shared key that is between the second node and the first node and that exists in the second node is referred to as the second PSK, a fresh parameter that is from the second node and that is used to generate the second PSK is referred to as a second fresh parameter, and a fresh parameter that is from the first node and that is used to generate the first PSK is referred to as a third fresh parameter. The fresh parameter from the second node may be the first fresh parameter in the first association request message, or may be a fresh parameter that is from the second node before the first association request message. Likewise, the fresh parameter from the first node may be the fourth fresh parameter in the first authentication request message, or may be a fresh parameter that is from the second node before the first authentication request message.

The second PSK corresponds to the identity of the first node. The identity of the first node is also referred to as a device identifier of the first node, and the identity of the first node may be an ID, a media access control (media access control, MAC) address, a domain name, a domain address, or another user-defined identifier of the first node.

Before obtaining the second PSK, the second node may first obtain the identity of the first node. There are at least the following three solutions in which the second node obtains the identity of the first node.

Solution 1: The identity of the first node is obtained by using a broadcast message of the first node. Specifically, the first node uses the broadcast message to carry the identity of the first node, and the second node may obtain the identity of the first node by receiving the broadcast message of the first node.

Solution 2: The first authentication request message further includes the identity of the first node. Specifically, the first node may use the first authentication request message to carry the identity of the first node. The second node receives the first authentication request message from the first node, so as to obtain the identity of the first node.

Solution 3: The second node receives the identity of the first node that is entered. Specifically, the user requests, by entering the identity of the first node, to access the first node. The second node receives the identity of the first node that is entered by the user, so that the second node obtains the identity of the first node.

There are at least the following three methods in which the second node obtains the second PSK.

Method 1: The second node obtains the second PSK based on a correspondence between the second PSK and the identity of the first node. The correspondence may be preconfigured in the second node, or may be stored after the second PSK is generated. A form in which the second node stores the correspondence may be one or more of a correspondence set, a data table, a database, and the like. This is not limited in this application. For example, Table 2 is a possible set of correspondences between the second PSK and the identity of the first node according to an embodiment of this application. The correspondence set includes identities of a plurality of nodes, corresponding PSKs, and PSK types. For example, for a node whose identity is "ID4", a PSK corresponding to the node is "PSK4", and a type of the PSK is "preconfigured". For another example, for a node whose identity is "ID5", a PSK corresponding to the node is "PSK5", and a type of the PSK is "generated". To be specific, the PSK5 is generated based on the second fresh parameter from the second node and the third fresh parameter from the first node. For ease of description, a correspondence set stored in the second node is referred to as a second correspondence set in this embodiment of this application.

**Table 2: Correspondence between the second PSK and the identity of the first node**

| Identity | PSK | Type |
|---|---|---|
| ID4 | PSK4 | Configured key |
| ID5 | PSK5 | Generated |
| ID6 | PSK6 | Generated |

It may be understood that, the correspondence between the second PSK and the identity of the first node exists in the second node. This may indicate that the first node has been associated with the second node before or the second PSK corresponding to the identity of the first node is preconfigured in the second node. Therefore, the second node may obtain the second PSK based on the correspondence.

Method 2: The second node generates the second PSK based on the first fresh parameter and the fourth fresh parameter, where the second PSK is used to verify the identity of the first node. For example, when the second node is associated with the first node for the first time or when the second node deletes a correspondence, the second PSK corresponding to the identity of the first node does not exist in the second node. Therefore, the second node may generate the new second PSK based on the first fresh parameter and the fourth fresh parameter, to verify the identity of the first node. Further, the second node may determine the second PSK based on the first fresh parameter and the fourth fresh parameter from the first node in the following implementations.

Implementation 9: The second node generates the second PSK based on the first fresh parameter and the fourth fresh parameter by using a KDF. For example, the first fresh parameter is NONCEe and the fourth fresh parameter is NONCEa. The generated second PSK satisfies: second PSK = KDF(NONCEe, NONCEa).

Implementation 10: The second node accesses the first node by using the first password that is entered. Therefore, the second node may generate the first PSK based on the first fresh parameter, the fourth fresh parameter, and the first password. For example, the second node generates the second PSK based on the first fresh parameter NONCEe, the fourth fresh parameter NONCEa, and the first password password1 by using a KDF, that is, second PSK = KDF(NONCEe, NONCEa, password1).

Implementation 11: The second node accesses the first node by using the first password that is entered. Therefore, the second node may generate the second PSK based on the identity of the first node, the identity of the second node, the first fresh parameter, the fourth fresh parameter, and the first password. For example, the second node generates the second PSK based on the identity IDa of the first node, the identity IDe of the second node, the first fresh parameter NONCEe, the fourth fresh parameter NONCEa, and the first password password1 by using a KDF, that is, second PSK = KDF(Ida, Ide, NONCEe, NONCEa, password1).

Method 3: The first authentication request message includes a second key agreement algorithm parameter, and the second node generates the second PSK based on the first fresh parameter, the fourth fresh parameter, and the second key agreement algorithm parameter. Further, the second node may generate the second PSK based on the first fresh parameter, the fourth fresh parameter, and the second key agreement algorithm parameter in the following implementations.

Implementation 12: The second node generates the second PSK based on the first fresh parameter, the fourth fresh parameter, and the second key agreement algorithm parameter by using a KDF. For example, the first fresh parameter is NONCEe, the fourth fresh parameter is NONCEa, and the second key agreement algorithm parameter is KEa. The second PSK generated by using the KDF is as follows: second PSK = KDF(NONCEe, NONCEa, KEa).

The second key agreement algorithm parameter KEa is an algorithm parameter generated in a key agreement process. The DH algorithm is used as an example. The first node sends, to the second node, a value B generated through g^{b} mod P (that is, B = g^{b} mod p, where the value B may be considered as the second key agreement algorithm parameter KEa). The second node provides a random number a (the random number a is a private key of the second node, and is referred to as a fourth key agreement algorithm parameter for ease of description). In the DH algorithm, the second node may obtain a secret value of key agreement by performing an a^{th} power operation on the received value B. In other words, the secret value obtained through agreement is B^{a} mod p. The secret value may be used to participate in generating the second PSK. The second node generates the second PSK based on the first fresh parameter NONCEe, the fourth fresh parameter NONCEa, the first password password1, the value B, and the random number a by using the KDF, that is, second PSK = KDF(NONCEe, NONCEa, password1, B^{a} mod p).

Further, the second node may use the first association request message or another message to carry the first key agreement algorithm parameter A (namely, KEe), and the first key agreement algorithm parameter is generated based on the fourth key agreement algorithm parameter a. The first node may obtain a secret value of key agreement by performing a b^{th} power operation on the received first key agreement algorithm parameter A. In other words, the secret value obtained through agreement is A^{b} mod p, where b is a private key of the first node. Because A^{b} mod p = (g^{a} mod p)^{b} mod p = g^{ab} mod p = (g^{b} mod p)^{a} mod p = B^{a} mod p, the secret values obtained by the first node and the second node through key agreement are the same. Therefore, the generated second PSK and the first PSK generated in Implementation 4 have a same value.

Implementation 13: The second node accesses the first node by using the first password that is entered. The second node may generate the second PSK based on the first fresh parameter, the fourth fresh parameter, and the first password. For example, the second node generates the second PSK based on the first fresh parameter NONCEe, the fourth fresh parameter NONCEa, the first password password1, and the second key agreement algorithm parameter KEa by using a KDF, that is, second PSK = KDF(NONCEe, NONCEa, password1, KEa).

Implementation 14: The second node accesses the first node by using the first password that is entered. The second node may generate the second PSK based on the identity of the first node, the identity of the second node, the first fresh parameter, the fourth fresh parameter, the first password, and the second key agreement algorithm parameter. For example, the second node generates the second PSK based on the identity IDa of the first node, the identity IDe of the second node, the first fresh parameter NONCEe, the fourth fresh parameter NONCEa, the first password password1, and the second key agreement algorithm parameter KEa by using a KDF, that is, second PSK = KDF(IDa, IDe, NONCEe, NONCEa, password1, KEa).

Implementation 15: The second node may generate the second PSK based on the first fresh parameter, the fourth fresh parameter, the first password, and an intermediate key. The intermediate key is generated based on the first fresh parameter, the fourth fresh parameter, and the second key agreement algorithm parameter. For example, the second node first generates the intermediate key Kmid based on the first fresh parameter NONCEe, the fourth fresh parameter NONCEa, and the second key agreement algorithm parameter KEa, that is, Kmid = F(NONCEe, NONCEa, KEa), where F is a cryptographic algorithm for generating the intermediate key. Then, the second node generates the second PSK based on the first fresh parameter NONCEe, the fourth fresh parameter NONCEa, the first password password1, and the intermediate key Kmid, that is, second PSK = KDF(NONCEe, NONCEa, password1, Kmid). Certainly, in actual processing, the foregoing process may be alternatively completed by using one step, and the intermediate key Kmid is only an intermediate result. In other words, a manner for generating the second PSK satisfies: second PSK = KDF(NONCEe, NONCEa, password1, F(NONCEe, NONCEa, KEa)).

Implementation 16: The second node accesses the first node by using the first password that is entered. The second node generates the second PSK based on the identity of the first node, the identity of the second node, the first fresh parameter, the fourth fresh parameter, the first password, and a first intermediate key (or a second intermediate key). Specifically, for example, a key agreement algorithm between the first node and the second node is the DH algorithm. The second node first calculates the first intermediate key based on the second key agreement algorithm parameter and the fourth key agreement algorithm parameter (namely, the private key of the second node). For example, the foregoing DH algorithm is used as an example. The first intermediate key Kdh generated by the second node based on the second key agreement algorithm parameter B and the fourth key agreement algorithm parameter a is as follows: Kdh = B^{a} mod p. The second node generates the second PSK based on the identity IDa of the first node, the identity IDe of the second node, the first fresh parameter NONCEe, the fourth fresh parameter NONCEa, the first password password1, and the first intermediate key Kdh by using a KDF, that is, second PSK = KDF(IDa, IDe, NONCEe, NONCEa, password1, Kdh).

Further, the second node may determine the second intermediate key based on the first fresh parameter NONCEe, the fourth fresh parameter NONCEa, and the first intermediate key Kdh. In other words, the second intermediate key Kgt is as follows: Kgt = KDF(NONCEe, NONCEa, Kdh). The second node generates the second PSK based on the identity IDa of the first node, the identity IDe of the second node, the first fresh parameter NONCEe, the fourth fresh parameter NONCEa, the first password password1, and the second intermediate key Kgt by using a KDF, that is, second PSK = KDF(IDa, IDe, NONCEe, NONCEa, password1, Kgt).

It should be noted that, to describe the solution more clearly herein, how to obtain the first PSK is explained in a manner of a plurality of steps. In actual processing, the foregoing process may be alternatively completed by using one step, and the first intermediate key Kdh or the second intermediate key Kgt is only an intermediate result. In other words, a manner for determining the second PSK satisfies: second PSK = KDF(IDa, IDe, NONCEe, NONCEa, password1, KDF(NONCEe, NONCEa, Kdh)), or a manner for determining the second PSK satisfies: second PSK = KDF(IDa, IDe, NONCEe, NONCEa, password1, KDF(NONCEe, NONCEa, A^{b} mod p)). Further, optionally, the second node may deduce (or derive) another intermediate key based on the first intermediate key Kdh or the second intermediate key Kgt, and then participate in generating the second PSK based on the derived another intermediate key.

Usually, when the first node generates the first PSK by using a method shown in a specific implementation, correspondingly, the second node generates the second PSK by using a method shown in a corresponding implementation. Therefore, the first PSK generated by the first node is the same as the second PSK generated by the second node. This facilitates verification on an identity of a peer node.

Optionally, before generating the second PSK, the second node obtains third acknowledgement indication information, where the third acknowledgement indication information indicates that generation of the second PSK is allowed. Specifically, the third acknowledgement indication information is indication information obtained based on an acknowledgement operation entered by the user, and the acknowledgement operation may be an acknowledgement for output prompt information. For example, the second node may output third prompt information to remind the user that a new node needs to be accessed. After receiving the acknowledgement operation of the user and obtaining the third acknowledgement indication information, the second node generates the second PSK based on the first fresh parameter and the fourth fresh parameter. In this way, when an attacker uses an identity of the attacker to connect to the second node, because a PSK corresponding to the identity of the attacker does not exist in the second node, the second node may remind the user that a new node requests association, and the user verifies an identity of the new node. Therefore, association between the second node and an untrusted node can be avoided, and communication security of the second node can be ensured.

Optionally, after generating the second PSK, the second node may store the correspondence between the second PSK and the identity of the first node. When being associated with the first node next time, the second node may determine the second PSK based on the correspondence without regenerating the second PSK. Optionally, when the second node accesses the first node by using the first password or when the second PSK is generated with participation of the first password, if the first password is updated, the second node may delete the correspondence between the second PSK and the identity of the first node.

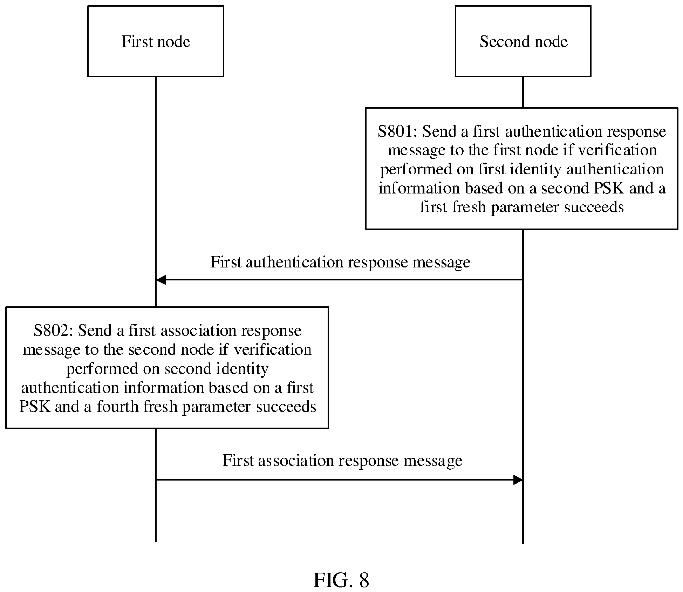

Optionally, the key obtaining method in this embodiment of this application may further include step S801 or step S801 and step S802 in FIG. 8. Step S801 and step S802 are specifically as follows:
Step S801: The second node sends a first authentication response message to the first node if verification performed by the second node on first identity authentication information based on the second PSK and the first fresh parameter succeeds.

Specifically, the first authentication request message further includes the first identity authentication information, and the first identity authentication information is generated by the first node based on the first PSK and the first fresh parameter. For example, the first node generates the first identity authentication information AUTHa based on the first PSK and the first fresh parameter NONCEe by using a KDF, that is, AUTHa = KDF(first PSK, NONCEe). Optionally, in actual processing, parameters used by the first node to generate the first identity authentication information may further include other information. For example, the generated first identity authentication information AUTHa may satisfy: AUTHa = KDF(first PSK, first association request message), where the first association request message includes the first fresh parameter NONCEe. For another example, the generated first identity authentication information AUTHa may alternatively satisfy: AUTHa = KDF(first PSK, NONCEa, first association request message), where NONCEa is the fourth fresh parameter.

Because the first identity authentication information is generated by the first node based on the first PSK and the first fresh parameter, the second node may verify, based on the second PSK and the first fresh parameter, whether the first identity authentication information is correct. In an optional solution, according to a protocol specification, if the first node uses a specific parameter to generate the first identity authentication information, the second node should also use the same parameter to generate check information. If the check information is the same as the first identity authentication information, it is considered that the verification succeeds. For example, the first identity authentication information is generated by using a KDF. Therefore, the second node may use the KDF to generate the check information, which is also referred to as a check value check1. Then, the second node verifies, by using the check information, whether the first identity authentication information is correct. The following uses an example for description.

For example, if the first identity authentication information AUTHa is KDF(first PSK, NONCEe), the second node learns, based on the second PSK and the first fresh parameter by using the KDF, that the check value check1 = KDF(second PSK, NONCEe). If the check value check1 is the same as AUTHa, the verification succeeds.

If the verification on the first identity authentication information succeeds, the second node sends the first authentication response message to the first node. The second authentication response message includes second identity authentication information. Optionally, the second identity authentication information is used by the first node to verify the identity of the second node. The second identity authentication information is generated based on the second PSK and the fourth fresh parameter. For example, the second node generates the second identity authentication information AUTHe based on the second PSK and the fourth fresh parameter NONCEa by using a KDF, that is, AUTHe = KDF(second PSK, NONCEa). Optionally, in actual processing, parameters used by the second node to generate the second identity authentication information may further include other information. For example, the generated second identity authentication information AUTHe may satisfy: AUTHe = KDF(second PSK, first authentication request message), where the first authentication request message includes the fourth fresh parameter NONCEa. For another example, the generated second identity authentication information AUTHe may alternatively satisfy: AUTHe = KDF(second PSK, NONCEe, first authentication request message), where NONCEe is the first fresh parameter.

Optionally, if the verification on the first identity authentication information fails, the second node may generate a new second PSK by using the method described in Method 2 or Method 3. For ease of description, the generated new second PSK is referred to as a fourth PSK. The second node verifies the first identity authentication information again by using the fourth PSK and the first fresh parameter. If the verification succeeds, the second node sends the first authentication response message to the first node. The second response message includes second identity authentication information. The second identity authentication information is generated based on the fourth PSK and the fourth fresh parameter, and is used by the first node to verify the identity of the second node.

Optionally, before generating the fourth PSK, the second node obtains fourth acknowledgement indication information, where the fourth acknowledgement indication information indicates that generation of the fourth PSK is allowed. Specifically, the fourth acknowledgement indication information is indication information obtained based on an acknowledgement operation entered by the user, and the acknowledgement operation may be an acknowledgement for output prompt information. For example, the second node may output fourth prompt information to remind the user that the fourth PSK needs to be generated for the first node. After receiving an acknowledgement operation of the user and obtaining the fourth acknowledgement indication information, the second node generates the fourth PSK by using the method described in Method 2 or Method 3. In this way, the user verifies the identity of the first node, so that the second node can be prevented from being associated with an untrusted node. This ensures communication security of the second node.

Optionally, if the verification on the first identity authentication information fails, the second node may delete the second PSK corresponding to the identity of the first node. Further, the second node may re-determine a new fresh parameter and re-initiate a new association request message. For ease of description, the re-determined fresh parameter is referred to as a fifth fresh parameter, and the re-initiated new association request message is referred to as a second association request message. This helps re-obtain a PSK.

Optionally, if the verification on the first identity authentication information fails, and the PSK corresponding to the identity of the first node is not pre-stored in the second node (in other words, the second PSK is obtained by using Method 2 or Method 3), the second node may indicate the user to delete the PSK that is stored in the first node and that corresponds to the identity of the second node. After the second node obtains acknowledgement indication information entered by the user, the second node sends the second association request message to the first node, to re-obtain a PSK.

Optionally, the first authentication response message may further include a message authentication code (message authentication code, MAC). The MAC is a message authentication code generated based on a symmetric key and an integrity protection algorithm, and is used to protect integrity of the first authentication request message. The symmetric key and/or the integrity protection algorithm may be agreed on between the first node and the second node by using another message, or may be generated based on an existing parameter. For example, for the first intermediate key Kdh = B^{a} mod p that is generated by the first node in Implementation 8, and the first intermediate key Kdh = A^{b} mod p that is generated by the second node in Implementation 16, because A^{b} mod p = B^{a} mod p, the first intermediate key Kdh may also be used as a symmetric key between the first node and the second node, and may be used to perform integrity protection on the first authentication request message.

Step S802: The first node sends a first association response message to the second node if verification performed by the first node on the second identity authentication information based on the first PSK and the fourth fresh parameter succeeds.

Specifically, because the second identity authentication information is generated by the second node based on the second PSK and the fourth fresh parameter, the first node may verify, based on the first PSK and the fourth fresh parameter, whether the second identity authentication information is correct.

In an optional solution, according to a protocol specification, if the second node uses a specific parameter to generate the second identity authentication information, the first node should also use the same parameter to generate check information. If the check information is the same as the second identity authentication information, it is considered that the verification succeeds. For example, the second identity authentication information is generated by using a KDF. Therefore, the first node may use the KDF to generate the check information, which is also referred to as a check value check2. Then, the first node verifies, by using the check information, whether the second identity authentication information is correct. The following uses an example for description.

For example, if the second identity authentication information AUTHe is KDF(second PSK, NONCEa), the first node learns, based on the first PSK and the fourth fresh parameter by using the KDF, that the check value check2 = KDF(first PSK, NONCEa). If the check value check2 is the same as AUTHe, the verification succeeds.

If the verification on the second identity authentication information succeeds, the first node sends the first association response message to the second node. The first association response message may indicate that communication between the first node and the second node is allowed. Correspondingly, the second node receives the first association response message, and may start to communicate with the first node. Optionally, in a possible solution, the first association response message may alternatively not be sent. For example, after the verification on the second identity authentication information succeeds, the first node directly starts to perform data transmission with the second node. Optionally, the first node may allocate a temporary ID to the second node, so that the second node communicates with the first node by using the temporary ID.

Optionally, if the verification on the second identity authentication information fails, and the first node obtains the first PSK by using the method shown in Case 1, the first node may generate a new first PSK by using the method described in Case 2 or Case 3. For ease of description, the generated new first PSK is referred to as a third PSK. Then, the first node generates new identity authentication information based on the generated third PSK and the first fresh parameter. The new identity authentication information is referred to as third identity authentication information for ease of description. Further, the first node resends a second identity authentication request message to the first node. The second identity authentication request message includes the third identity authentication message and the fourth fresh parameter. Correspondingly, the second node receives the second identity authentication information from the first node. After verification succeeds, the second node may send a second identity response message to the first node. The second identity authentication response message includes identity authentication information of the second node. Correspondingly, after verification on the identity authentication information of the second node succeeds, the first node allows communication with the second node.

Optionally, before generating the third PSK, the first node obtains second acknowledgement indication information, where the second acknowledgement indication information indicates that generation of the third PSK is allowed. Specifically, the second acknowledgement indication information is indication information obtained based on an acknowledgement operation entered by the user, and the acknowledgement operation may be an acknowledgement for output prompt information. For example, the first node may output second prompt information to remind the user that the third PSK needs to be generated for the second node. After receiving an acknowledgement operation of the user and obtaining the second acknowledgement indication information, the first node generates the third PSK by using the method described in Case 2 or Case 3. In this way, the user verifies the identity of the second node, so that the first node can be prevented from being associated with an untrusted node. This ensures communication security of the first node.

Optionally, the first authentication response message may further include a message authentication code (message authentication code, MAC). The MAC is a message authentication code generated based on a symmetric key and an integrity protection algorithm, and is used to protect integrity of the first authentication request message. The symmetric key and/or the integrity protection algorithm may be agreed on between the first node and the second node by using another message, or may be generated based on an existing parameter. For example, the first intermediate key or the second intermediate key in Implementation 8 may be used as the symmetric key between the first node and the second node. In the method described in FIG. 5, a PSK is a secret value shared by the first node and the second node. The first node and the second node each generate a PSK by using the second fresh parameter from the second node and the third fresh parameter from the first node, and use the PSK to correspond to an identity of a peer node, to verify the identity of the peer node. In this way, if an attacker wants to counterfeit an identity of a node to request association, because the second fresh parameter and the third fresh parameter that are used to generate the PSK may be obtained before the first association request message, for example, may be obtained when the first node is associated with the second node for the first time, and previously obtained data is usually difficult to crack, the attacker cannot forge a PSK, and therefore identity authentication performed by the first node on the attacker cannot succeed. This prevents the first node from being connected to an untrusted node, and improves communication security of the first node.

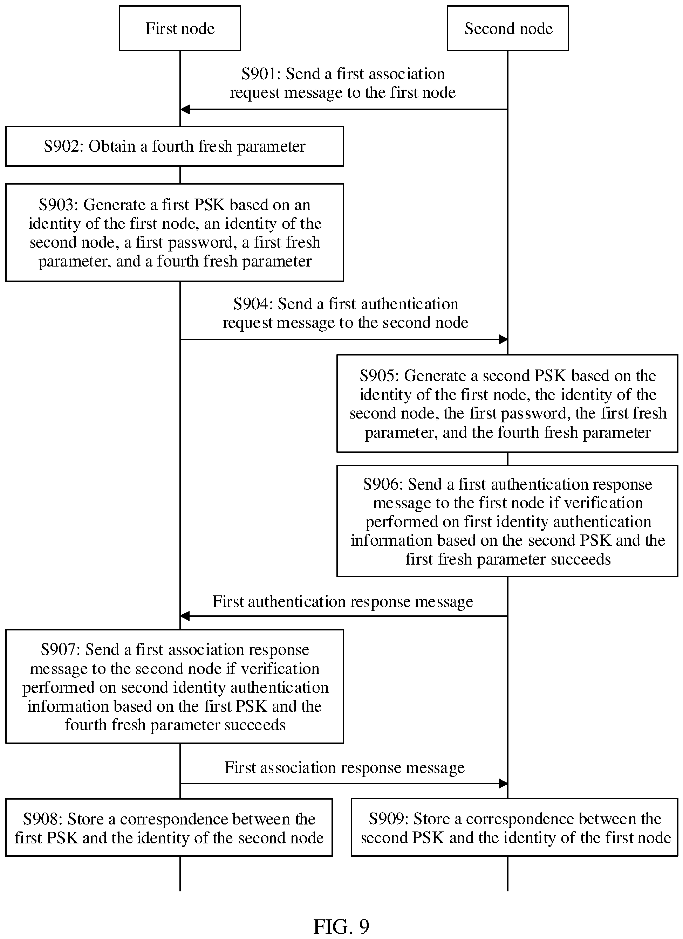

The foregoing method embodiment shown in FIG. 5 or FIG. 8 includes many possible implementations. The following separately describes some of the implementations by using examples with reference to FIG. 9, FIG. 10, and FIG. 11. It should be noted that, for related concepts or operations or logical relationships that are not explained in FIG. 9, FIG. 10, or FIG. 11, refer to corresponding descriptions in the embodiment shown in FIG. 5 or FIG. 8. Therefore, details are not described again.

FIG. 9 shows another key obtaining method according to an embodiment of this application. The method includes at least the following steps.

Step S901: A second node sends a first association request message to a first node.

Specifically, the first association request message includes a first fresh parameter. The first fresh parameter may include at least one of a nonce (number once, NONCE), a count (counter), a sequence number (number), and the like, and fresh parameters at different moments are usually different.

Correspondingly, the first node receives the first association request message from the second node.

Step S902: The first node obtains a fourth fresh parameter.

Specifically, the fourth fresh parameter may be a random number, a counter value, a sequence number, or the like. The fourth fresh parameter may be generated (or generated) by the first node. For example, the first node generates a random number by using a random number generator, and uses the random number as the fourth fresh parameter. Alternatively, the fourth fresh parameter may be a counter value, a sequence number, or the like obtained by the first node. For example, the first node records a PDCP COUNT, and the first node may obtain the recorded PDCP COUNT, and use the PDCP COUNT as the fourth fresh parameter.

Step S903: The first node generates a first PSK based on an identity of the first node, an identity of the second node, a first password, the first fresh parameter, and the fourth fresh parameter.

Specifically, the first node uses the first password as an access password (password). The first node may generate the first PSK based on the identity IDa of the first node, the identity IDe of the second node, the first fresh parameter NONCEe, the fourth fresh parameter NONCEa, and the first password password1 by using a KDF, that is, PSK = KDF(IDa, IDe, NONCEe, NONCEa, password1).

Optionally, before generating the first PSK, the first node outputs first prompt information. The first prompt information is used to prompt whether association with the second node is allowed or whether generation of the first PSK is allowed. Further, the first node obtains first acknowledgement indication information based on an acknowledgement operation of a user, and the first acknowledgement indication information indicates that association with the second node is allowed or that generation of the first PSK is allowed. In this way, the first node generates the first PSK based on the identity of the first node, the identity of the second node, the first password, the first fresh parameter, and the fourth fresh parameter.

Step S904: The first node sends a first authentication request message to the second node.

Specifically, the first authentication request message includes the fourth fresh parameter and first identity authentication information. The first identity authentication information is generated by the first node based on the first PSK and the first fresh parameter. For example, the first node generates the first identity authentication information AUTHa based on the first PSK and the first fresh parameter NONCEe by using a KDF, that is, AUTHa = KDF(first PSK, NONCEe). Optionally, in actual processing, parameters used by the first node to generate the first identity authentication information may further include other information. For example, the generated first identity authentication information AUTHa may satisfy: AUTHa = KDF(first PSK, first association request message), where the first association request message includes the first fresh parameter NONCEe. For another example, the generated first identity authentication information AUTHa may alternatively satisfy: AUTHa = KDF(first PSK, NONCEa, first association request message), where NONCEa is the fourth fresh parameter.

The first node sends the first authentication request message to the second node, and correspondingly, the second node receives the first authentication request message from the first node.

Step S905: The second node generates a second PSK based on the identity of the first node, the identity of the second node, the first password, the first fresh parameter, and the fourth fresh parameter.

Specifically, the second node accesses the first node by using the first password. The second node may generate the second PSK based on the identity IDa of the first node, the identity IDe of the second node, the first fresh parameter NONCEe, the fourth fresh parameter NONCEa, and the first password password1 by using a KDF, that is, PSK = KDF(IDa, IDe, NONCEe, NONCEa, password1).

Optionally, before generating the second PSK, the second node outputs third prompt information, where the third prompt information is used to prompt whether generation of the second PSK is allowed. Further, the second node obtains third acknowledgement indication information based on an acknowledgement operation of the user, and the third acknowledgement indication information indicates that generation of the third PSK is allowed. In this way, the second node generates the second PSK based on the identity of the first node, the identity of the second node, the first password, the first fresh parameter, and the fourth fresh parameter.

Step S906: The second node sends a first authentication response message to the first node if verification performed on the first identity authentication information based on the second PSK and the first fresh parameter succeeds.

Specifically, because the first identity authentication information is generated based on the first PSK and the first fresh parameter, the second node may verify, based on the second PSK and the first fresh parameter, whether the first identity authentication information is correct. Usually, if the first node uses a specific parameter to generate the first identity authentication information, the second node should also use the same parameter to generate check information. If the check information is the same as the first identity authentication information, it is considered that the verification succeeds. For example, if the first identity authentication information AUTHa is KDF(first PSK, NONCEe), the second node learns, based on the second PSK and the first fresh parameter by using the KDF, that a check value check1 = KDF(second PSK, NONCEe). If the check value check1 is the same as AUTHa, the verification succeeds.

If the verification on the first identity authentication information succeeds, the second node sends the first authentication response message to the first node. The first authentication response message includes second identity authentication information. The second identity authentication information is generated by the second node based on the second PSK and the fourth fresh parameter, and is used by the first node to verify the identity of the second node. Optionally, in actual processing, parameters used by the second node to generate the second identity authentication information may further include other information. For example, the generated second identity authentication information AUTHe may satisfy: AUTHe = KDF(second PSK, first authentication request message), where the first authentication request message includes the fourth fresh parameter NONCEa. For another example, the generated second identity authentication information AUTHe may alternatively satisfy: AUTHe = KDF(first PSK, NONCEe, second authentication request message), where NONCEe is the first fresh parameter.

The first node sends the first authentication request message to the second node, and correspondingly, the second node receives the first authentication request message from the first node.

Step S907: The first node sends a first association response message to the second node if verification performed on the second identity authentication information based on the first PSK and the fourth fresh parameter succeeds.

Specifically, because the second identity authentication information is generated based on the second PSK and the fourth fresh parameter, the first node may verify the second identity authentication information based on the first PSK and the fourth fresh parameter. Usually, if the second node uses a specific parameter to generate the second identity authentication information, the first node should also use the same parameter to generate check information. If the check information is the same as the second identity authentication information, it is considered that the verification succeeds. For example, if the second identity authentication information AUTHe is KDF(second PSK, NONCEa), the first node learns, based on the first PSK and the fourth fresh parameter by using the KDF, that a check value check2 = KDF(first PSK, NONCEa). If the check value check2 is the same as AUTHe, the verification succeeds.

If the verification on the first identity authentication information succeeds, the second node sends the first association response message to the first node. The association response message indicates that communication between the first node and the second node is allowed.

Optionally, this embodiment of this application may further include step S908, or may further include step S908 and step S909. Step S908 and step S909 are specifically as follows:
Step S908: The first node stores a correspondence between the first PSK and the identity of the second node.

Specifically, the first node stores a first correspondence set between a PSK and an identity of a node, and the first node adds the correspondence between the first PSK and the identity of the second node to the first correspondence set.

Step S909: The second node stores a correspondence between the second PSK and the identity of the first node.

Specifically, the second node stores a second correspondence set between a PSK and an identity of a node, and the second node adds the correspondence between the second PSK and the identity of the first node to the second correspondence set.

In the embodiment shown in FIG. 9, because a PSK is a secret value shared by the first node and the second node, the first PSK in the first node usually has a same value as the second PSK in the second node. The first node generates the first identity authentication information based on the first PSK and the first fresh parameter, so that the second node can verify the identity of the first node based on the second PSK. If verification based on the second PSK stored in the second node cannot succeed, it indicates that the identity of the first node is untrusted. Therefore, association between the second node and an untrusted node can be avoided, and communication security of the second node can be improved. Correspondingly, the first node may also verify the identity of the second node, so that the first node can be prevented from being associated with an untrusted node, and communication security of the first node can be improved.

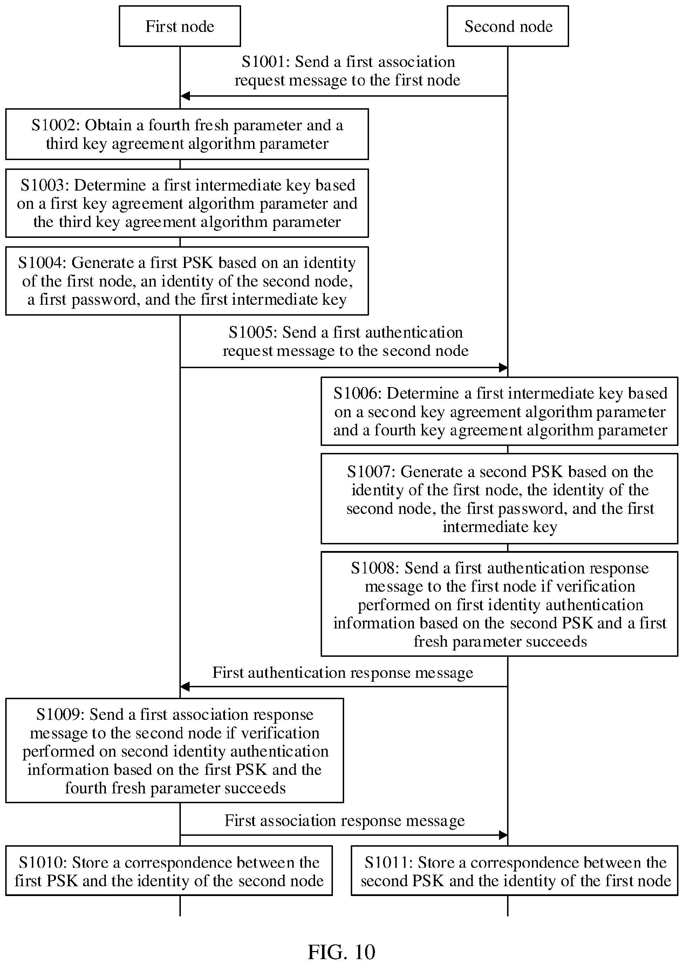

FIG. 10 shows another key obtaining method according to an embodiment of this application. The method includes at least the following steps.

Step S 1001: A second node sends a first association request message to a first node.

Specifically, the first association request message includes a first fresh parameter and a first key agreement algorithm parameter, the first key agreement algorithm parameter is generated by the second node based on a first key agreement algorithm and a fourth key agreement algorithm parameter, and the fourth key agreement algorithm is a private key of the second node. For example, the DH algorithm is used as an example. The first node and the second node perform key agreement by using a same prime number p whose value is relatively large and a same random number g. The second node determines a random number a (that is, the private key of the second node, namely, the fourth key agreement algorithm parameter). The second node sends, to the first node, a value A generated through g^{a} mod P, that is, A = g^{a} mod p, where the value A is the first key agreement algorithm parameter.

Optionally, the first node may broadcast one or more key agreement algorithms supported by the first node. After receiving the one or more key agreement algorithms, the second node uses the first association request message to carry the first key agreement algorithm parameter determined based on the first key agreement algorithm (optionally, identifier information of the first key agreement algorithm may be further carried when a plurality of key agreement algorithms are supported). Correspondingly, the first node may receive the first association request message from the second node.

Step S1002: The first node obtains a fourth fresh parameter and a third key agreement algorithm parameter.

Specifically, the fourth fresh parameter may be a random number, a counter value, a sequence number, or the like. The fourth fresh parameter may be generated (or generated) by the first node. For example, the first node generates a random number by using a random number generator, and uses the random number as the fourth fresh parameter. Alternatively, the fourth fresh parameter may be a counter value, a sequence number, or the like obtained by the first node. For example, the first node records a PDCP COUNT, and the first node may obtain the recorded PDCP COUNT, and use the PDCP COUNT as the fourth fresh parameter.

The third key agreement algorithm parameter obtained by the first node may also be referred to as a private key of the first node, and may usually be a random number with a relatively large value.

Step S 1003: The first node determines a first intermediate key based on the first key agreement algorithm parameter and the third key agreement algorithm parameter.

Specifically, the first node may determine, based on the first key agreement algorithm, the first key agreement algorithm parameter, and the third key agreement algorithm parameter, a secret value obtained through key agreement, and the secret value may be considered as the first intermediate key. For example, the DH algorithm is used as an example. The first node may determine, based on the first key agreement algorithm parameter A and the third key agreement algorithm parameter b, that the first intermediate key Kdh is: Kdh = A^{b} mod p.

Optionally, the first intermediate key may be used as a shared key between the first node and the second node, and is used to encrypt a message or perform integrity protection.

Step S 1004: The first node generates a first PSK based on an identity of the first node, an identity of the second node, a first password, and the first intermediate key.

Specifically, the first node uses the first password as an access password (password). The first node generates the first PSK based on the identity IDa of the first node, the identity ID2 of the second node, the first fresh parameter NONCEe, the fourth fresh parameter NONCEa, the first password password1, and the first intermediate key Kdh by using a KDF, that is, first PSK = KDF(IDa, IDe, NONCEe, NONCEa, password1, Kdh).

Optionally, the first node may first determine a second intermediate key Kgt based on the first fresh parameter NONCEe, the fourth fresh parameter NONCEa, and the first intermediate key Kdh by using a KDF, that is, Kgt = KDF(NONCEe, NONCEa, Kdh). Then, the first node generates the first PSK based on the identity IDa of the first node, the identity ID2 of the second node, the first fresh parameter NONCEe, the fourth fresh parameter NONCEa, the first password password1, and the second intermediate key Kgt by using a KDF, that is, first PSK = KDF(IDa, IDe, NONCEe, NONCEa, password1, Kgt).

It should be noted that, to describe the solution more clearly herein, how to obtain the first PSK is explained in a manner of a plurality of steps. In actual processing, the foregoing process may be alternatively completed by using one step, and the first intermediate key Kdh or the second intermediate key Kgt is only an intermediate result. In other words, a manner for determining the first PSK satisfies: first PSK = KDF(IDa, IDe, NONCEe, NONCEa, password1, KDF(NONCEe, NONCEa, Kdh)), or a manner for determining the first PSK satisfies: first PSK = KDF(IDa, IDe, NONCEe, NONCEa, password1, KDF(NONCEe, NONCEa, A^{b} mod p)).

Optionally, before generating the first PSK, the first node outputs first prompt information. The first prompt information is used to prompt whether generation of the first PSK is allowed. Further, the first node obtains first acknowledgement indication information based on an acknowledgement operation of a user, where the first acknowledgement indication information indicates that generation of the first PSK is allowed.

Step S 1005: The first node sends a first authentication request message to the second node.

Specifically, the first authentication request message includes the fourth fresh parameter, the second key agreement algorithm parameter, and first identity authentication information. The second key agreement algorithm parameter is a parameter determined by the first node based on the first key agreement algorithm and the third key agreement algorithm (namely, the private key of the first node). For example, the DH algorithm is used as an example. The first node sends, to the second node, a value B generated through g^{b} mod P, that is, B = g^{b} mod p, where the value B may be considered as the second key agreement algorithm parameter.

The first identity authentication information is generated by the first node based on the first PSK and the first fresh parameter, and is used by the second node to verify the identity of the first node. For example, the first node generates the first identity authentication information AUTHa based on the first PSK and the first fresh parameter NONCEe by using a KDF, that is, AUTHa = KDF(first PSK, NONCEe). Optionally, in actual processing, parameters used by the first node to generate the first identity authentication information may further include other information. For example, the generated first identity authentication information AUTHa may satisfy: AUTHa = KDF(first PSK, first association request message), where the first association request message includes the first fresh parameter NONCEe. For another example, the generated first identity authentication information AUTHa may alternatively satisfy: AUTHa = KDF(first PSK, NONCEa, first association request message), where NONCEa is the fourth fresh parameter.

Optionally, the first authentication request message may further include a message authentication code MAC, and the message authentication code MAC is a message authentication code generated based on the first intermediate key, and is used to protect integrity of the first authentication request message.

The first node sends the first authentication request message to the second node, and correspondingly, the second node receives the first authentication request message from the first node.

Step S1006: The second node determines a first intermediate key based on the second key agreement algorithm parameter and the fourth key agreement algorithm parameter.

Specifically, the second node may determine, based on the second key agreement algorithm parameter and the fourth key agreement algorithm parameter (namely, the private key of the second node), a secret value obtained through key agreement. For example, the DH algorithm is used as an example. The first intermediate key Kdh determined by the second node based on the received second key agreement algorithm parameter B and the fourth key agreement algorithm parameter a satisfies: Kdh = B^{a} mod p. Because Kdh = A^{b} mod p = (g^{a} mod p)^{b} mod p = g^{ab} mod p = (g^{b} mod p)^{a} mod p = B^{a} mod p, the first intermediate key determined by the first node and the first intermediate key determined by the second node have a same value.

Step S1007: The second node generates a second PSK based on the identity of the first node, the identity of the second node, the first password, and the first intermediate key.

Specifically, the second node accesses the first node by using the first password. The second node generates the second PSK based on the identity IDa of the first node, the identity IDe of the second node, the first fresh parameter NONCEe, the fourth fresh parameter NONCEa, the first password password1, and the first intermediate key Kdh by using a KDF, that is, second PSK = KDF(IDa, IDe, NONCEe, NONCEa, password1, Kdh).

Optionally, the second node may first determine a second intermediate key Kgt based on the first fresh parameter NONCEe, the fourth fresh parameter NONCEa, and the first intermediate key Kdh by using a KDF, that is, Kgt = KDF(NONCEe, NONCEa, Kdh). Then, the second node generates the second PSK based on the identity IDa of the first node, the identity ID2 of the second node, the first fresh parameter NONCEe, the fourth fresh parameter NONCEa, the first password password1, and the second intermediate key Kgt by using a KDF, that is, second PSK = KDF(IDa, IDe, NONCEe, NONCEa, password1, Kgt).

It should be noted that, to describe the solution more clearly herein, how to obtain the second PSK is explained in a manner of a plurality of steps. In actual processing, the foregoing process may be alternatively completed by using one step, and the first intermediate key Kdh or the second intermediate key Kgt is only an intermediate result. In other words, a manner for determining the second PSK satisfies: second PSK = KDF(IDa, IDe, NONCEe, NONCEa, password1, KDF(NONCEe, NONCEa, Kdh)), or a manner for determining the second PSK satisfies: second PSK = KDF(IDa, IDe, NONCEe, NONCEa, password1, KDF(NONCEe, NONCEa, A^{b} mod p)).

Optionally, before generating the second PSK, the second node outputs third prompt information, where the third prompt information is used to prompt whether generation of the second PSK is allowed. Further, the second node obtains third acknowledgement indication information based on an acknowledgement operation of the user, where the third acknowledgement indication information indicates that generation of the third PSK is allowed, so that the second node generates the second PSK.

Step S1008: The second node sends a first authentication response message to the first node if verification performed on the first identity authentication information based on the second PSK and the first fresh parameter succeeds.

For a specific description, refer to step S906.

Step S1009: The first node sends a first association response message to the second node if verification performed on second identity authentication information based on the first PSK and the fourth fresh parameter succeeds.

For a specific description, refer to step S907.

Optionally, this embodiment of this application may further include step S1010, or may further include step S1010 and step S1011. Step S1010 and step S1011 are specifically as follows:
Step S1010: The first node stores a correspondence between the first PSK and the identity of the second node.

Specifically, the first node stores a first correspondence set between a PSK and an identity of a node, and the first node adds the correspondence between the first PSK and the identity of the second node to the first correspondence set.

Step S1011: The second node stores a correspondence between the second PSK and the identity of the first node.

Specifically, the second node stores a second correspondence set between a PSK and an identity of a node, and the second node adds the correspondence between the second PSK and the identity of the first node to the second correspondence set.

In the embodiment shown in FIG. 10, the second node uses the first association request message to carry the first key agreement algorithm parameter, and the first node provides the second key agreement algorithm parameter. The first PSK is determined based on the key agreement algorithm parameters provided by both parties, the first fresh parameter, the fourth fresh parameter, and the first password. In this way, even if an attacker subsequently counterfeits identity information of the second node and obtains the first fresh parameter and the fourth fresh parameter that are used to generate the first PSK, the attacker cannot crack the PSK. Therefore, the attacker cannot communicate with the first node. This improves communication security of the first node. Correspondingly, even if the attacker subsequently counterfeits identity information of the first node and obtains the first fresh parameter and the fourth fresh parameter that are used to generate the second PSK, the attacker cannot crack the PSK. Therefore, the attacker cannot communicate with the second node. This improves communication security of the first node.

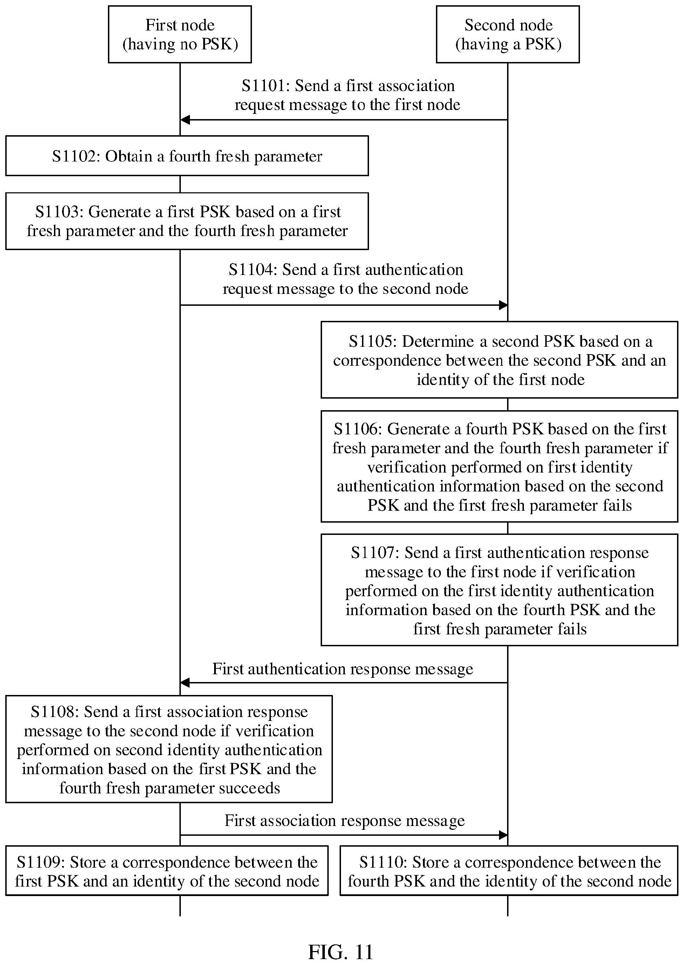

FIG. 11 shows another key obtaining method according to an embodiment of this application. The method may be applied to a case in which no first PSK exists in a first node and a second PSK exists in a second node, for example, a case in which data in the first node is lost due to formatting or a case in which a correspondence between a PSK and an identity of a node is deleted from the first node. The method includes at least the following steps.

Step S 1101: The second node sends a first association request message to the first node.

Specifically, the first association request message includes a first fresh parameter. Correspondingly, the first node may receive the first association request message from the second node.

Step S 1102: The first node obtains a fourth fresh parameter.

Specifically, the fourth fresh parameter may be a random number, a counter value, a sequence number, or the like. The fourth fresh parameter may be generated (or generated) by the first node. For example, the first node generates a random number by using a random number generator, and uses the random number as the fourth fresh parameter. Alternatively, the fourth fresh parameter may be a counter value, a sequence number, or the like obtained by the first node. For example, the first node records a PDCP COUNT, and the first node may obtain the recorded PDCP COUNT, and use the PDCP COUNT as the fourth fresh parameter.

Step S1103: The first node generates a first PSK based on the first fresh parameter and the fourth fresh parameter.

Specifically, for a detailed description, refer to the detailed descriptions of Case 2 and Case 3 in step S502.

Step S 1104: The first node sends a first authentication request message to the second node.

Specifically, the first authentication request message includes the fourth fresh parameter and first identity authentication information. The first identity authentication information is generated by the first node based on the first PSK and the first fresh parameter, and is used by the second node to verify an identity of the first node. Optionally, in actual processing, parameters used by the first node to generate the first identity authentication information may further include other information. For example, the generated first identity authentication information AUTHa may satisfy: AUTHa = KDF(first PSK, first association request message), where the first association request message includes the first fresh parameter NONCEe. For another example, the generated first identity authentication information AUTHa may alternatively satisfy: AUTHa = KDF(first PSK, NONCEa, first association request message), where NONCEa is the fourth fresh parameter.

Step S 1105: The second node determines a second PSK based on a correspondence between the second PSK and the identity of the first node.

Specifically, for a detailed description, refer to the detailed description of Method 1 in step S504.

Step S1106: The second node generates a fourth PSK based on the first fresh parameter and the fourth fresh parameter if verification performed on the first identity authentication information based on the second PSK and the first fresh parameter fails.

Specifically, the second PSK is determined based on the correspondence between the second PSK and the identity of the first node. If the verification on the first identity authentication information based on the second PSK and the first fresh parameter fails, a possible reason may be that a new first PSK is generated in the first node, and consequently, the verification fails. Therefore, the second node generates the fourth PSK based on the first fresh parameter and the fourth fresh parameter, and verifies the identity of the second node by using the fourth PSK and the first fresh parameter.

Step S1107: The second node sends a first authentication response message to the first node if verification performed on the first identity authentication information based on the fourth PSK and the first fresh parameter succeeds.

Specifically, the first authentication response message includes second identity authentication information, and the second identity authentication information is generated based on the fourth PSK and the fourth fresh parameter. Optionally, in actual processing, parameters used by the second node to generate the second identity authentication information may further include other information. For example, the generated second identity authentication information AUTHe may satisfy: AUTHe = KDF(fourth PSK, first authentication request message), where the first authentication request message includes NONCEa. For another example, the generated second identity authentication information AUTHe may alternatively satisfy: AUTHe = KDF(fourth PSK, NONCEe, first authentication request message), where NONCEe is the first fresh parameter.

Step S1108: The first node sends a first association response message to the second node if verification performed on the second identity authentication information based on the first PSK and the fourth fresh parameter succeeds.

Specifically, the first association response message indicates that communication between the first node and the second node is allowed. Correspondingly, the second node receives the first association response message from the first node.

Optionally, this embodiment of this application may further include step S 1109, or may further include step S1109 and step S1110. Step S1109 and step S1110 are specifically as follows:
Step S 1109: The first node stores a correspondence between the first PSK and the identity of the second node.
Step S1110: The second node stores a correspondence between the fourth PSK and the identity of the first node.

In the embodiment shown in FIG. 11, when the second node obtains the second PSK based on the correspondence, if verification performed by the second node on the first identity authentication information fails, a possible reason may be that the first node uses a newly generated PSK to generate the first identity authentication information. Therefore, the second node also generates a new PSK (namely, the fourth PSK) based on the first fresh parameter and the fourth fresh parameter, and re-initiates authentication based on the new PSK. This can improve system stability.

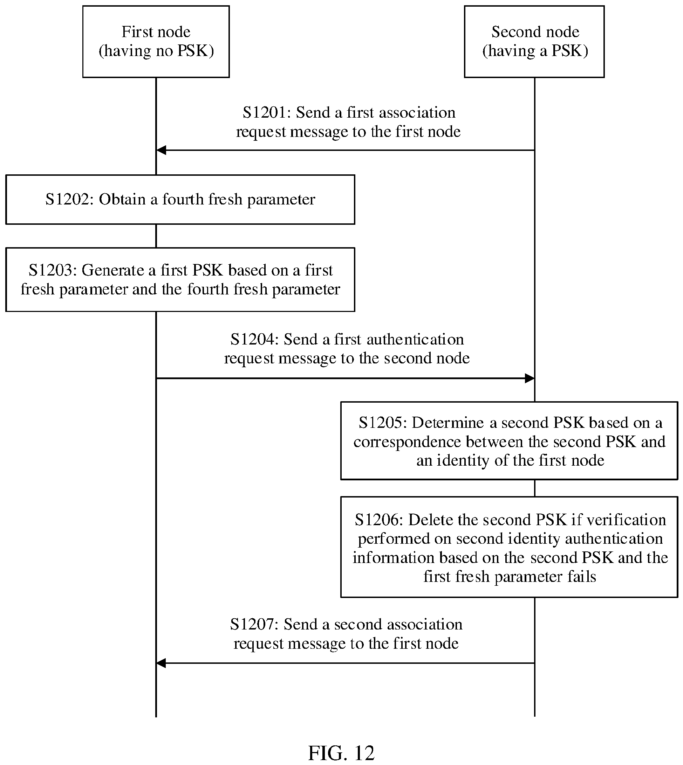

FIG. 12 shows another key obtaining method according to an embodiment of this application. The method may be applied to a case in which no first PSK exists in a first node and a second PSK exists in a second node, for example, a case in which data in the first node is lost due to formatting or a case in which a correspondence between a PSK and an identity of a node is deleted from the first node. The method includes at least the following steps.

Step S1201: The second node sends a first association request message to the first node.

Specifically, the first association request message includes a first fresh parameter. Correspondingly, the first node may receive the first association request message from the second node.

Step S1202: The first node obtains a fourth fresh parameter.

Specifically, the fourth fresh parameter may be a random number, a counter value, a sequence number, or the like. The fourth fresh parameter may be generated (or generated) by the first node. For example, the first node generates a random number by using a random number generator, and uses the random number as the fourth fresh parameter. Alternatively, the fourth fresh parameter may be a counter value, a sequence number, or the like obtained by the first node. For example, the first node records a PDCP COUNT, and the first node may obtain the recorded PDCP COUNT, and use the PDCP COUNT as the fourth fresh parameter. Step S1203: The first node generates a first PSK based on the first fresh parameter and the fourth fresh parameter.

Specifically, for a detailed description, refer to the detailed descriptions of Case 2 and Case 3 in step S502.

Step S 1204: The first node sends a first authentication request message to the second node.

Specifically, the first authentication request message includes the fourth fresh parameter and first identity authentication information. The first identity authentication information is generated by the first node based on the first PSK and the first fresh parameter, and is used by the second node to verify an identity of the first node. Optionally, in actual processing, parameters used by the first node to generate the first identity authentication information may further include other information. For example, the generated first identity authentication information AUTHa may satisfy: AUTHa = KDF(first PSK, first association request message), where the first association request message includes the first fresh parameter NONCEe. For another example, the generated first identity authentication information AUTHa may alternatively satisfy: AUTHa = KDF(first PSK, NONCEa, first association request message), where NONCEa is the fourth fresh parameter.

Step S1205: The second node determines a second PSK based on a correspondence between the second PSK and the identity of the first node.

Specifically, for a detailed description, refer to the detailed description of Method 1 in step S504.

Step S1206: The second node deletes the second PSK if verification performed on the first identity authentication information based on the second PSK and the first fresh parameter fails.

Specifically, the second node may delete the second PSK, or delete the correspondence between the second PSK and the identity of the first node.

Step S1207: The second node sends a second association request message to the first node.

Specifically, the second association request message includes a fifth fresh parameter. The second association request message indicates that the second node re-initiates an association request procedure.

In the embodiment shown in FIG. 12, when the second node obtains the second PSK based on the correspondence, if verification performed by the second node on the first identity authentication information fails, a possible reason may be that the first node uses a newly generated PSK to generate the first identity authentication information. Therefore, the second node deletes the second PSK, so as to re-initiate an access procedure to re-request to access the first node and agree on a new PSK.

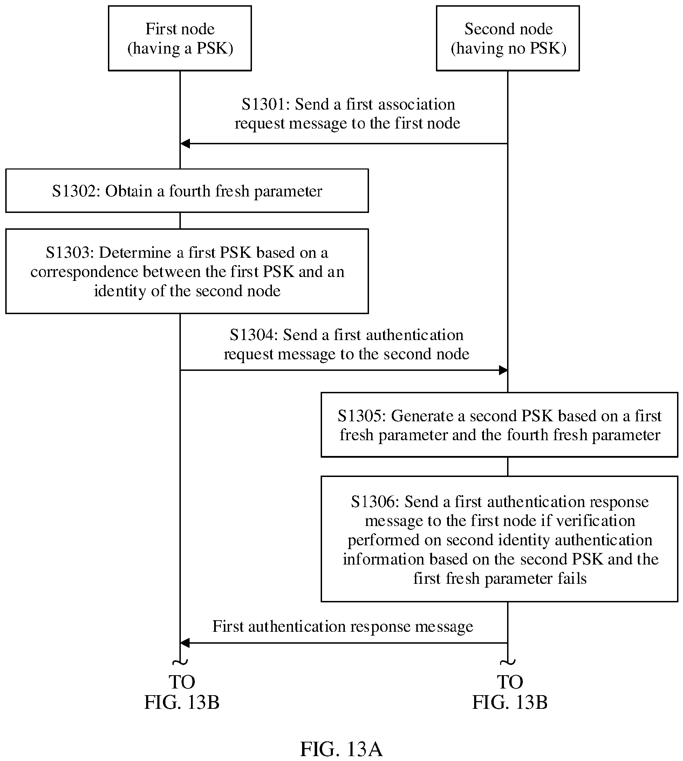

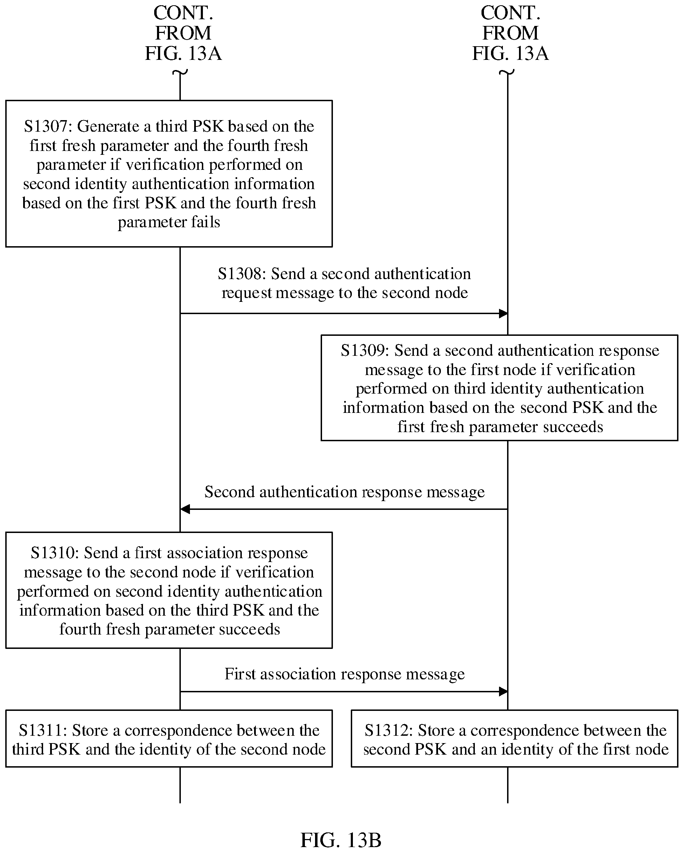

FIG. 13A and FIG. 13B show another key obtaining method according to an embodiment of this application. The method may be applied to a case in which a first PSK exists in a first node and no second PSK exists in a second node, for example, a case in which data in the second node is lost due to formatting or a case in which a correspondence between a PSK and an identity of a node is deleted from the second node. The method includes at least the following steps.

Step S1301: The second node sends a first association request message to the first node.

Specifically, the first association request message includes a first fresh parameter. Correspondingly, the first node may receive the first association request message from the second node.

Step S1302: The first node obtains a fourth fresh parameter.

Specifically, the fourth fresh parameter may be a random number, a counter value, a sequence number, or the like. The fourth fresh parameter may be generated (or generated) by the first node. For example, the first node generates a random number by using a random number generator, and uses the random number as the fourth fresh parameter. Alternatively, the fourth fresh parameter may be a counter value, a sequence number, or the like obtained by the first node. For example, the first node records a PDCP COUNT, and the first node may obtain the recorded PDCP COUNT, and use the PDCP COUNT as the fourth fresh parameter. Step S1303: The first node determines a first PSK based on a correspondence between the first PSK and an identity of the second node.

Specifically, for a detailed description, refer to the detailed description of Case 1 in step S502.

Step S1304: The first node sends a first authentication request message to the second node.

Specifically, the first authentication request message includes the fourth fresh parameter and first identity authentication information. The first identity authentication information is generated by the first node based on the first PSK and the first fresh parameter, and is used by the second node to verify an identity of the first node. Optionally, in actual processing, parameters used by the first node to generate the first identity authentication information may further include other information. For example, the generated first identity authentication information AUTHa may satisfy: AUTHa = KDF(first PSK, first association request message), where the first association request message includes the first fresh parameter NONCEe. For another example, the generated first identity authentication information AUTHa may alternatively satisfy: AUTHa = KDF(first PSK, NONCEa, first association request message), where NONCEa is the fourth fresh parameter.

Step S1305: The second node generates a second PSK based on the first fresh parameter and the fourth fresh parameter.

Specifically, for a detailed description, refer to the detailed description of Method 2 or Method 3 in step S504.

Step S1306: The second node sends a first authentication response message to the first node if verification performed on the first identity authentication information based on the second PSK and the first fresh parameter fails.

Specifically, the second PSK is generated based on the first fresh parameter and the fourth fresh parameter. If the verification on the first identity authentication information based on the second PSK and the first fresh parameter fails, it indicates that the PSK of the first node is different from the PSK of the second node. Therefore, the second node may send the first authentication response message to the first node. The first authentication response message includes second identity authentication information, and the second identity authentication information is generated based on the second PSK and the fourth fresh parameter. After the first node receives the second identity authentication information, if verification fails, a first PSK may be re-determined.

Optionally, the second node may add update indication information to the first authentication response message, to remind the first node to update the PSK, to prevent the first node from using the previous old PSK to verify identity authentication information, so as to avoid a failure in verifying the identity authentication information by the first node and avoid affecting user experience. Further, optionally, the update indication information may be a character or a character string in the first authentication response message. For example, the first authentication response message includes an "update" field. "1" is used in the field to indicate the first node to update the PSK. "0" is used in the field to indicate "meaningless".

Step S1307: The first node generates a third PSK based on the first fresh parameter and the fourth fresh parameter if verification performed on the first identity authentication information based on the first PSK and the first fresh parameter fails.

Optionally, before generating the third PSK, the first node obtains second acknowledgement indication information, where the second acknowledgement indication information indicates that generation of the third PSK is allowed. Specifically, the second acknowledgement indication information is indication information obtained based on an acknowledgement operation entered by a user, and the acknowledgement operation may be an acknowledgement for output prompt information. For example, the first node may output second prompt information to remind the user that the third PSK needs to be generated for the second node. After receiving an acknowledgement operation of the user and obtaining the second acknowledgement indication information, the first node generates the third PSK by using the method described in Case 2 or Case 3. In this way, the user verifies the identity of the second node, so that the first node can be prevented from being associated with an untrusted node. This ensures communication security of the first node.

Step S1308: The first node sends a second authentication request message to the second node.

Specifically, after generating the third PSK, the first node sends the second authentication request message to the second node. The second authentication request message includes third identity authentication information, and the third identity authentication information is generated based on the third PSK and the first fresh parameter. Optionally, in actual processing, parameters used by the second node to generate the third identity authentication information may further include other information. For example, the generated third identity authentication information AUTHt may satisfy: AUTHt = KDF(third PSK, first association request message), where the first association request message includes NONCEa. For another example, the generated third identity authentication information AUTHt may alternatively satisfy: AUTHt = KDF(third PSK, NONCEa, first association request message), where NONCEa is the fourth fresh parameter.

Step S1309: Send a second authentication response message to the first node if verification performed on the third identity authentication information based on the second PSK and the first fresh parameter succeeds.

Specifically, the second authentication response message includes fourth identity authentication information, and the fourth identity authentication information is generated based on the second PSK and the fourth fresh parameter. Optionally, in actual processing, parameters used by the second node to generate the second identity authentication information may further include other information. For example, the generated fourth identity authentication information AUTHf may satisfy: AUTHf = KDF(second PSK, second authentication request message), where the first authentication request message includes NONCEa. For another example, the generated second identity authentication information AUTHf may alternatively satisfy: AUTHf = KDF(first PSK, NONCEe, second authentication request message), where NONCEe is the first fresh parameter.

Step S1310: The first node sends a first authentication response message to the second node if verification performed on the second identity authentication information based on the third PSK and the fourth fresh parameter succeeds.

Specifically, the first authentication response message indicates that communication between the first node and the second node is allowed. Correspondingly, the second node receives the first authentication response message from the first node.

Optionally, this embodiment of this application may further include step S1311, or may further include step S1311 and step S1312. Step S1311 and step S1312 are specifically as follows:

Step S1311: The first node stores a correspondence between the third PSK and the identity of the second node.

Step S1312: The second node stores a correspondence between the second PSK and the identity of the first node.

In the embodiment shown in FIG. 13A and FIG. 13B, when the first node obtains the first PSK based on the correspondence, if verification performed by the first node on the second identity authentication information fails, a possible reason may be that the second node uses a newly generated PSK to generate the second identity authentication information. Therefore, the first node also uses a newly generated PSK to re-initiate an authentication procedure, and agrees on a new PSK to improve system stability.

The foregoing describes in detail the methods in the embodiments of this application. The following provides apparatuses in the embodiments of this application.

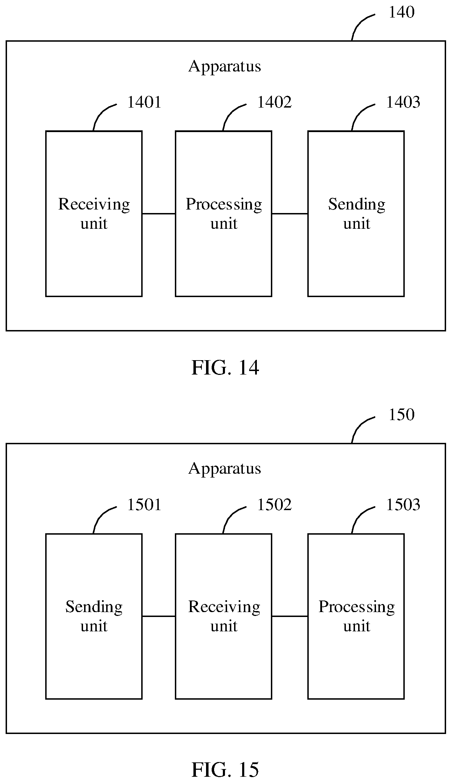

FIG. 14 is a schematic structural diagram of an apparatus 140 according to an embodiment of this application. The apparatus 140 may be a node, or may be a component, such as a chip or an integrated circuit, in an electronic device having data sending and receiving capabilities. The apparatus 140 may include a receiving unit 1401 and a processing unit 1402. Descriptions of the units are as follows:

The receiving unit 1401 is configured to receive a first association request message from a second node, where the first association request message includes a first fresh parameter.

The processing unit 1402 is configured to obtain a first pre-shared key PSK, where the first PSK corresponds to an identity of the second node, the first PSK is a PSK generated based on a second fresh parameter from the second node and a third fresh parameter from the apparatus 140, and the first PSK is used to verify the identity of the second node.

It can be learned that a PSK is a secret value shared by the apparatus 140 and the second node. The apparatus 140 generates the first PSK by using the second fresh parameter from the second node and the third fresh parameter from the apparatus 140, and uses the first PSK to correspond to the identity of the second node, to verify the identity of the second node (for example, the second node generates identity authentication information based on a PSK, and the first node may verify the identity authentication information of the second node by using the first PSK; for another example, the second node performs encryption or integrity protection on message content by using a PSK (or a key derived based on the PSK), and the first node may obtain the message content from the second node by using the first PSK). In this way, if an attacker wants to counterfeit the identity of the second node to associate with the apparatus, because the second fresh parameter and the third fresh parameter that are used to generate the first PSK may be obtained before the first association request message, for example, may be obtained when the apparatus 140 is associated with the second node for the first time, and previously obtained data is usually difficult to crack, the attacker cannot forge a PSK, and therefore identity authentication performed by the apparatus 140 on the attacker cannot succeed. This prevents the apparatus 140 from being connected to an untrusted node, and improves communication security of the apparatus 140.

It should be noted herein that division into the foregoing plurality of units is merely logical division based on functions, and is not used as a limitation on a specific structure of the apparatus 140. In specific implementation, some functional modules may be subdivided into more small functional modules, or some functional modules may be combined into one functional module. However, regardless of whether these functional modules are subdivided or combined, procedures performed by the apparatus 140 in a key obtaining process are roughly the same. For example, the plurality of units may alternatively be converted into a communications unit and a processing unit, and the communications unit is configured to implement a function of the receiving unit 1401. Usually, each unit corresponds to program code (that is, program instructions) of the unit. When program code corresponding to the units is run on a processor, the units are enabled to perform corresponding procedures to implement corresponding functions.

In a possible implementation, the apparatus 140 further includes:
a sending unit 1403, configured to send a first authentication request message to the second node, where the first authentication request message includes first identity authentication information and a fourth fresh parameter, and the first identity authentication information is generated based on the first PSK and the first fresh parameter.

It can be learned that, because a PSK is a secret value shared by the apparatus 140 and the second node, the first PSK in the apparatus 140 usually has a same value as a second PSK in the second node. The apparatus 140 generates the first identity authentication information based on the first PSK and the first fresh parameter, so that the second node can verify an identity of the apparatus 140 based on the second PSK. If verification based on the second PSK stored in the second node cannot succeed, it indicates that the identity of the apparatus is untrusted. Therefore, association between the second node and an untrusted node can be avoided, and communication security of the second node can be improved.

In another possible implementation, the receiving unit 1401 is further configured to receive a first authentication response message from the second node, where the first authentication response message includes second identity authentication information; and
the sending unit 1403 is further configured to send a first association response message to the second node if verification performed by the apparatus 140 on the second identity authentication information based on the first PSK and the fourth fresh parameter (NONCEa) succeeds.

It can be learned that before the apparatus 140 communicates with the second node, the apparatus 140 and the second node first determine identities of both parties by using identity authentication information. Communication is allowed only after identity authentication succeeds. This avoids access of an untrusted node, and improves node communication security.

In another possible implementation, the processing unit 1402 is specifically configured to obtain the first PSK based on a correspondence between the first PSK and the identity of the second node.

It can be learned that, the correspondence between the first PSK and the identity of the second node exists in the apparatus 140. This may indicate that the second node has been associated with the apparatus 140 before or the first PSK corresponding to the identity of the second node is preconfigured in the apparatus 140. Therefore, the apparatus 140 may obtain the first PSK based on the correspondence.

In another possible implementation, the processing unit 1402 is specifically configured to:
obtain the first PSK based on a correspondence between the first PSK and the identity of the second node by using the first correspondence set.

It can be learned that the apparatus 140 may store the correspondence between the first PSK and the identity of the second node in a form of a correspondence set.

In another possible implementation, the processing unit 1402 is specifically configured to generate the first PSK based on the first fresh parameter and the fourth fresh parameter, where the first fresh parameter is the second fresh parameter, and the fourth fresh parameter is the third fresh parameter.

It can be learned that, the first PSK is generated based on the first fresh parameter in the first association request message and the fourth fresh parameter from the apparatus 140. Usually, when the apparatus 140 is associated with the second node for the first time or when the apparatus 140 deletes a correspondence, a PSK corresponding to the identity of the second node does not exist in the apparatus 140. Therefore, the apparatus 140 may generate the new first PSK based on the first fresh parameter and the fourth fresh parameter, to verify the identity of the second node.

In another possible implementation, the processing unit 1402 is further configured to obtain first acknowledgement indication information, where the first acknowledgement indication information indicates that association between the second node and the apparatus 140 is allowed.

It can be learned that when the new first PSK is generated, an acknowledgement of a user is required. In this way, when an attacker uses an identity of the attacker to connect to the apparatus 140, because a PSK corresponding to the identity of the attacker does not exist in the apparatus 140, the user may verify an identity of a new node. The first PSK is generated only after the first acknowledgement indication information is obtained. Therefore, association between the apparatus 140 and an untrusted node is avoided, and communication security of the apparatus 140 is ensured.

In another possible implementation, the processing unit 1402 is specifically configured to generate the first PSK based on the first fresh parameter, the fourth fresh parameter, and a first password, where the first password is a password for accessing the apparatus.

It can be learned that, when the first password is the password for accessing the apparatus 140, the second node is connected to the apparatus 140 by using the entered first password. Therefore, the first password is used to participate in generating the first PSK, so that an attacker who does not obtain the first password cannot crack the first PSK. In this way, the apparatus 140 can be prevented from being associated with the attacker who does not obtain the first password.

In another possible implementation, the first association request message further includes a first key agreement algorithm parameter; and the processing unit 1402 is specifically configured to generate the first PSK based on the first fresh parameter, the fourth fresh parameter, a first password, and the first key agreement algorithm parameter.

It can be learned that, the second node uses the first association request message to carry the first key agreement algorithm parameter, and the first key agreement algorithm parameter is determined based on a first key agreement algorithm. The apparatus 140 may determine the first PSK based on the first key agreement algorithm, the first key agreement algorithm parameter, the first fresh parameter, the fourth fresh parameter, and the first password. In this way, even if the attacker subsequently counterfeits identity information of the second node and obtains the first fresh parameter and the fourth fresh parameter that are used to generate the first PSK, the attacker cannot crack the first PSK. Therefore, the attacker cannot communicate with the apparatus 140. This improves communication security of the apparatus 140.

In another possible implementation, the first association request message further includes a first key agreement algorithm parameter; and the processing unit 1402 is specifically configured to:
generate the first PSK based on the first fresh parameter, the fourth fresh parameter, a first password, and an intermediate key, where the first password is an access password, and the intermediate key is generated based on the first fresh parameter, the fourth fresh parameter, and the first key agreement algorithm parameter.

In another possible implementation, the first association request message further includes a first key agreement algorithm parameter, the first key agreement algorithm parameter is determined based on a first key agreement algorithm, and the processing unit 1402 is specifically configured to:
determine a third key agreement algorithm parameter;
determine a first intermediate key based on the first key agreement algorithm, the first key agreement algorithm parameter, and the third key agreement algorithm parameter; and
generate the first PSK based on the first fresh parameter, the fourth fresh parameter, a first password, and the first intermediate key.

It can be learned that after receiving the first key agreement algorithm parameter from the second node, the apparatus 140 determines the third key agreement algorithm parameter (that is, a private key of the apparatus 140). The apparatus 140 determines the first intermediate key based on the first key agreement algorithm, the first key agreement algorithm parameter, and the second key agreement algorithm parameter, and then generates the first PSK based on the first fresh parameter, the fourth fresh parameter, the first password, and the first intermediate key.

In another possible implementation, the first association request message further includes a first key agreement algorithm parameter, the first key agreement algorithm parameter is determined based on a first key agreement algorithm, and the processing unit 1402 is specifically configured to:
obtain a third key agreement algorithm parameter;
determine a first intermediate key based on the first key agreement algorithm, the first key agreement algorithm parameter, and the third key agreement algorithm parameter;
determine a second intermediate key based on the first fresh parameter, the fourth fresh parameter, and the first intermediate key; and
generate the first PSK based on the first fresh parameter, the fourth fresh parameter, a first password, and the second intermediate key.

In another possible implementation, the processing unit 1402 is further configured to store a correspondence between the identity of the second node and the first PSK.

It can be learned that after generating the first PSK, the apparatus 140 stores the correspondence between the identity of the second node and the first PSK. When receiving an association request from the second node again subsequently, the apparatus may obtain the first PSK based on the correspondence without regenerating the first PSK.

In another possible implementation, the processing unit 1402 is further configured to delete the correspondence between the identity of the second node and the first PSK if the first password is updated.

In another possible implementation, the first authentication request message further includes update indication information, and the update indication information is used to indicate a PSK update.

It can be learned that after generating the first PSK based on the first fresh parameter and the fourth fresh parameter, the apparatus 140 may remind the second node to update a PSK, to prevent the second node from using a previous old PSK to verify identity authentication information, so as to avoid a verification failure and avoid affecting user experience.

In another possible implementation, the processing unit 1402 is further configured to generate a third PSK based on the first fresh parameter and the fourth fresh parameter if verification performed by the apparatus 140 on the second identity authentication information based on the first PSK and the fourth fresh parameter fails; and
the sending unit 1403 is further configured to send a second authentication request message to the second node, where the second authentication request message includes third identity authentication information, and the third identity authentication information is generated based on the third PSK and the first fresh parameter.

It can be learned that, when the apparatus 140 obtains the first PSK based on the correspondence, if verification performed by the apparatus 140 on the second identity authentication information fails, a possible reason may be that the second node uses a newly generated PSK to generate the second identity authentication information. Therefore, the apparatus 140 also generates a new PSK (namely, the third PSK) based on the first fresh parameter and the fourth fresh parameter, and re-initiates authentication based on the new PSK. This can improve system stability.

In another possible implementation, the processing unit 1402 is further configured to obtain second acknowledgement indication information if the verification performed on the second identity authentication information based on the first PSK and the fourth fresh parameter fails, where the second acknowledgement indication information indicates that generation of the third PSK is allowed; and
the processing unit 1402 is further configured to generate the third PSK based on the first fresh parameter and the fourth fresh parameter.

In another possible implementation, the receiving unit 1401 is further configured to receive a second authentication response message from the second node, where the second authentication response message includes fourth identity authentication information; and
the sending unit 1403 is further configured to send a second association response message to the second node if verification performed on the fourth identity authentication information based on the third PSK and the fourth fresh parameter succeeds.

It can be learned that after re-initiating authentication based on the new PSK, the apparatus 140 receives the fourth identity authentication information sent by the second node. If the verification performed on the fourth identity authentication information succeeds, it indicates that the identity of the second node is trusted. Therefore, communication with the second node can be allowed.

It should be noted that, for implementation of each unit, refer to corresponding descriptions in any embodiment shown in FIG. 5, FIG. 8, FIG. 9, FIG. 10, FIG. 11, FIG. 12, or FIG. 13A and FIG. 13B. The apparatus 140 may be the first node in any embodiment shown in FIG. 5, FIG. 8, FIG. 9, FIG. 10, FIG. 11, FIG. 12, or FIG. 13A and FIG. 13B.

FIG. 15 is a schematic structural diagram of an apparatus 150 according to an embodiment of this application. The apparatus 150 may be an electronic device having data sending and receiving capabilities, or may be a component, such as a chip or an integrated circuit, in an electronic device having data sending and receiving capabilities. The apparatus 150 may include a sending unit 1501, a receiving unit 1502, and a processing unit 1503. Descriptions of the units are as follows:

The sending unit 1501 is configured to send a first association request message to a first node, where the first association request message includes a first fresh parameter.

The receiving unit 1502 is configured to receive a first authentication request message from the first node, where the first authentication request message includes a fourth fresh parameter.

The processing unit 1503 is configured to obtain a second PSK, where the second PSK corresponds to an identity of the first node, the second PSK is a PSK generated based on a second fresh parameter from the apparatus 150 and a third fresh parameter from the first node, and the second PSK is used to verify the identity of the first node.

It can be learned that a PSK is a secret value shared by the apparatus 150 and the first node. The apparatus 150 generates the second PSK by using the second fresh parameter and the third fresh parameter from the apparatus 150, and uses the second PSK to correspond to the identity of the first node, to verify the identity of the first node (for example, the first node generates identity authentication information based on a PSK, and the second node may verify the identity authentication information of the first node by using the second PSK; for another example, the first node performs encryption or integrity protection on message content by using a PSK (or a key derived based on the PSK), and the second node may obtain the message content from the second node by using the first PSK). In this way, if an attacker wants to counterfeit the identity of the first node to associate with the apparatus 150, because the second fresh parameter and the third fresh parameter that are used to generate the second PSK may be obtained before the first association request message, for example, may be obtained when the apparatus 150 is associated with the first node for the first time, and previously obtained data is usually difficult to crack, the attacker cannot forge a PSK, and therefore identity authentication performed by the apparatus 150 on the attacker cannot succeed. This prevents the apparatus 150 from being associated with an untrusted node, and improves communication security of the apparatus 150.

It should be noted herein that division into the foregoing plurality of units is merely logical division based on functions, and is not used as a limitation on a specific structure of the apparatus 150. In specific implementation, some functional modules may be subdivided into more small functional modules, or some functional modules may be combined into one functional module. However, regardless of whether these functional modules are subdivided or combined, procedures performed by the apparatus 150 in a key obtaining process are roughly the same. For example, the plurality of units may alternatively be converted into a communications unit and a processing unit, and the communications unit is configured to implement functions of the sending unit 1501 and the receiving unit 1502. Usually, each unit corresponds to program code (that is, program instructions) of the unit. When program code corresponding to the units is run on a processor, the units are enabled to perform corresponding procedures to implement corresponding functions.

In a possible implementation, the sending unit 1501 is further configured to send a first authentication response message to the first node if verification performed on the first identity authentication information based on the second PSK and the first fresh parameter succeeds, where the first authentication response message includes second identity authentication information, and the second identity authentication information is generated based on the second PSK and the fourth fresh parameter; and
the receiving unit 1502 is further configured to receive a first association response message from the first node.

It can be learned that, because a PSK is a secret value shared by the apparatus 150 and the first node, the second PSK in the apparatus 150 usually has a same value as a first PSK in the first node. The first identity authentication information is generated by the first node based on the first PSK and the first fresh parameter. Therefore, the apparatus 150 may verify the identity authentication information of the first node based on the second PSK and the first fresh parameter. If verification based on the second PSK stored in the apparatus 150 cannot succeed, it indicates that the identity of the first node is untrusted. Therefore, association between the apparatus 150 and an untrusted node can be avoided, and communication security of the apparatus 150 can be improved. Correspondingly, the apparatus 150 generates the second identity authentication information based on the second PSK and the fourth fresh parameter, and the second identity authentication information is used by the first node to verify an identity of the apparatus 150. Communication with a peer node is allowed only after identity authentication of both parties succeeds. This improves node communication security.

In another possible implementation, the processing unit 1503 is specifically configured to obtain the second PSK based on a correspondence between the first PSK and the identity of the first node.

It can be learned that, the correspondence between the second PSK and the identity of the first node exists in the apparatus 150. This may indicate that the apparatus 150 has been associated with the first node before or the second PSK corresponding to the identity of the first node is preconfigured in the second node. Therefore, the apparatus 150 may obtain the second PSK based on the correspondence.

In another possible implementation, the processing unit 1503 is specifically configured to:
obtain the second PSK based on a correspondence between the second PSK and the identity of the first node by using the second correspondence set.

It can be learned that the apparatus 150 may store the correspondence between the second PSK and the identity of the first node in a form of a correspondence set.

In another possible implementation, the processing unit is specifically configured to generate the second PSK based on the first fresh parameter and the fourth fresh parameter, where the first fresh parameter is the second fresh parameter, and the fourth fresh parameter is the third fresh parameter.

It can be learned that, the second PSK is generated based on the first fresh parameter in the first association request message and the fourth fresh parameter in the first authentication request message. Usually, when the apparatus 150 is associated with the first node for the first time or when the apparatus 150 deletes a correspondence, the second PSK corresponding to the identity of the first node does not exist in the apparatus 150. Therefore, the apparatus 150 may generate the new second PSK based on the first fresh parameter and the fourth fresh parameter, to verify the identity of the first node.

In another possible implementation, the processing unit 1503 is further configured to obtain third acknowledgement indication information, where the third acknowledgement indication information indicates that generation of the second PSK is allowed.

It can be learned that when the new second PSK is generated, an acknowledgement of a user is required. In this way, when an attacker uses an identity of the attacker to connect to the apparatus 150, because a PSK corresponding to the identity of the attacker does not exist in the apparatus 150, the user may verify an identity of a new node. The second PSK is generated only after the third acknowledgement indication information is obtained. Therefore, association between the apparatus 150 and an untrusted node is avoided, and communication security of the apparatus 150 is ensured.

In another possible implementation, the processing unit 1503 is specifically configured to generate the second PSK based on the first fresh parameter, the fourth fresh parameter, and a first password, where the first password is a password for accessing the first node.

It can be learned that, when the first password is the password for accessing the first node, the apparatus 150 is connected to the first node by using the entered first password. Therefore, the first password is used to participate in generating the second PSK, so that an attacker who does not obtain the first password cannot crack the second PSK. In this way, the apparatus 150 can be prevented from being associated with the attacker who does not obtain the first password.

In another possible implementation, the processing unit 1503 is specifically configured to generate the second PSK based on the first fresh parameter, the fourth fresh parameter, a first password, and a second key agreement algorithm parameter.

It can be learned that, the first node uses the first authentication request message to carry the second key agreement algorithm parameter, and the first key agreement algorithm parameter is determined based on a first key agreement algorithm. The apparatus 150 may determine the second PSK based on the first key agreement algorithm, the second key agreement algorithm parameter, the first fresh parameter, the fourth fresh parameter, and the first password. In this way, even if the attacker subsequently counterfeits identity information of the first node and obtains the first fresh parameter and the fourth fresh parameter that are used to generate the second PSK, the attacker cannot crack the PSK. Therefore, the attacker cannot communicate with the apparatus 150. This improves communication security of the apparatus.

In another possible implementation, the first authentication request message further includes a second key agreement algorithm parameter; and the processing unit 1503 is specifically configured to:
generate the second PSK based on the first fresh parameter, the fourth fresh parameter, a first password, and an intermediate key, where the first password is an access password, and the intermediate key is generated based on the first fresh parameter, the fourth fresh parameter, and the second key agreement algorithm parameter. In another possible implementation, the first association request message further includes a first key agreement algorithm parameter, the first key agreement algorithm parameter is determined based on a first key agreement algorithm and a fourth key agreement algorithm parameter, the first authentication request message further includes a second key agreement algorithm parameter, the second key agreement algorithm parameter is determined by the first node based on the first key agreement algorithm and a third key agreement algorithm parameter, and the processing unit 1503 is specifically configured to:
determine a first intermediate key based on the second key agreement algorithm parameter and the fourth key agreement algorithm parameter; and
generate the second PSK based on the first fresh parameter, the fourth fresh parameter, a first password, and the first intermediate key.

It can be learned that the first key agreement algorithm parameter in the first association request message is generated based on a private key (that is, the fourth key agreement algorithm parameter) of the apparatus 150. After the apparatus 150 receives the second key agreement algorithm parameter from the first node, the second node determines the first intermediate key based on the second key agreement algorithm parameter and the private key (that is, the fourth key agreement algorithm parameter) of the apparatus 150. The first intermediate key is a secret value obtained through key agreement between the first node and the apparatus. Then, the apparatus 150 generates the second PSK based on the first fresh parameter, the fourth fresh parameter, the first password, and the first intermediate key.

In another possible implementation, the first authentication request message further includes a second key agreement algorithm parameter, the second key agreement algorithm parameter is determined based on a first key agreement algorithm, and the processing unit 1503 is specifically configured to:
obtain a fourth key agreement algorithm parameter;
determine a first intermediate key based on the first key agreement algorithm, the second key agreement algorithm parameter, and the fourth key agreement algorithm parameter;
determine a second intermediate key based on the first fresh parameter, the fourth fresh parameter, and the first intermediate key; and
generate the second PSK based on the first fresh parameter, the fourth fresh parameter, a first password, and the second intermediate key.

In another possible implementation, the processing unit 1503 is further configured to store a correspondence between the identity of the first node and the second PSK.

It can be learned that after generating the second PSK, the apparatus 150 stores the correspondence between the identity of the first node and the second PSK. When being associated with the first node again subsequently, the apparatus may obtain the second PSK based on the correspondence without regenerating the PSK.

In another possible implementation, the processing unit 1503 is further configured to delete the correspondence between the identity of the first node and the second PSK if the first password is updated.

In another possible implementation, the first authentication request message further includes update indication information, and the update indication information is used to indicate a PSK update.

It can be learned that after the second PSK is generated based on the first fresh parameter and the fourth fresh parameter, the first node may remind, by using the update indication information, the apparatus 150 to update the second PSK, to prevent the apparatus 150 from using a previous old PSK to verify identity authentication information, so as to avoid a verification failure and avoid affecting user experience.

In another possible implementation, the processing unit is further configured to generate a fourth PSK based on the first fresh parameter and the fourth fresh parameter if verification performed on the first identity authentication information based on the second PSK and the first fresh parameter fails; and
the sending unit 1501 is further configured to send a third authentication response message to the first node, where the third authentication response message includes third identity authentication information, and the third identity authentication information is generated based on the fourth PSK and the fourth fresh parameter.

It can be learned that, when the apparatus 150 obtains the second PSK based on the correspondence, if verification performed by the apparatus 150 on the first identity authentication information fails, a possible reason may be that the first node uses a newly generated PSK to generate the first identity authentication information. Therefore, the apparatus 150 also generates a new PSK (namely, the fourth PSK) based on the first fresh parameter and the fourth fresh parameter, and re-initiates authentication based on the new PSK. This can improve system stability.

In another possible implementation, the receiving unit 1502 is further configured to receive a third association response message from the first node.

In another possible implementation, the processing unit is further configured to obtain fourth acknowledgement indication information if the verification performed on the first identity authentication information based on the second PSK fails, where the fourth acknowledgement indication information indicates that generation of the fourth PSK is allowed; and
the processing unit is further configured to generate the fourth PSK based on the first fresh parameter and the fourth fresh parameter.

In another possible implementation, the processing unit 1503 is further configured to delete the second PSK if verification performed on the second identity authentication information based on the second PSK and the first fresh parameter fails; and
the sending unit 1501 is further configured to send a second association request message to the first node, where the second association request message includes a fifth fresh parameter.

It should be noted that, for implementation of each unit, refer to corresponding descriptions in any embodiment shown in FIG. 5, FIG. 8, FIG. 9, FIG. 10, FIG. 11, FIG. 12, or FIG. 13A and FIG. 13B. The apparatus 150 is the second node in any embodiment shown in FIG. 5, FIG. 8, FIG. 9, FIG. 10, FIG. 11, FIG. 12, or FIG. 13A and FIG. 13B.

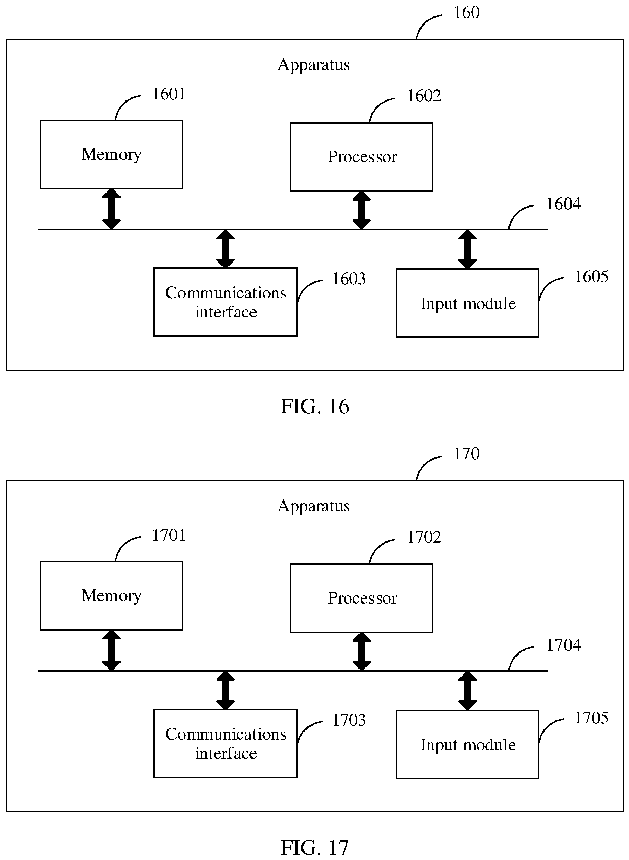

FIG. 16 is a schematic structural diagram of an apparatus 160 according to an embodiment of this application. The apparatus 160 may be an electronic device having data sending and receiving capabilities, or may be a component, such as a chip or an integrated circuit, in an electronic device having data sending and receiving capabilities. The apparatus 160 may include at least one memory 1601, at least one processor 1602, and a communications interface 1603. Further, optionally, a bus 1604 may be included. The memory 1601, the processor 1602, and the communications interface 1603 are connected by using the bus 1604.

The memory 1601 is configured to provide storage space, and the storage space may store data such as an operating system and a computer program. The memory 1601 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

The processor 1602 is a module that performs an arithmetic operation and/or a logic operation, and may be specifically one or a combination of processing modules such as a central processing unit (central processing unit, CPU), a graphics processing unit (graphics processing unit, GPU), a microprocessor unit (microprocessor unit, MPU), an application-specific integrated circuit (Application-Specific Integrated Circuit, ASIC), a field programmable gate array (Field Programmable Gate Array, FPGA), and a complex programmable logic device (Complex programmable logic device, CPLD).

The communications interface 1603 is configured to receive data sent from the outside and/or send data to the outside, and may be an interface of a wired link such as an Ethernet cable, or may be a wireless link (Wi-Fi, Bluetooth, or the like) interface. Optionally, the communications interface 1603 may further include a transmitter (for example, a radio frequency transmitter or an antenna), a receiver, or the like coupled to the interface.

The processor 1602 in the apparatus 160 is configured to read the computer program stored in the memory 1601, to perform the foregoing key obtaining method, for example, the key obtaining method described in any embodiment shown in FIG. 5, FIG. 8, FIG. 9, FIG. 10, FIG. 11, FIG. 12, or FIG. 13A and FIG. 13B.

For example, the processor 1602 in the apparatus 160 is configured to read the computer program stored in the memory 1601, to perform the following operations:
receiving a first association request message from a second node through the communications interface 1603, where the first association request message includes a first fresh parameter; and
obtaining a first pre-shared key PSK, where the first PSK corresponds to an identity of the second node, the first PSK is a PSK generated based on a second fresh parameter from the second node and a third fresh parameter from the apparatus 160, and the first PSK is used to verify the identity of the second node.

It can be learned that a PSK is a secret value shared by the apparatus 160 and the second node. The apparatus 160 generates the first PSK by using the second fresh parameter from the second node and the third fresh parameter from the apparatus 160, and uses the first PSK to correspond to the identity of the second node, to verify the identity of the second node (for example, the second node generates identity authentication information based on a PSK, and the first node may verify the identity authentication information of the second node by using the first PSK; for another example, the second node performs encryption or integrity protection on message content by using a PSK (or a key derived based on the PSK), and the first node may obtain the message content from the second node by using the first PSK). In this way, if an attacker wants to counterfeit the identity of the second node to associate with the apparatus 160, because the second fresh parameter and the third fresh parameter that are used to generate the first PSK may be obtained before the first association request message, for example, may be obtained when the apparatus 160 is associated with the second node for the first time, and previously obtained data is usually difficult to crack, the attacker cannot forge a PSK, and therefore identity authentication performed by the apparatus 160 on the attacker cannot succeed. This prevents the apparatus 160 from being connected to an untrusted node, and improves communication security of the apparatus 160.

In a possible implementation, the processor 1602 is further configured to:
send a first authentication request message to the second node, where the first authentication request message includes first identity authentication information and a fourth fresh parameter, and the first identity authentication information is generated based on the first PSK and the first fresh parameter.

It can be learned that, because a PSK is a secret value shared by the apparatus 160 and the second node, the first PSK in the apparatus 160 usually has a same value as a second PSK in the second node. The apparatus 160 generates the first identity authentication information based on the first PSK and the first fresh parameter, so that the second node can verify an identity of the apparatus 160 based on the second PSK. If verification based on the second PSK stored in the second node cannot succeed, it indicates that the identity of the apparatus is untrusted. Therefore, association between the second node and an untrusted node can be avoided, and communication security of the second node can be improved.

In another possible implementation, the processor 1602 is further configured to:
receive a first authentication response message from the second node through the communications interface 1603, where the first authentication response message includes second identity authentication information; and
send a first association response message to the second node through the communications interface 1603 if verification performed on the second identity authentication information based on the first PSK and the fourth fresh parameter succeeds.

It can be learned that before the apparatus 160 communicates with the second node, the apparatus 160 and the second node first determine identities of both parties by using identity authentication information. Communication is allowed only after identity authentication succeeds. This avoids access of an untrusted node, and improves node communication security.

In another possible implementation, the processor 1602 is specifically configured to:
obtain the first PSK based on a correspondence between the first PSK and the identity of the second node.

It can be learned that, the correspondence between the first PSK and the identity of the second node exists in the apparatus 160. This may indicate that the second node has been associated with the apparatus 160 before or the first PSK corresponding to the identity of the second node is preconfigured in the apparatus 160. Therefore, the apparatus 160 may obtain the first PSK based on the correspondence.

In another possible implementation, a first correspondence set exists in the memory 1601, and the processor 1602 is specifically configured to:
obtain the first PSK based on a correspondence between the first PSK and the identity of the second node by using the first correspondence set.

It can be learned that the apparatus 160 may store the correspondence between the first PSK and the identity of the second node in a form of a correspondence set.

In another possible implementation, the processor 1602 is specifically configured to:
generate the first PSK based on the first fresh parameter and the fourth fresh parameter, where the first fresh parameter is the second fresh parameter, and the fourth fresh parameter is the third fresh parameter.

It can be learned that, the first PSK is generated based on the first fresh parameter in the first association request message and the fourth fresh parameter from the apparatus 160. Usually, when the apparatus 160 is associated with the second node for the first time or when the apparatus 160 deletes a correspondence, a PSK corresponding to the identity of the second node does not exist in the apparatus 160. Therefore, the apparatus 160 may generate the new first PSK based on the first fresh parameter and the fourth fresh parameter, to verify the identity of the second node.

In another possible implementation, the apparatus further includes an input module 1605, and the processor 1602 is further configured to:
obtain first acknowledgement indication information through the input module 1605, where the first acknowledgement indication information indicates that association between the second node and the apparatus 160 is allowed.

It can be learned that when the new first PSK is generated, an acknowledgement of a user is required. In this way, when an attacker uses an identity of the attacker to connect to the apparatus 160, because a PSK corresponding to the identity of the attacker does not exist in the apparatus 160, the user may verify an identity of a new node. The first PSK is generated only after the first acknowledgement indication information is obtained. Therefore, association between the apparatus 160 and an untrusted node is avoided, and communication security of the apparatus 160 is ensured.

In another possible implementation, the processor 1602 is specifically configured to:
generate the first PSK based on the first fresh parameter, the fourth fresh parameter, and a first password, where the first password is a password for accessing the apparatus 160.

It can be learned that, when the first password is the password for accessing the apparatus 160, the second node is connected to the apparatus 160 by using the entered first password. Therefore, the first password is used to participate in generating the first PSK, so that an attacker who does not obtain the first password cannot crack the first PSK. In this way, the apparatus 160 can be prevented from being associated with the attacker who does not obtain the first password.

In another possible implementation, the first association request message further includes a first key agreement algorithm parameter; and the processor 1602 is specifically configured to:
generate the first PSK based on the first fresh parameter, the fourth fresh parameter, a first password, and the first key agreement algorithm parameter.

It can be learned that, the second node uses the first association request message to carry the first key agreement algorithm parameter, and the first key agreement algorithm parameter is determined based on a first key agreement algorithm. The apparatus 160 may determine the first PSK based on the first key agreement algorithm, the first key agreement algorithm parameter, the first fresh parameter, the fourth fresh parameter, and the first password. In this way, even if the attacker subsequently counterfeits identity information of the second node and obtains the first fresh parameter and the fourth fresh parameter that are used to generate the first PSK, the attacker cannot crack the first PSK. Therefore, the attacker cannot communicate with the apparatus 160. This improves communication security of the apparatus 160.

In another possible implementation, the first association request message further includes a first key agreement algorithm parameter; and the processor 1602 is specifically configured to:
generate the first PSK based on the first fresh parameter, the fourth fresh parameter, a first password, and an intermediate key, where the first password is an access password, and the intermediate key is generated based on the first fresh parameter, the fourth fresh parameter, and the first key agreement algorithm parameter.

In another possible implementation, the first association request message further includes a first key agreement algorithm parameter, the first key agreement algorithm parameter is determined based on a first key agreement algorithm, and the processor 1602 is specifically configured to:
determine a third key agreement algorithm parameter;
determine a first intermediate key based on the first key agreement algorithm, the first key agreement algorithm, and the third key agreement algorithm; and
generate the first PSK based on the first fresh parameter, the fourth fresh parameter, a first password, and the first intermediate key.

It can be learned that after receiving the first key agreement algorithm parameter from the second node, the apparatus 160 determines the third key agreement algorithm parameter (that is, a private key of the apparatus 160). The apparatus 160 determines the first intermediate key based on the first key agreement algorithm, the first key agreement algorithm parameter, and the second key agreement algorithm parameter, and then generates the first PSK based on the first fresh parameter, the fourth fresh parameter, the first password, and the first intermediate key.

In another possible implementation, the first association request message further includes a first key agreement algorithm parameter, the first key agreement algorithm parameter is determined based on a first key agreement algorithm, and the processor 1602 is specifically configured to:
obtain a third key agreement algorithm parameter;
determine a first intermediate key based on the first key agreement algorithm, the first key agreement algorithm parameter, and the third key agreement algorithm parameter;
determine a second intermediate key based on the first fresh parameter, the fourth fresh parameter, and the first intermediate key; and
generate the first PSK based on the first fresh parameter, the fourth fresh parameter, a first password, and the second intermediate key.

In another possible implementation, the processor 1602 is further configured to:
store a correspondence between the identity of the second node and the first PSK.

It can be learned that after generating the first PSK, the apparatus 160 stores the correspondence between the identity of the second node and the first PSK. When receiving an association request from the second node again subsequently, the apparatus may obtain the first PSK based on the correspondence without regenerating the first PSK.

In another possible implementation, the processor 1602 is further configured to:
delete the correspondence between the identity of the second node and the first PSK if the first password is updated.

In another possible implementation, the first authentication request message further includes update indication information, and the update indication information is used to indicate a PSK update.

It can be learned that after generating the first PSK based on the first fresh parameter and the fourth fresh parameter, the apparatus 160 may remind the second node to update a PSK, to prevent the second node from using a previous old PSK to verify identity authentication information, so as to avoid a verification failure and avoid affecting user experience.

In another possible implementation, the processor 1602 is further configured to:
generate a third PSK based on the first fresh parameter and the fourth fresh parameter if verification performed on the second identity authentication information based on the first PSK and the fourth fresh parameter fails; and
send a second authentication request message to the second node through the communications interface 1603, where the second authentication request message includes third identity authentication information, and the third identity authentication information is generated based on the third PSK and the first fresh parameter.

It can be learned that, when the apparatus 160 obtains the first PSK based on the correspondence, if verification performed by the apparatus 160 on the second identity authentication information fails, a possible reason may be that the second node uses a newly generated PSK to generate the second identity authentication information. Therefore, the apparatus 160 also generates a new PSK (namely, the third PSK) based on the first fresh parameter and the fourth fresh parameter, and re-initiates authentication based on the new PSK. This can improve system stability.

In another possible implementation, the processor 1602 is specifically configured to:
obtain second acknowledgement indication information through the communications interface 1603 if the verification performed on the second identity authentication information based on the first PSK and the fourth fresh parameter fails, where the second acknowledgement indication information indicates that generation of the third PSK is allowed; and
generate the third PSK based on the first fresh parameter and the fourth fresh parameter.

In another possible implementation, the processor 1602 is further configured to:
receive a second authentication response message from the second node through the communications interface 1603, where the second authentication response message includes fourth identity authentication information; and
send a second association response message to the second node through the communications interface 1603 if verification performed on the fourth identity authentication information based on the third PSK and the fourth fresh parameter succeeds.

It can be learned that after re-initiating authentication based on the new PSK, the apparatus 160 receives the fourth identity authentication information sent by the second node. If the verification performed on the fourth identity authentication information succeeds, it indicates that the identity of the second node is trusted. Therefore, communication with the second node can be allowed.

It should be noted that, for implementation of each module, refer to corresponding descriptions in any embodiment shown in FIG. 5, FIG. 8, FIG. 9, FIG. 10, FIG. 11, FIG. 12, or FIG. 13A and FIG. 13B. The apparatus 160 is the first node in any embodiment shown in FIG. 5, FIG. 8, FIG. 9, FIG. 10, FIG. 11, FIG. 12, or FIG. 13A and FIG. 13B.

FIG. 17 is a schematic structural diagram of an apparatus 170 according to an embodiment of this application. The apparatus 170 may be an electronic device having data sending and receiving capabilities, or may be a component, such as a chip or an integrated circuit, in an electronic device having data sending and receiving capabilities. The apparatus 170 may include at least one memory 1701, at least one processor 1702, and a communications interface 1703. Further, optionally, a bus 1704 may be included. The memory 1701, the processor 1702, and the communications interface 1703 are connected by using the bus 1704.

The memory 1701 is configured to provide storage space, and the storage space may store data such as an operating system and a computer program. The memory 1701 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

The processor 1702 is a module that performs an arithmetic operation and/or a logic operation, and may be specifically one or a combination of processing modules such as a CPU, a GPU, an MPU, an ASIC, an FPGA, and a CPLD.

The communications interface 1703 is configured to receive data sent from the outside and/or send data to the outside, and may be an interface of a wired link such as an Ethernet cable, or may be a wireless link (Wi-Fi, Bluetooth, or the like) interface. Optionally, the communications interface 1703 may further include a transmitter (for example, a radio frequency transmitter), a receiver, or the like coupled to the interface.

The processor 1702 in the apparatus 170 is configured to read the computer program stored in the memory 1701, to perform the foregoing key obtaining method, for example, the key obtaining method described in any embodiment shown in FIG. 5, FIG. 8, FIG. 9, FIG. 10, FIG. 11, FIG. 12, or FIG. 13A and FIG. 13B.

For example, the processor 1702 in the apparatus 170 is configured to read the computer program stored in the memory 1701, to perform the following operations:
sending a first association request message to a first node through the communications interface 1703, where the first association request message includes a first fresh parameter;
receiving a first authentication request message from the first node through the communications interface 1703, where the first authentication request message includes a fourth fresh parameter; and
obtaining a second PSK, where the second PSK corresponds to an identity of the first node, the second PSK is a PSK generated based on a second fresh parameter from the apparatus 170 and a third fresh parameter from the first node, and the second PSK is used to verify the identity of the first node.

It can be learned that a PSK is a secret value shared by the apparatus 170 and the first node. The apparatus 170 generates the second PSK by using the second fresh parameter and the third fresh parameter from the apparatus 170, and uses the second PSK to correspond to the identity of the first node, to verify the identity of the first node (for example, the first node generates identity authentication information based on a PSK, and the second node may verify the identity authentication information of the first node by using the second PSK; for another example, the first node performs encryption or integrity protection on message content by using a PSK (or a key derived based on the PSK), and the second node may obtain the message content from the second node by using the first PSK). In this way, if an attacker wants to counterfeit the identity of the first node to associate with the apparatus 170, because the second fresh parameter and the third fresh parameter that are used to generate the second PSK may be obtained before the first association request message, for example, may be obtained when the apparatus 170 is associated with the first node for the first time, and previously obtained data is usually difficult to crack, the attacker cannot forge a PSK, and therefore identity authentication performed by the apparatus 170 on the attacker cannot succeed. This prevents the apparatus 170 from being associated with an untrusted node, and improves communication security of the apparatus 170.

In a possible implementation, the processor 1702 is further configured to:
send a first authentication response message to the first node through the communications interface 1703 if verification performed on the first identity authentication information based on the second PSK and the first fresh parameter succeeds, where the first authentication response message includes second identity authentication information, and the second identity authentication information is generated based on the second PSK and the fourth fresh parameter; and
receive a first association response message from the first node through the communications interface 1703.

It can be learned that, because a PSK is a secret value shared by the apparatus 170 and the first node, the second PSK in the apparatus 170 usually has a same value as a first PSK in the first node. The first identity authentication information is generated by the first node based on the first PSK and the first fresh parameter. Therefore, the apparatus 170 may verify the identity authentication information of the first node based on the second PSK and the first fresh parameter. If verification based on the second PSK stored in the apparatus 170 cannot succeed, it indicates that the identity of the first node is untrusted. Therefore, association between the apparatus 170 and an untrusted node can be avoided, and communication security of the apparatus 170 can be improved. Correspondingly, the apparatus 170 generates the second identity authentication information based on the second PSK and the fourth fresh parameter, and the second identity authentication information is used by the first node to verify an identity of the apparatus 170. Communication with a peer node is allowed only after identity authentication of both parties succeeds. This improves node communication security.

In another possible implementation, the processor 1702 is specifically configured to:
obtain the second PSK based on a correspondence between the second PSK and the identity of the first node.

It can be learned that, the correspondence between the second PSK and the identity of the first node exists in the apparatus 170. This may indicate that the apparatus 170 has been associated with the first node before or the second PSK corresponding to the identity of the first node is preconfigured in the second node. Therefore, the apparatus 170 may obtain the second PSK based on the correspondence.

In another possible implementation, a second correspondence set is stored in the memory, and the processor 1702 is specifically configured to:
obtain the second PSK based on a correspondence between the second PSK and the identity of the first node by using the second correspondence set.

It can be learned that the apparatus 170 may store the correspondence between the second PSK and the identity of the first node in a form of a correspondence set.

In another possible implementation, the processor 1702 is specifically configured to:
generate the second PSK based on the first fresh parameter and the fourth fresh parameter, where the first fresh parameter is the second fresh parameter, and the fourth fresh parameter is the third fresh parameter.

It can be learned that, the second PSK is generated based on the first fresh parameter in the first association request message and the fourth fresh parameter in the first authentication request message. Usually, when the apparatus 170 is associated with the first node for the first time or when the apparatus 170 deletes a correspondence, the second PSK corresponding to the identity of the first node does not exist in the apparatus 170. Therefore, the apparatus 170 may generate the new second PSK based on the first fresh parameter and the fourth fresh parameter, to verify the identity of the first node.

In another possible implementation, the apparatus 170 further includes an input module 1705, and the processor 1702 is further configured to:
obtain third acknowledgement indication information through the input module 1705, where the third acknowledgement indication information indicates that generation of the second PSK is allowed.

It can be learned that when the new second PSK is generated, an acknowledgement of a user is required. In this way, when an attacker uses an identity of the attacker to connect to the apparatus 170, because a PSK corresponding to the identity of the attacker does not exist in the apparatus 170, the user may verify an identity of a new node. The second PSK is generated only after the third acknowledgement indication information is obtained. Therefore, association between the apparatus 170 and an untrusted node is avoided, and communication security of the apparatus 170 is ensured.

In another possible implementation, the processor 1702 is specifically configured to:
generate the second PSK based on the first fresh parameter, the fourth fresh parameter, and a first password, where the first password is a password for accessing the apparatus.

It can be learned that, when the first password is the password for accessing the first node, the apparatus 170 is connected to the first node by using the entered first password. Therefore, the first password is used to participate in generating the second PSK, so that an attacker who does not obtain the first password cannot crack the second PSK. In this way, the apparatus 170 can be prevented from being associated with the attacker who does not obtain the first password.

In another possible implementation, the first authentication request message further includes a second key agreement algorithm parameter; and the processor 1702 is specifically configured to:
generate the second PSK based on the first fresh parameter, the fourth fresh parameter, a first password, and the second key agreement algorithm parameter.

It can be learned that, the first node uses the first authentication request message to carry the second key agreement algorithm parameter, and the first key agreement algorithm parameter is determined based on a first key agreement algorithm. The apparatus 170 may determine the second PSK based on the first key agreement algorithm, the second key agreement algorithm parameter, the first fresh parameter, the fourth fresh parameter, and the first password. In this way, even if the attacker subsequently counterfeits identity information of the first node and obtains the first fresh parameter and the fourth fresh parameter that are used to generate the second PSK, the attacker cannot crack the PSK. Therefore, the attacker cannot communicate with the apparatus 170. This improves communication security of the apparatus 170.

In another possible implementation, the first authentication request message further includes a second key agreement algorithm parameter; and the processor 1702 is specifically configured to:
generate the second PSK based on the first fresh parameter, the fourth fresh parameter, a first password, and an intermediate key, where the first password is an access password, and the intermediate key is generated based on the first fresh parameter, the fourth fresh parameter, and the second key agreement algorithm parameter.

In another possible implementation, the first association request message further includes a first key agreement algorithm parameter, the first key agreement algorithm parameter is determined based on a first key agreement algorithm and a fourth key agreement algorithm parameter, the first authentication request message further includes a second key agreement algorithm parameter, the second key agreement algorithm parameter is determined by the first node based on the first key agreement algorithm and a third key agreement algorithm parameter, and the processor 1702 is specifically configured to:
determine a first intermediate key based on the second key agreement algorithm parameter and the fourth key agreement algorithm parameter; and
generate the second PSK based on the first fresh parameter, the fourth fresh parameter, a first password, and the first intermediate key.

It can be learned that the first key agreement algorithm parameter in the first association request message is generated based on a private key (that is, the fourth key agreement algorithm parameter) of the second node. After the apparatus 170 receives the second key agreement algorithm parameter from the first node, the apparatus determines the first intermediate key based on the second key agreement algorithm parameter and the private key (that is, the fourth key agreement algorithm parameter) of the apparatus 170. The first intermediate key is a secret value obtained through key agreement between the first node and the apparatus. Then, the apparatus 170 generates the second PSK based on the first fresh parameter, the fourth fresh parameter, the first password, and the first intermediate key.

In another possible implementation, the first authentication request message further includes a second key agreement algorithm parameter, the second key agreement algorithm parameter is determined based on a first key agreement algorithm, and the processor 1702 is specifically configured to:
obtain a fourth key agreement algorithm parameter;
determine a first intermediate key based on the first key agreement algorithm, the second key agreement algorithm parameter, and the fourth key agreement algorithm parameter;
determine a second intermediate key based on the first fresh parameter, the fourth fresh parameter, and the first intermediate key; and
generate the second PSK based on the first fresh parameter, the fourth fresh parameter, a first password, and the second intermediate key.

In another possible implementation, the processor 1702 is further configured to:
store a correspondence between the identity of the first node and the second PSK.

It can be learned that after generating the second PSK, the apparatus 170 stores the correspondence between the identity of the first node and the second PSK. When being associated with the first node again subsequently, the apparatus may obtain the second PSK based on the correspondence without regenerating the PSK.

In another possible implementation, the processor 1702 is further configured to:
delete the correspondence between the identity of the first node and the second PSK if the first password is updated.

In another possible implementation, the first authentication request message further includes update indication information, and the update indication information is used to indicate a PSK update.

It can be learned that after the second PSK is generated based on the first fresh parameter and the fourth fresh parameter, the first node may remind, by using the update indication information, the apparatus 170 to update the second PSK, to prevent the apparatus 170 from using a previous old PSK to verify identity authentication information, so as to avoid a verification failure and avoid affecting user experience.

In another possible implementation, the processor 1702 is further configured to:
generate a fourth PSK based on the first fresh parameter and the fourth fresh parameter if verification performed on the first identity authentication information based on the second PSK and the first fresh parameter fails; and
send a third authentication response message to the first node through the communications interface 1703, where the third authentication response message includes third identity authentication information, and the third identity authentication information is generated based on the fourth PSK and the fourth fresh parameter.

It can be learned that, when the apparatus 170 obtains the second PSK based on the correspondence, if verification performed by the apparatus 170 on the first identity authentication information fails, a possible reason may be that the first node uses a newly generated PSK to generate the first identity authentication information. Therefore, the apparatus 170 also generates a new PSK (namely, the fourth PSK) based on the first fresh parameter and the fourth fresh parameter, and re-initiates authentication based on the new PSK. This can improve system stability.

In another possible implementation, the processor 1702 is further configured to:
receive a third association response message from the first node through the communications interface 1703.

In another possible implementation, the apparatus 170 further includes an input module 1705, and the processor 1702 is further configured to:
obtain fourth acknowledgement indication information through the input module 1705 if the verification performed on the first identity authentication information based on the second PSK fails, where the fourth acknowledgement indication information indicates that generation of the fourth PSK is allowed; and
generate the fourth PSK based on the first fresh parameter and the fourth fresh parameter.

In another possible implementation, the processor 1702 is further configured to:
delete the second PSK if verification performed on the second identity authentication information based on the first PSK and the first fresh parameter fails; and
send a second association request message to the first node through the communications interface 1703, where the second association request message includes a fifth fresh parameter.

It should be noted that, for implementation of each module, refer to corresponding descriptions in any embodiment shown in FIG. 5, FIG. 8, FIG. 9, FIG. 10, FIG. 11, FIG. 12, or FIG. 13A and FIG. 13B. The apparatus 170 is the second node in any embodiment shown in FIG. 5, FIG. 8, FIG. 9, FIG. 10, FIG. 11, FIG. 12, or FIG. 13A and FIG. 13B.

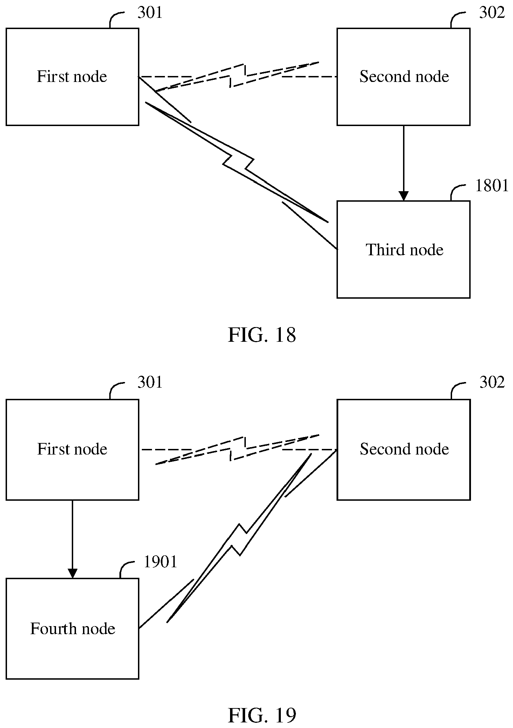

FIG. 18 shows a key obtaining system according to an embodiment of this application. The key obtaining system may be implemented based on the architecture shown in FIG. 3. The key obtaining system includes a first node 301 and a second node 302. The first node may be the apparatus 140 or the apparatus 160. The second node may be the apparatus 150 or the apparatus 170. The first node 301 stores a first PSK corresponding to an identity of the second node 302, and the first PSK is preconfigured in the first node 301.

If the second node 302 is changed to a third node 1801, the first node 301 may request, by using the method on a second node side in any embodiment shown in FIG. 5, FIG. 8, FIG. 9, or FIG. 10, to associate with the third node 1801.

For example, when a CDC of a vehicle is the first node, and an old microphone of the vehicle is the second node 302, if the old microphone 302 of the vehicle is changed to a new microphone 1801, because a PSK between the old microphone 302 and the CDC is preconfigured, and the new microphone 1801 cannot receive an operation instruction of a user, the CDC may obtain a new PSK according to the method on the second node side in any embodiment shown in FIG. 5, FIG. 8, FIG. 9, FIG. 10, FIG. 11, FIG. 12, or FIG. 13A and FIG. 13B. Further, if the new microphone 1801 has a second password, the CDC may first access the new microphone 1801 by using the second password, and then obtain the new PSK according to the method on the second node side in any embodiment shown in FIG. 5, FIG. 8, FIG. 9, FIG. 10, FIG. 11, FIG. 12, or FIG. 13A and FIG. 13B.

In another possible implementation, when the first node 301 is a CDC, if the second node 302 is changed to the third node 1801, and the third node 1801 has a second password, the CDC may obtain the second password entered by a user to access the third node. The third node may obtain a new PSK by using the method on the second node side in any embodiment shown in FIG. 5, FIG. 8, FIG. 9, FIG. 10, FIG. 11, FIG. 12, or FIG. 13A and FIG. 13B.

FIG. 19 shows another key obtaining system according to an embodiment of this application. The key obtaining system may be implemented based on the architecture shown in FIG. 3. The key obtaining system includes a first node 301 and a second node 302. The first node may be the apparatus 140 or the apparatus 160. The second node may be the apparatus 150 or the apparatus 170. The first node 301 stores a correspondence between an identity of the second node 302 and a first PSK, and the first PSK is preconfigured in the first node 301. If the first node 301 is changed to a fourth node 1901, the fourth node 1901 may obtain the correspondence in the first node 301, so as to obtain a second PSK corresponding to the identity of the second node 302.

For example, when a CDC of a vehicle is the first node 301, if the CDC of the vehicle is changed, the correspondence that is between the identity of the second node 302 and the first PSK and that is stored in the old CDC may be configured on a new CDC 1901. A configuration manner may be: copying the correspondence from the old CDC to the new CDC by using a computer storage medium, or receiving, by the new CDC, the correspondence from the old CDC.

Optionally, if a correspondence between a device identifier of the first node 301 and a second PSK exists in the second node 302, and the second PSK is preconfigured in the second node 302, after the first node 301 is changed to the fourth node 1901, the second node may update the correspondence by using a management interface, and use an identity of the fourth node 1901 to correspond to the second PSK.

For example, the first node 301 is a CDC of a vehicle, the second node 302 is a speaker of the vehicle, and the speaker stores a correspondence between an identity of the CDC 301 and a second PSK. If the CDC of the vehicle is changed, the correspondence in the second node 302 may be updated through on board diagnostics (On Board Diagnostics, OBD), and the second PSK is used to correspond to the new CDC 1901.

For another example, the first node 301 is a CDC of a vehicle, the second node 302 is an electronic key of the vehicle, and the electronic key stores a correspondence between an identity of the CDC 301 and a second PSK. If the CDC of the vehicle is changed to a new CDC 1901, the second node 302 may update the correspondence in the second node 302 through over the air (Over The Air, OTA), and use the second PSK to correspond to the new CDC 1901. The OTA is a technology in which remote management on a node is implemented by using an air interface of mobile communication.

An embodiment of this application further provides a computer-readable storage medium. The computer-readable storage medium stores a computer program. When the computer program runs on one or more processors, the method in any embodiment shown in FIG. 5, FIG. 8, FIG. 9, FIG. 10, FIG. 11, FIG. 12, or FIG. 13A and FIG. 13B is performed.

An embodiment of this application further provides a chip system. The chip system includes at least one processor, a memory, and an interface circuit. The interface circuit is configured to provide information input/output for the at least one processor, and the at least one memory stores a computer program. When the computer program runs on one or more processors, the key obtaining method in any embodiment shown in FIG. 5, FIG. 8, FIG. 9, FIG. 10, FIG. 11, FIG. 12, or FIG. 13A and FIG. 13B is performed.

An embodiment of this application further provides a smart cockpit product. The smart cockpit product includes a first node (for example, a vehicle cockpit domain controller CDC). The first node is the first node in any embodiment shown in FIG. 5, FIG. 8, FIG. 9, FIG. 10, FIG. 11, FIG. 12, or FIG. 13A and FIG. 13B. Further, the smart cockpit product includes a second node (for example, at least one of modules such as a camera, a screen, a microphone, a speaker, radar, an electronic key, and a passive entry passive start system controller). The second node is the second node in any embodiment shown in FIG. 5, FIG. 8, FIG. 9, FIG. 10, FIG. 11, FIG. 12, or FIG. 13A and FIG. 13B.

An embodiment of this application further provides a vehicle. The vehicle includes a first node (for example, a vehicle cockpit domain controller CDC). Further, the vehicle includes a second node (for example, at least one of modules such as a camera, a screen, a microphone, a speaker, radar, an electronic key, and a passive entry passive start system controller). The first node is the first node in any embodiment shown in FIG. 5, FIG. 6, FIG. 7, or FIG. 8. The second node is the second node in any embodiment shown in FIG. 5, FIG. 8, FIG. 9, FIG. 10, FIG. 11, FIG. 12, or FIG. 13A and FIG. 13B. An embodiment of this application further provides a computer program product. When the computer program product runs on one or more processors, the key update method in any embodiment shown in FIG. 5, FIG. 8, FIG. 9, FIG. 10, FIG. 11, FIG. 12, or FIG. 13A and FIG. 13B may be performed. Alternatively, the vehicle may be replaced with an intelligent terminal such as a drone or a robot, or a transportation vehicle.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedures or functions according to the embodiments of this application are all or partially implemented. The computer may be a general-purpose computer, a special-purpose computer, a computer network, or another programmable apparatus. The computer instructions may be stored in a computer-readable storage medium, or may be transmitted by using a computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

Sequence adjustment, combination, or deletion may be performed on the steps in the method embodiments of this application based on an actual requirement.

Modules in the apparatus embodiments of this application may be combined, divided, or deleted based on an actual requirement.

The foregoing descriptions are merely specific implementations of this application, but the protection scope of this application is not limited thereto. Any variation or replacement that can be readily figured out by a person skilled in the art within the technical scope disclosed in this application shall fall within the protection scope of this application.

## Claims

1. A key obtaining method, comprising:
receiving a first association request message from a second node, wherein the first association request message comprises a first fresh parameter; and
obtaining a first pre-shared key PSK, wherein the first PSK corresponds to an identity of the second node, and the first PSK is a PSK generated based on a second fresh parameter from the second node and a third fresh parameter from a first node.

2. The method according to claim 1, wherein after the obtaining a first pre-shared key PSK, the method further comprises:
sending a first authentication request message to the second node, wherein the first authentication request message comprises first identity authentication information and a fourth fresh parameter, and the first identity authentication information is generated based on the first PSK and the first fresh parameter.

3. The method according to claim 2, wherein the method further comprises:
receiving a first authentication response message from the second node, wherein the first authentication response message comprises second identity authentication information; and
sending a first association response message to the second node if verification performed on the second identity authentication information based on the first PSK and the fourth fresh parameter succeeds.

4. The method according to any one of claims 1 to 3, wherein the obtaining a first pre-shared key PSK comprises:
obtaining the first PSK based on a correspondence between the first PSK and the identity of the second node.

5. The method according to claim 2 or 3, wherein the obtaining a first pre-shared key PSK comprises:
generating the first PSK based on the first fresh parameter and the fourth fresh parameter, wherein
the first fresh parameter is the second fresh parameter, and the fourth fresh parameter is the third fresh parameter.

6. The method according to claim 5, wherein before the generating the first PSK based on the first fresh parameter and the fourth fresh parameter, the method further comprises:
obtaining first acknowledgement indication information, wherein the first acknowledgement indication information indicates that association with the second node is allowed.

7. The method according to claim 5 or 6, wherein the generating the first PSK based on the first fresh parameter and the fourth fresh parameter comprises:
generating the first PSK based on the first fresh parameter, the fourth fresh parameter, and a first password, wherein the first password is an access password.

8. The method according to claim 5 or 6, wherein the first association request message further comprises a first key agreement algorithm parameter, and the generating the first PSK based on the first fresh parameter and the fourth fresh parameter comprises:
generating the first PSK based on the first fresh parameter, the fourth fresh parameter, a first password, and the first key agreement algorithm parameter, wherein the first password is an access password.

9. The method according to claim 5 or 6, wherein the first association request message further comprises a first key agreement algorithm parameter, and the generating the first PSK based on the first fresh parameter and the fourth fresh parameter comprises:
generating the first PSK based on the first fresh parameter, the fourth fresh parameter, a first password, and an intermediate key, wherein the first password is an access password, and the intermediate key is generated based on the first fresh parameter, the fourth fresh parameter, and the first key agreement algorithm parameter.

10. The method according to any one of claims 7 to 9, wherein the method further comprises:
deleting a correspondence between the identity of the second node and the first PSK if the first password is updated.

11. The method according to any one of claims 5 to 9, wherein the first authentication request message further comprises update indication information, and the update indication information is used to indicate a PSK update.

12. The method according to claim 4, wherein the method further comprises:
generating a third PSK based on the first fresh parameter and the fourth fresh parameter if verification performed on the second identity authentication information based on the first PSK and the fourth fresh parameter fails; and
sending a second authentication request message to the second node, wherein the second authentication request message comprises third identity authentication information, and the third identity authentication information is generated based on the third PSK and the first fresh parameter.

13. The method according to claim 12, wherein the generating a third PSK based on the first fresh parameter and the fourth fresh parameter if verification performed on the second identity authentication information based on the first PSK and the fourth fresh parameter fails comprises:
obtaining second acknowledgement indication information if the verification performed on the second identity authentication information based on the first PSK and the fourth fresh parameter fails, wherein the second acknowledgement indication information indicates that generation of the third PSK is allowed; and
generating the third PSK based on the first fresh parameter and the fourth fresh parameter.

14. The method according to claim 12 or 13, wherein the method further comprises:
receiving a second authentication response message from the second node, wherein the second authentication response message comprises fourth identity authentication information; and
sending a second association response message to the second node if verification performed on the fourth identity authentication information based on the third PSK and the fourth fresh parameter succeeds.

15. A key obtaining method, comprising:
sending a first association request message to a first node, wherein the first association request message comprises a first fresh parameter;
receiving a first authentication request message from the first node, wherein the first authentication request message comprises a fourth fresh parameter; and
obtaining a second pre-shared key PSK, wherein the second PSK corresponds to an identity of the first node, the second PSK is a PSK generated based on a second fresh parameter from a second node and a third fresh parameter from the first node, and the second PSK is used to verify the identity of the first node.

16. The method according to claim 15, wherein the first authentication request message further comprises first identity authentication information, and the method further comprises:
sending a first authentication response message to the first node if verification performed on the first identity authentication information based on the second PSK and the first fresh parameter succeeds, wherein the first authentication response message comprises second identity authentication information, and the second identity authentication information is generated based on the second PSK and the fourth fresh parameter; and
receiving a first association response message from the first node.

17. The method according to claim 15 or 16, wherein the obtaining a second pre-shared key PSK comprises:
obtaining the second PSK based on a correspondence between the second PSK and the identity of the first node.

18. The method according to claim 15 or 16, wherein the obtaining a second pre-shared key PSK comprises:
generating the second PSK based on the first fresh parameter and the fourth fresh parameter, wherein
the first fresh parameter is the second fresh parameter, and the fourth fresh parameter is the third fresh parameter.

19. The method according to claim 18, wherein before the generating the second PSK based on the first fresh parameter and the fourth fresh parameter, the method further comprises:
obtaining third acknowledgement indication information, wherein the third acknowledgement indication information indicates that generation of the second PSK is allowed.

20. The method according to claim 18 or 19, wherein the generating the second PSK based on the first fresh parameter and the fourth fresh parameter comprises:
generating the second PSK based on the first fresh parameter, the fourth fresh parameter, and a first password, wherein the first password is a password for accessing the first node.

21. The method according to claim 18 or 19, wherein the first authentication request message further comprises a second key agreement algorithm parameter, and the generating the second PSK based on the first fresh parameter and the fourth fresh parameter comprises:
generating the second PSK based on the first fresh parameter, the fourth fresh parameter, a first password, and the second key agreement algorithm parameter, wherein the first password is a password for accessing the first node.

22. The method according to claim 18 or 19, wherein the first authentication request message further comprises a second key agreement algorithm parameter, and the generating the second PSK based on the first fresh parameter and the fourth fresh parameter comprises:
generating the second PSK based on the first fresh parameter, the fourth fresh parameter, a first password, and an intermediate key, wherein the first password is an access password, and the intermediate key is generated based on the first fresh parameter, the fourth fresh parameter, and the second key agreement algorithm parameter.

23. The method according to any one of claims 20 to 22, wherein the method further comprises:
deleting a correspondence between the identity of the first node and the second PSK if the first password is updated.

24. The method according to any one of claims 18 to 23, wherein the first authentication request message further comprises update indication information, and the update indication information is used to indicate a PSK update.

25. The method according to claim 17, wherein the method further comprises:
generating a fourth PSK based on the first fresh parameter and the fourth fresh parameter if verification performed on the first identity authentication information based on the second PSK and the first fresh parameter fails; and
sending a third authentication response message to the first node, wherein the third authentication response message comprises third identity authentication information, and the third identity authentication information is generated based on the fourth PSK and the fourth fresh parameter.

26. The method according to claim 25, wherein the method further comprises:
receiving the third association response message from the first node.

27. The method according to claim 25, wherein the generating, by the second node, a fourth PSK based on the first fresh parameter and the fourth fresh parameter if verification performed by the second node on the first identity authentication information based on the second PSK fails comprises:
obtaining fourth acknowledgement indication information if the verification performed on the first identity authentication information based on the second PSK fails, wherein the fourth acknowledgement indication information indicates that generation of the fourth PSK is allowed; and
generating the fourth PSK based on the first fresh parameter and the fourth fresh parameter.

28. The method according to claim 17, wherein the method further comprises:
deleting the second PSK if verification performed on the second identity authentication information based on the second PSK and the first fresh parameter fails; and
sending a second association request message to the first node, wherein the second association request message comprises a fifth fresh parameter.

29. A key obtaining apparatus, comprising:
a receiving unit, configured to receive a first association request message from a second node, wherein the first association request message comprises a first fresh parameter; and
a processing unit, configured to obtain a first pre-shared key PSK, wherein the first PSK corresponds to an identity of the second node, and the first PSK is a PSK generated based on a second fresh parameter from the second node and a third fresh parameter from the apparatus.

30. The apparatus according to claim 29, wherein the apparatus further comprises:
a sending unit, configured to send a first authentication request message to the second node, wherein the first authentication request message comprises first identity authentication information and a fourth fresh parameter, and the first identity authentication information is generated based on the first PSK and the first fresh parameter.

31. The apparatus according to claim 30, wherein the receiving unit is further configured to receive a first authentication response message from the second node, wherein the first authentication response message comprises second identity authentication information; and
the sending unit is further configured to send a first association response message to the second node if verification performed on the second identity authentication information based on the first PSK and the fourth fresh parameter succeeds, wherein the first association response message indicates that communication with the second node is allowed.

32. The apparatus according to any one of claims 29 to 31, wherein the processing unit is specifically configured to obtain the first PSK based on a correspondence between the first PSK and the identity of the second node.

33. The apparatus according to claim 30 or 31, wherein the processing unit is specifically configured to generate the first PSK based on the first fresh parameter and the fourth fresh parameter, wherein the first fresh parameter is the second fresh parameter, and the fourth fresh parameter is the third fresh parameter.

34. The apparatus according to claim 33, wherein the processing unit is further configured to obtain first acknowledgement indication information, wherein the first acknowledgement indication information indicates that association with the second node is allowed.

35. The apparatus according to claim 33 or 34, wherein the processing unit is specifically configured to generate the first PSK based on the first fresh parameter, the fourth fresh parameter, and a first password, wherein the first password is a password for accessing the apparatus.

36. The apparatus according to claim 33 or 34, wherein the first association request message further comprises a first key agreement algorithm parameter; and the processing unit is specifically configured to generate the first PSK based on the first fresh parameter, the fourth fresh parameter, a first password, and the first key agreement algorithm parameter, wherein the first password is a password for accessing the apparatus.

37. The apparatus according to claim 33 or 34, wherein the first association request message further comprises a first key agreement algorithm parameter; and the processing unit is specifically configured to:
generate the first PSK based on the first fresh parameter, the fourth fresh parameter, a first password, and an intermediate key, wherein the first password is an access password, and the intermediate key is generated based on the first fresh parameter, the fourth fresh parameter, and the first key agreement algorithm parameter.

38. The apparatus according to any one of claims 35 to 37, wherein the processing unit is further configured to delete a correspondence between the identity of the second node and the first PSK if the first password is updated.

39. The apparatus according to any one of claims 33 to 38, wherein the first authentication request message further comprises update indication information, and the update indication information is used to indicate a PSK update.

40. The apparatus according to claim 32, wherein the processing unit is further configured to generate a third PSK based on the first fresh parameter and the fourth fresh parameter if verification performed by the first node on the second identity authentication information based on the first PSK and the fourth fresh parameter fails; and
the sending unit is further configured to send a second authentication request message to the second node, wherein the second authentication request message comprises third identity authentication information, and the third identity authentication information is generated based on the third PSK and the first fresh parameter.

41. The apparatus according to claim 40, wherein the processing unit is further configured to obtain second acknowledgement indication information if the verification performed on the second identity authentication information based on the first PSK and the fourth fresh parameter fails, wherein the second acknowledgement indication information indicates that generation of the third PSK is allowed; and
the processing unit is further configured to generate the third PSK based on the first fresh parameter and the fourth fresh parameter.

42. The apparatus according to claim 40 or 41, wherein the receiving unit is further configured to receive a second authentication response message from the second node, wherein the second authentication response message comprises fourth identity authentication information; and
the sending unit is further configured to send a second association response message to the second node if verification performed on the fourth identity authentication information based on the third PSK and the fourth fresh parameter succeeds.

43. A key obtaining apparatus, comprising:
a sending unit, configured to send a first association request message to a first node, wherein the first association request message comprises a first fresh parameter;
a receiving unit, configured to receive a first authentication request message from the first node, wherein the first authentication request message comprises a fourth fresh parameter; and
a processing unit, configured to obtain a second PSK, wherein the second PSK corresponds to an identity of the first node, the second PSK is a PSK generated based on a second fresh parameter from the apparatus and a third fresh parameter from the first node, and the second PSK is used to verify the identity of the first node.

44. The apparatus according to claim 43, wherein the sending unit is further configured to send a first authentication response message to the first node if verification performed on the first identity authentication information based on the second PSK and the first fresh parameter succeeds, wherein the first authentication response message comprises second identity authentication information, and the second identity authentication information is generated based on the second PSK and the fourth fresh parameter; and
the receiving unit is further configured to receive a first association response message from the first node.

45. The apparatus according to claim 43 or 44, wherein the processing unit is specifically configured to obtain the second PSK based on a correspondence between the first PSK and the identity of the first node.

46. The apparatus according to claim 43 or 44, wherein the processing unit is specifically configured to generate the second PSK based on the first fresh parameter and the fourth fresh parameter, wherein the first fresh parameter is the second fresh parameter, and the fourth fresh parameter is the third fresh parameter.

47. The apparatus according to claim 46, wherein the processing unit is further configured to obtain third acknowledgement indication information, wherein the third acknowledgement indication information indicates that generation of the second PSK is allowed.

48. The apparatus according to claim 46 or 47, wherein the processing unit is specifically configured to generate the second PSK based on the first fresh parameter, the fourth fresh parameter, and a first password, wherein the first password is a password for accessing the first node.

49. The apparatus according to claim 46 or 47, wherein the first authentication request message further comprises a second key agreement algorithm parameter; and the processing unit is specifically configured to generate the second PSK based on the first fresh parameter, the fourth fresh parameter, a first password, and the second key agreement algorithm parameter, wherein the first password is a password for accessing the first node.

50. The apparatus according to claim 46 or 47, wherein the first authentication request message further comprises a second key agreement algorithm parameter; and the processing unit is specifically configured to:
generate the second PSK based on the first fresh parameter, the fourth fresh parameter, a first password, and an intermediate key, wherein the first password is an access password, and the intermediate key is generated based on the first fresh parameter, the fourth fresh parameter, and the second key agreement algorithm parameter.

51. The apparatus according to any one of claims 48 to 50, wherein the processing unit is further configured to delete a correspondence between the identity of the first node and the second PSK if the first password is updated.

52. The apparatus according to any one of claims 46 to 51, wherein the first authentication request message further comprises update indication information, and the update indication information is used to indicate a PSK update.

53. The apparatus according to claim 45, wherein the processing unit is further configured to generate a fourth PSK based on the first fresh parameter and the fourth fresh parameter if verification performed on the first identity authentication information based on the second PSK and the first fresh parameter fails; and
the sending unit is further configured to send a third authentication response message to the first node, wherein the third authentication response message comprises third identity authentication information, and the third identity authentication information is generated based on the fourth PSK and the fourth fresh parameter.

54. The apparatus according to claim 53, wherein the receiving unit is further configured to receive the third association response message from the first node.

55. The apparatus according to claim 53 or 54, wherein the processing unit is further configured to obtain fourth acknowledgement indication information if the verification performed on the first identity authentication information based on the second PSK fails, wherein the fourth acknowledgement indication information indicates that generation of the fourth PSK is allowed; and
the processing unit is further configured to generate the fourth PSK based on the first fresh parameter and the fourth fresh parameter.

56. The apparatus according to claim 45, wherein the processing unit is further configured to delete the correspondence between the identity of the first node and the second PSK if verification performed on the second identity authentication information based on the second PSK and the first fresh parameter fails; and
the sending unit is further configured to send a second association request message to the first node, wherein the second association request message comprises a fifth fresh parameter.

57. A key obtaining apparatus, wherein the apparatus comprises at least one processor and a communications interface, and the at least one processor is configured to invoke a computer program stored in at least one memory, so that the apparatus implements the method according to any one of claims 1 to 28.

58. A key obtaining system, comprising:
a first node, wherein the first node is the key obtaining apparatus according to any one of claims 29 to 42; and
a second node, wherein the second node is the key obtaining apparatus according to any one of claims 43 to 56.

59. A computer-readable storage medium, wherein the computer-readable storage medium stores a computer program, and when the computer program is run on one or more processors, the method according to any one of claims 1 to 28 is performed.
